(19) Europäisches Patentamt
European Patent Office
Office européen des brevets

(11) EP 4 253 630 A1

(12) EUROPEAN PATENT APPLICATION
published in accordance with Art. 153(4) EPC

(43) Date of publication:
**04.10.2023 Bulletin 2023/40**

(21) Application number: **21896031.8**

(22) Date of filing: **04.01.2021**

(51) International Patent Classification (IPC):
***D06F 34/28*** *(2020.01)*

(52) Cooperative Patent Classification (CPC):
D06F 34/28

(86) International application number:
**PCT/CN2021/070152**

(87) International publication number:
**WO 2022/110511 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.11.2020 CN 202022843448 U**
**30.11.2020 CN 202011381067**

(71) Applicant: **Wuxi Little Swan Electric Co., Ltd.**
**Wuxi, Jiangsu 214028 (CN)**

(72) Inventors:
- **LIU, Zhongcai**
  **Wuxi, Jiangsu 214028 (CN)**
- **GAO, Fei**
  **Wuxi, Jiangsu 214028 (CN)**
- **CAO, Chunde**
  **Wuxi, Jiangsu 214028 (CN)**
- **SUN, Qing**
  **Wuxi, Jiangsu 214028 (CN)**
- **YANG, Peng**
  **Wuxi, Jiangsu 214028 (CN)**
- **LI, Birong**
  **Wuxi, Jiangsu 214028 (CN)**

(74) Representative: **Whitlock, Holly Elizabeth Ann et al**
**Maucher Jenkins**
**Seventh Floor Offices**
**Artillery House**
**11-19 Artillery Row**
**London SW1P 1RT (GB)**

# (54) APPEARANCE PART, HOUSEHOLD APPLIANCE, AND MOLD

(57) An appearance part, a household appliance, and a mold. The appearance part comprises: an appearance plate, a part of the surface of the appearance plate being an appearance surface, and the remaining surface of the appearance plate being a non-appearance surface; and connecting ribs disposed on the non-appearance surface, each connecting rib comprising a connecting rib body and a connecting portion, and the connecting portion being connected between the connecting rib body and the non-appearance surface, wherein the thickness of the connecting portion is less than that of the end of the connecting rib body connected to the connecting portion; and/or, a part of the surface of the connecting portion facing the non-appearance surface is recessed in the direction away from the non-appearance surface to form a through hole, and the through hole passes through the connecting portion in the thickness direction of the connecting portion.

104
103
A-A
1042
101
Thickness A1
1041
102
Width A1
Thickness A2
FIG. 2



Processed by Luminess, 75001 PARIS (FR)

## Description

The present application is based on and claims priority to Chinese Patent Applications No. 202022843448.3 and No. 202011381067.6, filed on November 30, 2020, the entire disclosure of which are incorporated herein by reference.

## FIELD

The present disclosure relates to the field of household appliances technologies, and more particularly, to an appearance part, a household appliance, and a mold.

## BACKGROUND

In general, a household appliance such as a front-load washing machine has appearance parts including parts such as a control panel, a worktop, a knob, and a top cover frame, and these appearance parts have dual requirements of function and appearance. Further, the appearance parts are generally provided with connection ribs to enhance structural strength.

In the related art, when the appearance part is injection molded, a flow liner defect is prone to occur on the connection rib and a plate body where the connection rib is located. When significant flow liners are generated on an appearance surface of the appearance part, the flow liners are severe, which can result in low qualification rate and high cost of a product. As a result, user's usage demands cannot be satisfied.

## SUMMARY

The present disclosure aims to solve at least one of the technical problems existing in the related art. Accordingly, an object of the present disclosure is to provide an appearance part with a high qualification rate.

The present disclosure further provides a household appliance including the appearance part described above.

The present disclosure further provides a mold for forming an appearance part.

An appearance part according to embodiments of the present disclosure is an integral injection-molding piece. The appearance part includes an appearance plate and a connection rib. A part of a surface of the appearance plate is an appearance surface, and the remaining part of the surface of the appearance plate is a non-appearance surface. The connection rib is disposed on the non-appearance surface of the appearance plate. The connection rib includes a connection rib body and a connection portion. The connection portion is connected between the connection rib body and the non-appearance surface. A thickness of the connection portion is smaller than a thickness of an end of the connection rib body connected to the connection portion; and/or a part of the connection portion facing towards the non-appearance surface is recessed away from the non-appearance surface to form a through hole, the through hole penetrating the connection portion in a thickness direction of the connection portion.

With the appearance part according to the embodiments of the present disclosure, the thickness of the connection portion is smaller than the thickness of the end of the connection rib body connected to the connection portion; and/or the part of the connection portion facing towards the non-appearance surface is recessed away from the non-appearance surface to form the through hole, and the through hole penetrates the connection portion in the thickness direction of the connection portion. Therefore, it is possible to at least prevent flow liners from being generated at a connection between the appearance plate and the connection rib to some extent. Therefore, yield of the appearance part can be at least improved to some extent, thereby lowering cost and satisfying user's usage demands.

According to some embodiments of the present disclosure, the thickness of the connection portion is smaller than a minimum thickness of the connection rib body.

According to some embodiments of the present disclosure, the thickness of the connection portion ranges from 0.3 mm to 0.5 mm.

According to some embodiments of the present disclosure, a thickness of the appearance plate ranges from 1.5 mm to 3.5 mm.

According to some embodiments of the present disclosure, a plurality of connection ribs is provided, and the plurality of connection ribs is arranged at intervals.

According to some embodiments of the present disclosure, the appearance plate has a gate forming region adapted to correspond to a gate of a mold.

According to some embodiments of the present disclosure, the appearance part is a spray-free piece including a resin matrix and metal particles distributed in the resin matrix.

According to some embodiments of the present disclosure, metal particles are aluminum, silver, or copper.

A household appliance according to embodiments of the present disclosure includes the appearance part as described above.

With the household appliance according to the embodiments of the present disclosure, by providing the appearance part as described above, the thickness of the connection portion is smaller than the thickness of the end of the connection rib body connected to the connection portion; and/or the part of the connection portion facing towards the non-appearance surface is recessed away from the non-appearance surface to form the through hole, and the through hole penetrates the connection portion in the thickness direction of the connection portion. Therefore, it is possible to at least prevent flow liners from being generated at a connection between the appearance plate and the connection rib to some extent. Therefore, the yield of the appearance part can be at least improved to some extent, thereby lowering the cost and satisfying the user's usage demands.

A mold according to embodiments of the present disclosure includes a mold core having a mold cavity. The mold cavity includes an appearance plate mold cavity and a connection rib mold cavity. One of wall surfaces of the appearance plate mold cavity is used to form an appearance surface of an appearance plate, and the remaining wall surfaces of the appearance plate mold cavity is used to form a non-appearance surface of the appearance plate. The connection rib mold cavity is located at the remaining wall surfaces of the appearance plate mold cavity and in communication with the appearance plate mold cavity. The connection rib mold cavity includes a connection rib body mold cavity and a connection portion mold cavity that are in communication with each other. The connection portion mold cavity is connected between the connection rib body mold cavity and the remaining wall surfaces of the appearance plate mold cavity. A thickness of the connection portion mold cavity is smaller than a thickness of an end of the connection rib body mold cavity in communication with the connection portion mold cavity; and/or a post structure is provided at the connection portion mold cavity. The post structure is used to form a through hole and extending across the connection portion mold cavity in a thickness direction of the connection portion mold cavity.

With the mold according to the embodiments of the present disclosure, the thickness of the connection portion mold cavity is smaller than the thickness of an end of the connection rib body mold cavity in communication with the connection portion mold cavity; and/or the post structure is provided at the connection portion mold cavity, and is used to form the through hole and extends across the connection portion mold cavity in the thickness direction of the connection portion mold cavity. Therefore, it is possible to at least prevent an unstable flow field from being formed at a position where the connection rib mold cavity is in communication with the appearance plate mold cavity to some extent, to at least avoid a material converging due to a backflow of a material in the connection rib body mold cavity to the appearance plate mold cavity through the connection portion mold cavity to some extent, thereby avoiding flow liners from being generated at a connection between the appearance plate and the connection rib.

According to some embodiments of the present disclosure, the thickness of the connection portion mold cavity is smaller than a minimum thickness of the connection rib body mold cavity.

According to some embodiments of the present disclosure, the thickness of the connection portion mold cavity ranges from 0.3 mm to 0.5 mm.

According to some embodiments of the present disclosure, a thickness of the appearance plate mold cavity ranges from 1.5 mm to 3.5 mm.

According to some embodiments of the present disclosure, a plurality of connection rib mold cavities is provided, and the plurality of connection rib mold cavities is arranged at intervals.

According to some embodiments of the present disclosure, the mold core has a gate located at the appearance plate mold cavity.

Additional aspects and advantages of the present disclosure will be provided at least in part in the following description or will become apparent at least in part from the following description, or can be learned from practicing of the present disclosure.

## BRIEF DESCRIPTION OF THE DRAWINGS

The above and/or additional embodiments of the present disclosure will become apparent and readily understood from the following description of embodiments in conjunction with the accompanying drawings, in which:

FIG. 1 is a schematic view of a control panel according to some embodiments of the present disclosure;

FIG. 1a is an enlarged view of Part 1B illustrated in FIG. 1;

FIG. 1b is an enlarged view of Part 2B illustrated in FIG. 1;

FIG. 1c is an enlarged view of Part 3B illustrated in FIG. 1;

FIG. 2 is a schematic cross-sectional view in A-A direction as illustrated in FIG. 1, in which an arrow width A1 is a width direction of a panel side plate, an arrow thickness A2 is a thickness direction of the panel side plate, and an arrow thickness A1 is a thickness direction of a panel connection plate;

FIG. 3 is an enlarged view of Part B illustrated in FIG. 1;

FIG. 4 is a schematic view of a control panel according to some embodiments of the present disclosure in another direction;

FIG. 5 is a schematic cross-sectional view in C-C direction as illustrated in FIG. 4;

FIG. 6 is an enlarged view of Part E illustrated in FIG. 5;

FIG. 7 is a schematic view of a panel mold according to some embodiments of the present disclosure;

FIG. 8 is a schematic cross-sectional view in F-F direction as illustrated in FIG. 7;

FIG. 9 is an enlarged view of Part H illustrated in FIG. 8, in which a width A2 is a width direction of a panel side plate mold cavity;

FIG. 10 is a schematic cross-sectional view in G-G direction as illustrated in FIG. 7;

FIG. 11 is an enlarged view of Part M illustrated in FIG. 10;

FIG. 12 is a schematic flow view of a material in a panel side plate mold cavity according to some embodiments of the present disclosure;

FIG. 13 is a schematic flow view of a material in a panel side plate mold cavity according to other embodiments of the present disclosure;

FIG. 14 is a schematic flow view of a material in a panel side plate mold cavity according to other embodiments of the present disclosure;

FIG. 15 is a schematic flow view of a material in a panel side plate mold cavity according to other embodiments of the present disclosure;

FIG. 16 is a schematic flow view of a material in a mold cavity in the related art.

FIG. 17 is a schematic view of a knob cover plate according to some embodiments of the present disclosure;

FIG. 18 is an enlarged view of Part D illustrated in FIG. 17;

FIG. 19 is a cross-sectional view in I-I direction as illustrated in FIG. 18, in which an arrow thickness B 1 is a thickness direction of a cover plate connection portion, and an arrow thickness B2 is a thickness direction of a cover plate body;

FIG. 20 is a schematic view of a knob cover plate mold according to some embodiments of the present disclosure;

FIG. 21 is a cross-sectional view in K-K direction as illustrated in FIG. 20;

FIG. 22 is a cross-sectional view in J-J direction as illustrated in FIG. 20;

FIG. 23 is a schematic view of a knob cover plate according to other embodiments of the present disclosure;

FIG. 24 is a schematic view of the knob cover plate illustrated in FIG. 23 in another direction;

FIG. 25 is a schematic view of a worktop according to some embodiments of the present disclosure;

FIG. 26 is a schematic view of a worktop according to some embodiments of the present disclosure in another direction;

FIG. 27 is a cross-sectional view in A1-A1 direction as illustrated in FIG. 26;

FIG. 28 is an enlarged view of Part A2 illustrated in FIG. 27;

FIG. 29 is an enlarged view of Part A3 illustrated in FIG. 26;

FIG. 30 is a schematic view of a worktop according to some embodiments of the present disclosure in yet another direction;

FIG. 31 is a cross-sectional view in A4-A4 direction as illustrated in FIG. 30, in which an arrow width D1 is a width direction of a worktop side plate, and an arrow thickness D1 is a thickness direction of the worktop side plate;

FIG. 32 is an enlarged view of Part A5 illustrated in FIG. 31;

FIG. 33 is a schematic view of a worktop according to some embodiments of the present disclosure in still yet another direction;

FIG. 34 is an enlarged view of Part A6 illustrated in FIG. 33;

FIG. 35 is an enlarged view of Part A7 illustrated in FIG. 33, in which an arrow thickness D2 is a thickness direction of a worktop connection portion;

FIG. 35a is a schematic view of a worktop according to some embodiments of the present disclosure in other direction;

FIG. 35b is an enlarged view of Part A12 illustrated in FIG. 35a;

FIG. 35c is an enlarged view of Part A13 illustrated in FIG. 35a;

FIG. 35d is an enlarged view of Part A14 illustrated in FIG. 35a;

FIG. 35e is an enlarged view of Part A15 illustrated in FIG. 35a;

FIG. 35f is an enlarged view of Part A16 illustrated in FIG. 35a;

FIG. 35g is an enlarged view of Part A17 illustrated in FIG. 35a;

FIG. 35h is an enlarged view of Part A18 illustrated in FIG. 35a;

FIG. 35i is a schematic cross-sectional view of Part A11-A11 illustrated in FIG. 35a;

FIG. 35j is an enlarged view of Part A19 illustrated in FIG. 35i;

FIG. 35k is an enlarged view of Part A20 illustrated in FIG. 35i;

FIG. 36 is a schematic view of a worktop mold according to some embodiments of the present disclosure;

FIG. 37 is a cross-sectional view in A8-A8 direction as illustrated in FIG. 36;

FIG. 38 is a cross-sectional view in A9-A9 direction as illustrated in FIG. 36;

FIG. 39 is a cross-sectional view in A10-A10 direction as illustrated in FIG. 36;

FIG. 40 is an enlarged view of Part A11 illustrated in FIG. 39;

FIG. 41 is a schematic view of a top cover frame according to some embodiments of the present disclosure;

FIG. 42 is a schematic view of a top cover frame according to some embodiments of the present disclosure in another direction;

FIG. 43 is a schematic view of a top cover frame according to some embodiments of the present disclosure in yet another direction;

FIG. 44 is a cross-sectional view in B1-B 1 direction as illustrated in FIG. 43;

FIG. 45 is an enlarged view of Part B3 illustrated in FIG. 44;

FIG. 46 is an enlarged view of Part B4 illustrated in FIG. 44;

FIG. 47 is a cross-sectional view in B2-B2 direction as illustrated in FIG. 43;

FIG. 48 is an enlarged view of Part B5 illustrated in FIG. 47;

FIG. 48a is a schematic view of a top cover frame according to some embodiments of the present disclosure in still yet another direction;

FIG. 48b is an enlarged view of Part B 15 illustrated in FIG. 48a;

FIG. 48c is an enlarged view of Part B11 illustrated in FIG. 48a;

FIG. 48d is a cross-sectional view in B13 -B 13 direction as illustrated in FIG. 48a;

FIG. 48e is an enlarged view of Part B14 illustrated in FIG. 48d;

FIG. 49 is a schematic view of a top cover frame mold according to some embodiments of the present disclosure;

FIG. 50 is a cross-sectional view in B7-B7 direction as illustrated in FIG. 49;

FIG. 51 is an enlarged view of Part B8 illustrated in FIG. 50;

FIG. 52 is a cross-sectional view in B 10-B 10 direction as illustrated in FIG. 49;

FIG. 53 is an enlarged view of Part B9 illustrated in FIG. 52;

Reference Numerals:

control panel 10; panel connection plate 101; panel gate forming region 1011; one panel gate forming region 1011a; panel blocking hole 1012; one panel blocking hole 1012a; panel side plate 102; first side plate body 1021; second side plate body 1022; panel top plate 103; panel connection rib 104; panel connection rib body 1041; panel connection portion 1042; panel mold 1; panel mold core 11; panel connection plate mold cavity 111; panel gate 1111; panel side plate mold cavity 112; first side plate body mold cavity 1121; panel top plate mold cavity 113; panel connection rib mold cavity 114; panel connection rib body mold cavity 1141; panel connection portion mold cavity 1142.

knob cover plate 20; cover plate body 203; cover plate gate forming region 2031; cover plate connection rib 204; cover plate connection rib body 2041; cover plate connection portion 2042; knob cover plate mold 2; knob cover plate mold core 21; cover plate body mold cavity 213; cover plate connection rib mold cavity 214; cover plate connection rib body mold cavity 2141; cover plate connection portion mold cavity 2142.

worktop 50; worktop connection plate 501; worktop blocking hole 5011; worktop side plate 502; worktop gate forming region 5021; feeding table 503; outer peripheral side plate 5031; outer peripheral side plate gate forming region 50311; enclosing plate 5032; enclosing plate gate forming region 50321; top plate 5033; worktop variable wall thickness region 5023; worktop constant wall thickness region 5024; worktop connection rib 504; worktop through hole 50421; laundry feeding port 505; worktop mold 5; worktop mold core 51; worktop connection plate mold cavity 511; worktop side plate mold cavity 512; worktop variable thickness region 5121; feeding table mold cavity 513; outer peripheral side plate mold cavity 5131; enclosing plate mold cavity 5132; top plate mold cavity 5133; column 514.

top cover frame 70; top cover frame connection plate 701; top cover frame side plate 702; top cover frame constant wall thickness region 7021; top cover frame variable wall thickness region 7022; top cover frame gate forming region 7023; top cover frame connection rib 703; top cover frame connection rib body 7031; top cover frame connection portion 7032; top cover frame reinforcing rib 704; top cover frame mold 7; top cover frame mold core 71; top cover frame gate 7111; top cover frame connection plate mold cavity 711; top cover frame side plate mold cavity 712; top cover frame constant thickness region 7121; top cover frame variable thickness region 7122; top cover frame connection rib mold cavity 713; top cover frame connection rib body mold cavity 7131; top cover frame connection portion mold cavity 7132.

## DETAILED DESCRIPTION OF THE EMBODIMENTS

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the accompanying drawings are illustrative only, and are intended to explain, rather than limiting the present disclosure.

In general, a household appliance such as a front-load washing machine has an appearance part such as a control panel 10, a worktop 50, a knob, and a top cover frame 70, which has dual requirements of function and appearance, and generally provided with a connection rib for enhancing structural strength.

Generally, a manufacturing process for the appearance part is mostly implemented through an injection molding and spraying process, and the sprayed appearance part has a gorgeous metal appearance effect. However, the spraying process has the defects such as serious pollution, high cost, low qualified rate, unrecyclable unqualified product, and the like, which seriously affects health of environment and production personnel, and does not conform to the green manufacturing concept. In order to overcome the defects in the spraying process, a spraying-free thermoplastic engineering material emerges, and the metal appearance effect of a product can be given by spraying-free injection molding. As a result, the spraying process can be replaced, thereby lowering production cost. Meanwhile, it is possible to avoid emission of pollutants during the spraying.

No matter whether the appearance part is manufactured by using a spraying-free material or through the injection molding and spraying process, for a material with poor fluidity, especially for a spraying-free material including metal particles, since there are the metal particles and other substances in the spraying-free material, uneven arrangement of the metal particles may be generated due to an obstruction to the material when flowing during the injection molding. As a result, the injection-molded product may occur light scattering under an irradiation of light, and flow liners thus are visually generated on the product, which results in a flow liner defect on the product. In particular, when the appearance part includes a connection rib, the flow liner defect is easily generated on the connection rib and a plate where the connection rib is located during the injecting molding of the appearance part. When the flow liners are generated on an appearance surface of the appearance part, severe flow liners not only lead to low qualified rate and high cost of the product, but also cannot satisfy user's usage demands. A description will be provided below taking the spraying-free material including metal particles as an example. That is, the appearance part may be a spray-free piece including a resin matrix and metal particles distributed in the resin matrix. Optionally, the metal particles are aluminum, silver, or copper.

According to the embodiments of the present disclosure, an appearance part, a household appliance, and a mold for forming the appearance part will be described below. Therefore, the appearance part is an integral injection-molding piece. As a result, a structure of the integral piece not only can ensure structural and performance stability of the appearance part, but also leads to convenient forming and simple manufacturing. Moreover, redundant assembly parts and connection steps can be removed, and connection reliability of the appearance part can be ensured. Furthermore, the integrally formed structure is high in overall strength and stability, is more convenient to be assembled, and is longer in service life.

According to the embodiments of the present disclosure, an appearance part includes an appearance plate and a connection rib. For example, a plurality of connection ribs is provided, and the plurality of connection ribs is arranged at intervals.

Apart of a surface (such as one side surface in a thickness direction) of the appearance plate is an appearance surface, and the remaining part of the surface of the appearance plate is a non-appearance surface. The connection rib is disposed at the non-appearance surface, and the connection rib has no gate forming region adapted to correspond to a gate of a mold. For example, the appearance plate has a gate forming region adapted to correspond to the gate of the mold, or the appearance part includes other plate structures having a gate forming region corresponding to the gate of the mold.

In some embodiments, after an appearance part blank is formed through injection molding by the mold and is de-molded from the mold, a part of a material at the gate of the mold is left on the appearance part blank and is formed into a gate forming portion. The gate forming region of the appearance part is a region where the gate forming portion is located. It can be understood that the appearance part blank may be further processed to cut away or partially cut away the gate forming portion. In an example, the gate forming portion of the appearance part blank may not be processed.

That is, the gate forming portion is remained on the appearance part. The embodiment of the present disclosure is not limited in this regard, and the gate forming portion may be provide as desired.

The connection rib includes a connection rib body and a connection portion. The connection portion is connected to the connection rib body and the non-appearance surface.

A thickness of the connection portion is smaller than a thickness of an end of the connection rib body connected to the connection portion; and/or one side surface of the connection portion facing towards the non-appearance surface is recessed away from the non-appearance surface to form a through hole, and the through hole penetrates the connection portion in a thickness direction of the connection portion. Therefore, it is beneficial to at least avoid flow liners generated at a connection between the connection portion and the appearance plate to some extent.

In order to facilitate explaining the reason why the flow liners on the appearance part are reduced, a mold according to embodiments of the present disclosure will be described below, and the reason why the flow liners are reduced will be also provided in combination with a structure of the mold.

According to the embodiments of the present disclosure, the mold includes a mold core, and the mold core has a mold cavity. The mold cavity includes an appearance plate mold cavity and a connection rib mold cavity. One of wall surfaces of the appearance plate mold cavity is configured to shape an appearance surface of an appearance plate, and the remaining wall surfaces of the appearance plate mold cavity are configured to shape a non-appearance surface of the appearance plate. The connection rib mold cavity is located at the remaining wall surfaces of the appearance plate mold cavity and is in communication with the appearance plate mold cavity. The connection rib mold cavity includes a connection rib body mold cavity and a connection portion mold cavity that are in communication with each other. The connection portion mold cavity is connected between the connection rib body mold cavity and the remaining wall surfaces of the appearance plate mold cavity.

Optionally, in the mold, a thickness of the connection portion mold cavity is smaller than a thickness of an end, in communication with the connection portion mold cavity, of the connection rib body mold cavity. In some embodiments, during the injection molding, since a wall surface of the connection rib mold cavity has no gate, when a material flows in the mold cavity, the material first flows through the appearance plate mold cavity and then flows to the connection rib mold cavity through the appearance plate mold cavity. In this case, by setting the thickness of the connection portion mold cavity to be smaller than the thickness of the connection rib body mold cavity, it is possible to at least prevent an unstable flow field from being formed at a position where the connection rib mold cavity is in communication with the appearance plate mold cavity to some extent, to avoid a material converging due to a backflow of a material in the connection rib body mold cavity to the appearance plate mold cavity through the connection portion mold cavity to some extent, thereby avoiding flow liners from being generated at a connection between the appearance plate and the connection rib.

Optionally, for the mold, a post structure is provided at the connection portion mold cavity. The post structure is configured to shape a through hole and extends across the connection portion mold cavity in a thickness direction of the connection portion mold cavity. Since the connection rib mold cavity has no gate, when the material flows in the mold cavity, the material first flows through the appearance plate mold cavity, and then flows to the connection rib mold cavity through the appearance plate mold cavity. With the post structure, it is possible to reduce a flow area of the material at the position where the connection rib mold cavity is in communication with the appearance plate mold cavity. Thus, it is possible to at least prevent an unstable flow field from being formed at a position where the connection rib mold cavity is in communication with the appearance plate mold cavity to some extent, to at least avoid a material converging due to a backflow of the material in the connection rib body mold cavity to the appearance plate mold cavity through the connection portion mold cavity to some extent, thereby avoiding flow liners from being generated at the connection between the appearance plate and the connection rib.

With the mold according to the embodiments of the present disclosure, the thickness of the connection portion mold cavity is smaller than the thickness of the end, in communication with the connection portion mold cavity, of the connection rib body mold cavity; and/or the post structure is provided at the connection portion mold cavity, and the post structure is configured to shape the through hole and extends across the connection portion mold cavity in the thickness direction of the connection portion mold cavity. In this way, it is possible to at least prevent the unstable flow field from being formed at the position where the connection rib mold cavity is in communication with the appearance plate mold cavity to some extent, to at least avoid a material converging due to a backflow of a material in the connection rib body mold cavity to the appearance plate mold cavity through the connection portion mold cavity to some extent, thereby avoiding flow liners from being generated at a connection between the appearance plate and the connection rib.

With the appearance part according to the embodiments of the present disclosure, the thickness of the connection portion is smaller than the thickness of the end of the connection rib body connected to the connection portion; and/or the part of the connection portion facing towards the non-appearance surface is recessed away from the non-appearance surface to form the through hole, and the through hole penetrates the connection portion in the thickness direction of the connection portion. In this way, it is possible to at least prevent the flow liners from being generated at the connection between the appearance plate and the connection rib to some extent. Therefore, yield of the appearance part can be at least improved to some extent, thereby lowering cost and satisfying user's usage demands.

Optionally, the thickness of the connection portion is smaller than a minimum thickness of the connection rib body. Correspondingly, in the mold, the thickness of the connection portion mold cavity is smaller than a minimum thickness of the connection rib body mold cavity. Therefore, it is possible to at least prevent the unstable flow field from being formed at the position where the connection rib mold cavity is in communication with the appearance plate mold cavity to some extent, to at least avoid the material converging due to the backflow of the material in the connection rib body mold cavity to the appearance plate mold cavity through the connection portion mold cavity to some extent, thereby avoiding the flow liners from being generated at the connection between the appearance plate and the connection rib.

According to some embodiments of the present disclosure, the thickness of the connection portion ranges from 0.3 mm to 0.5 mm. Correspondingly, in the mold, the thickness of the connection portion mold cavity ranges from 0.3 mm to 0.5 mm. For example, the thickness of the connection portion is 0.4 mm. Therefore, the structural strength of the connection portion can be ensured. Also, it is possible to prevent the unstable flow field from being formed at the position where the connection rib mold cavity is in communication with the appearance plate mold cavity, to avoid the material converging due to the backflow of the material in the connection rib body mold cavity to the appearance plate mold cavity through the connection portion mold cavity, thereby avoid the flow liners from being generated at the connection between the appearance plate and the connection rib.

According to some embodiments of the present disclosure, a thickness of the appearance plate is greater than the thickness of the connection portion. In some embodiments, the thickness of the appearance plate ranges from 1.5 mm to 3.5 mm. Correspondingly, in the mold, a thickness of the appearance plate mold cavity ranges from 1.5 mm to 3.5 mm. For example, the thickness of the appearance plate is 1.6 mm, 1.7 mm, 1.8 mm, 1.9 mm, 2.0 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, or 3.4 mm. Therefore, a structural strength of the appearance plate can be ensured. A stable flow of the material in the appearance plate mold cavity is also facilitated, thereby further preventing the flow liners from being generated on the appearance plate.

In some embodiments of the present disclosure, the appearance part includes a non-appearance plate. A surface of the non-appearance plate is the non-appearance surface. That is, when the appearance part is applied in the household appliance, the surface of the non-appearance plate is not exposed.

The non-appearance plate has at least one gate forming region on a side surface of the non-appearance plate in a thickness direction thereof. The gate forming region is adapted to correspond to the gate of the mold. The appearance plate extends in a peripheral direction of the non-appearance plate. One end of the appearance plate in a width direction thereof is connected to an outer peripheral wall of the non-appearance plate. A side surface of the appearance plate in a thickness direction thereof is referred as to the appearance surface. The other end of the appearance plate in the width direction thereof has a minimum wall thickness. The at least one gate forming region is located adjacent to the appearance plate. In this way, the flow liners on the appearance plate can be at least reduced to some extent. As a result, it is possible to at least prevent the flow liner from being generated on the appearance surface of the appearance plate to some extent, to at least improve qualified rate of the appearance part to some extent. Therefore, the cost can be lowered, and the user's usage demands can be satisfied. It can be understood that the end of the appearance plate in the width direction thereof is an end connected to the non-appearance plate, and the other end of the appearance plate in the width direction thereof is an end away from the non-appearance plate.

The mold cavity includes a non-appearance plate mold cavity. The non-appearance plate mold cavity is configured to shape the non-appearance plate as described above. The mold core has at least one gate located on a side wall surface of the non-appearance plate mold cavity in a thickness direction thereof. The appearance plate mold cavity extends in a peripheral direction of the non-appearance plate mold cavity. One end of the appearance plate mold cavity in a width direction thereof is in communication with an outer periphery of the non-appearance plate mold cavity, and another end of the appearance plate mold cavity in the width direction thereof has a minimum thickness. A side wall surface of the appearance plate mold cavity in the thickness direction thereof is configured to shape the appearance surface of the appearance plate. The at least one gate is formed adjacent to the appearance plate mold cavity. It can be understood that the end of the appearance plate mold cavity in the width direction thereof is an end in communication with the non-appearance plate mold cavity, and the other end of the appearance plate mold cavity in the width direction thereof is an end away from the non-appearance plate mold cavity.

In some embodiments, during the injection molding, when the material flows, after a hot melt material flows into the mold cavity through the gate, the hot melt material is brought into contact with a cold inner wall of the mold cavity during its flowing. As a result, the material is quickly solidified on the inner wall of the mold cavity to form a thin solidification layer. A quality of an appearance of a spray-free product depends on an arrangement of metal particles in the solidification layer, and the stable flow can allow for a uniform metal particle orientation to obtain a better appearance. According to the embodiments of the present disclosure, at least one gate of the mold is located on the side wall surface of the non-appearance plate mold cavity in the thickness direction of the non-appearance plate mold cavity, and at least one of the gates is located adjacent to the appearance plate mold cavity. In this way, when the material flows out of the gate of the mold, a part of the material can directly flow towards the appearance plate mold cavity, which can shorten a path along which the material flows to the appearance plate mold cavity from the gate. As a result, it is possible to easily ensure that the material stably flows to the appearance plate mold cavity from the non-appearance plate mold cavity, thereby reducing the flow liners at the appearance plate. Therefore, product yield of the appearance part can be improved to some extent, and the user's usage demands can be satisfied.

Moreover, since the other end of the appearance plate mold cavity in the width direction thereof has the minimum wall thickness, i.e., in the width direction of the appearance plate mold cavity, a thickness of a part (referred to as a large thickness portion) of the appearance plate mold cavity adjacent to the non-appearance plate mold cavity and in direct communication with the other end of the appearance plate mold cavity in the width direction of the appearance plate mold cavity is necessarily greater than the thickness of the other end (referred to as a small thickness portion) of the appearance plate mold cavity in the width direction of the appearance plate mold cavity. In this way, in the peripheral direction of the non-appearance plate mold cavity, the material flows in the appearance plate mold cavity. Since the thickness of the large thickness portion is greater than the thickness of the small thickness portion, the material flows easily at the large thickness portion at a higher flow velocity. As a result, the material has a forward protruding form and an obvious front edge flow at the large thickness portion. Moreover, an actual flow direction of the material at each point on its front edge surface is an outward direction perpendicular to a tangent line of the front edge surface. Therefore, the flow direction at each point on the front edge surface is divergent and does not intersect with each other. As a result, curling and rotation can be avoided, which can easily prevent the material at the large thickness portion and the material at the small thickness portion from being curled and rotated at the front edge of the material flow to some extent, to further ensure flow stability of the material. Therefore, the flow liners at positions of the appearance plate corresponding to the large thickness portion and the small thickness portion can be reduced. In addition, it is possible to at least improve the product yield of the appearance part to some extent and satisfy the user's usage demands.

There are several wall thickness variation relationships for the appearance plate, and these wall thickness variation relationships will be described below.

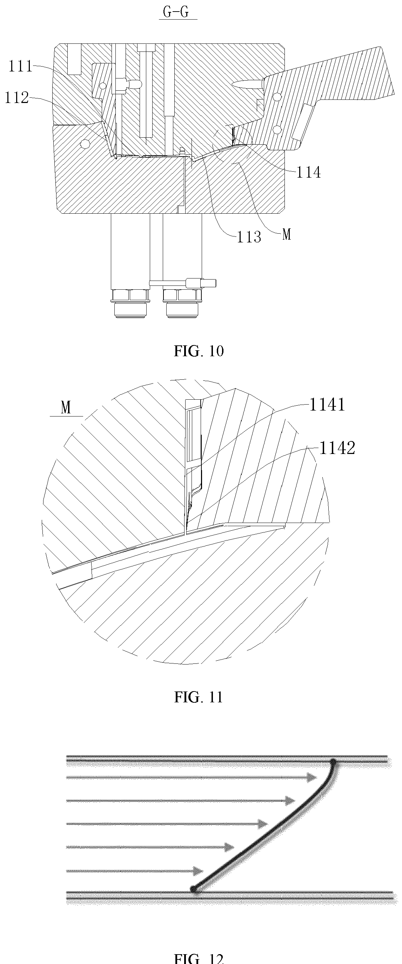

For a first wall thickness variation relationship, the wall thickness of the appearance plate gradually decreases in a direction from one end to the other end of the appearance plate in the width direction of the appearance plate. Correspondingly, in the mold, the thickness of the appearance plate mold cavity gradually decreases in a direction from one end to the other end of the appearance plate mold cavity in the width direction of the appearance plate mold cavity. In this way, in the peripheral direction of the non-appearance plate mold cavity, when the material flows in the appearance plate mold cavity, depending on the thickness variation of the appearance plate mold cavity, it is easier for the material to flow at a position where the appearance plate mold cavity has a large thickness with small flow resistance. As a result, a front edge surface of the material flow may be an inclined surface as illustrated in FIG. 12. Moreover, the actual flow direction of the material at each point on its front edge surface is the outward direction perpendicular to the tangent line of the front edge surface. Therefore, the flow direction at each point on the front edge surface is divergent and does not intersect with each other. As a result, the curling and rotation of the material at its front edge can be avoided, and the material has more stable flow. In this manner, it is possible to further reduce the flow liners on the appearance plate, to further prevent the flow liners from being generated on the appearance surface of the appearance plate. Therefore, the qualified rate of the appearance part can be further improved, thereby lowering the cost and satisfying the user's usage demands.

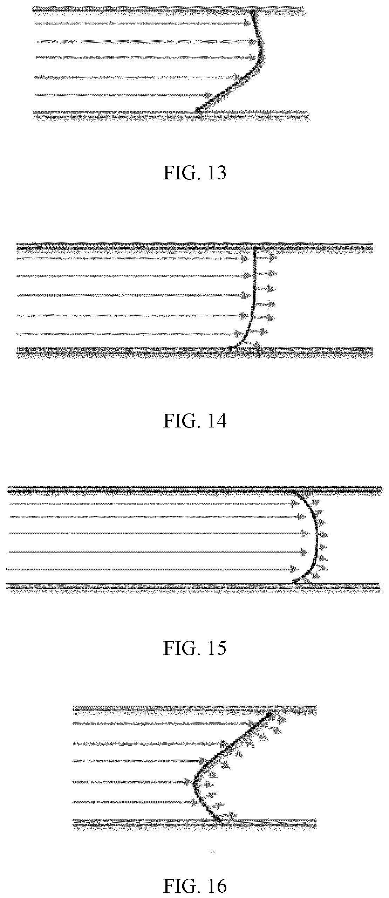

For a second wall thickness variation relationship, the wall thickness of the appearance plate is first constant and then gradually decreases in the direction from one end to the other end of the appearance plate in the width direction of the appearance plate. Correspondingly, in the mold, the thickness of the appearance plate mold cavity is first constant and then gradually decreases in the direction from one end to the other end of the appearance plate mold cavity in the width direction of the appearance plate mold cavity. In this way, in the peripheral direction of the non-appearance plate mold cavity, when the material flows in the length direction of the appearance plate mold cavity, depending on the thickness variation of the appearance plate mold cavity, it is easier for the material to flow at a position where the appearance plate mold cavity has a large thickness with small flow resistance. As a result, as illustrated in FIG. 14, the front edge surface of the material flow may include a surface substantially parallel to the width direction of the appearance plate mold cavity at a same thickness and an inclined surface towards an upstream of the material flow at a gradually decreasing thickness. Moreover, the actual flow direction of the material at each point on its front edge surface is the outward direction perpendicular to the tangent line of the front edge surface. Therefore, the flow direction at each point on the front edge surface is divergent and does not intersect with each other. As a result, the curling and rotation of the material at the front edge can be avoided, and the material has more stable flow. In this manner, it is possible to further reduce the flow liners on the appearance plate, to further prevent the flow liners from being generated on the appearance surface of the appearance plate. Therefore, the qualified rate of the appearance part can be further improved, thereby lowering the cost and satisfying the user's usage demands.

For a third wall thickness variation relationship, the wall thickness of the appearance plate first gradually increases and then gradually decreases in the direction from one end to the other end of the appearance plate in the width direction of the appearance plate. Correspondingly, in the mold, the thickness of the appearance plate mold cavity first gradually increases and then gradually decreases in the direction from one end to the other end of the appearance plate mold cavity in the width direction of the appearance plate mold cavity. In this way, in the peripheral direction of the non-appearance plate mold cavity, when the material flows in the length direction of the appearance plate mold cavity, depending on the thickness variation of the appearance plate mold cavity, it is easier for the material to flow at a position where the appearance plate mold cavity has a large thickness with small flow resistance. As a result, the front edge surface of the material flow may have a forwarding protruding form as illustrated in FIG. 13. Moreover, the actual flow direction of the material at each point on its front edge surface is the outward direction perpendicular to the tangent line of the front edge surface. Therefore, the flow direction at each point on the front edge surface is divergent and does not intersect with each other. As a result, the curling and rotation of the material at the front edge can be avoided, and the material has more stable flow. In this manner, it is possible to further reduce the flow liners on the appearance plate, to further prevent the flow liners from being generated on the appearance surface of the appearance plate. Therefore, the qualified rate of the appearance part can be further improved, thereby lowering the cost and satisfying the user's usage demands.

For a fourth wall thickness variation relationship, in the direction from one end to the other end of the appearance plate in the width direction of the appearance plate, the wall thickness of the appearance plate first gradually increases, then remains constant, and then gradually decreases. Correspondingly, in the mold, in the direction from one end to the other end of the appearance plate mold cavity in the width direction of the appearance plate mold cavity, the thickness of the appearance plate mold cavity first gradually increases, then remains constant, and then gradually decreases. In this way, in the peripheral direction of the non-appearance plate mold cavity, when the material flows in the length direction of the appearance plate mold cavity, depending on the thickness variation of the appearance plate mold cavity, it is easier for the material to flow at a position where the appearance plate mold cavity has a large thickness with small flow resistance. As a result, the front edge surface of the material flow may have a forward protruding form as illustrated in FIG. 15. Moreover, the actual flow direction of the material at each point on its front edge surface is the outward direction perpendicular to the tangent line of the front edge surface. Therefore, the flow direction at each point on the front edge surface is divergent and does not intersect with each other. As a result, the curling and rotation of the material at the front edge can be avoided, and the material has more stable flow. In this manner, it is possible to further reduce the flow liners on the appearance plate, to further prevent the flow liners from being generated on the appearance surface of the appearance plate. Therefore, the qualified rate of the appearance part can be further improved, thereby lowering the cost and satisfying the user's usage demands.

Therefore, compared with a recessed front edge surface illustrated in FIG. 16 in the related art, according to the above embodiments of the present disclosure, it is more conducive to the reduction of the flow liners on the appearance plate.

For explanation, provided below is that the larger the wall thickness is, the faster a flow velocity of the material is.

When the material is injected into the mold under a predetermined condition, a temperature of the material is sharply decreased due to contact with a cold wall surface of the mold cavity and generates the solidification layer. In addition, a flow area of the mold cavity is reduced as a thickness of the solidification layer increases. As a result, the thickness of the solidification layer has an important influence on the flow resistance. A relationship between the fluidity s and the thickness h of the panel mold cavity satisfies formula I.

$$s = \int_0^k \frac{z^2}{\eta} z = \frac{h^3}{3\eta_{rep}}$$

(Formula I)

where $\eta_{rep}$ represents viscosity of the material.

According to the fluidity formula, the fluidity s is proportional to a cube of the thickness h. For example, when the thickness is reduced by fifty percent, the fluidity will be reduced to one eighth, which means that the flow resistance is increased to eight times. As a result, the thicker the panel mold cavity, the lower the flow resistance, the better the fluidity, and the faster the flow velocity.

With the mold for forming the appearance part of the household appliance according to the embodiments of the present disclosure, the other end of the appearance plate mold cavity in the width direction of the appearance plate mold cavity has the minimum thickness, and the at least one gate is formed adjacent to the appearance plate mold cavity. In this way, it is possible to at least reduce the flow liners on the appearance plate to some extent, to at least prevent the flow liners from being generated on the appearance surface of the appearance plate to some extent. Therefore, the qualified rate of the appearance part can be at least improved to some extent, thereby lowering the cost and satisfying the user's usage demands.

With the appearance part according to the embodiments of the present disclosure, the other end of the appearance plate in the width direction of the appearance plate has the minimum wall thickness, and the at least one gate forming region is located adjacent to the appearance plate. In this way, it is possible to at least reduce the flow liners on the appearance plate to some extent, to at least prevent the flow liners from being generated on the appearance surface of the appearance plate to some extent. Therefore, the qualified rate of the appearance part can be at least improved to some extent, thereby lowering the cost and satisfying the user's usage demands.

In some embodiments of the present disclosure, a maximum wall thickness of the appearance plate ranges from 2.5 mm to 3.5 mm. Correspondingly, a maximum thickness of the appearance plate mold cavity ranges from 2.5 mm to 3.5 mm. Therefore, it is beneficial to ensure the fluidity of the material in the appearance plate mold cavity to ensure that the appearance plate mold cavity is filled with the material. As a result, it is possible to at least reduce the flow liners on the appearance plate to some extent. Thus, the product yield can be improved. Moreover, it is also possible to ensure structural strength of the appearance plate and avoid heavy product and material wasting due to too large thickness of the appearance plate.

For example, the maximum wall thickness of the appearance plate is 2.6 mm, 2.7 mm, 2.8 mm, 2.9 mm, 3.0 mm, 3.1 mm, 3.2 mm, 3.3 mm, or 3.4 mm.

In some embodiments of the present disclosure, a minimum wall thickness of the appearance plate ranges from 1.5 mm to 2.5 mm. Correspondingly, a minimum thickness of the appearance plate mold cavity ranges from 1.5 mm to 2.5 mm. Therefore, it is beneficial to ensure fluidity of the material in the appearance plate to ensure that the appearance plate mold cavity is filled with the material. As a result, it is possible to at least reduce the flow liners on the appearance plate to some extent. Thus, the product yield can be improved. Moreover, it is possible to ensure the structural strength of the appearance plate.

For example, the minimum wall thickness of the appearance plate is 1.6 mm, 1.7 mm, 1.8 mm, 1.9 mm, 2.0 mm, 2.1 mm, 2.2 mm, 2.3 mm, or 2.4 mm.

In some embodiments of the present disclosure, a wall thickness of an end of the non-appearance plate connected to the appearance plate is not greater than a wall thickness of an end of the appearance plate in the width direction of the appearance plate. Correspondingly, in the mold, a thickness of an end, in communication with the appearance plate mold cavity, of the non-appearance plate mold cavity is not greater than a thickness of an end of the appearance plate mold cavity in the width direction of the appearance plate mold cavity. Therefore, when the material flows out of the gate of the mold adjacent to the appearance plate mold cavity, more materials can flow directly into the appearance plate mold cavity easily, which can further ensure the stable flow of the material on the appearance plate, thereby reducing the flow liners at the appearance plate.

In some embodiments of the present disclosure, the wall thickness of the end of the non-appearance plate connected to the appearance plate is smaller than the wall thickness of the end of the appearance plate in the width direction of the appearance plate. Therefore, when the material flows out of the gate of the mold adjacent to the appearance plate mold cavity, more materials can flow directly into the appearance plate mold cavity easily, which can further ensure the stable flow of the material on the appearance plate, thereby reducing the flow liners at the appearance plate.

In some embodiments of the present disclosure, the wall thickness of the end of the non-appearance plate connected to the appearance plate is smaller than the minimum wall thickness of the appearance plate. Therefore, when the material flows out of the gate of the mold adjacent to the appearance plate mold cavity, more materials can flow directly into the appearance plate mold cavity easily, which can further ensure the stable flow of the material on the appearance plate, thereby reducing the flow liners at the appearance plate.

In some embodiments of the present disclosure, the wall thickness of the non-appearance plate is smaller than the wall thickness of the appearance plate. That is, the wall thickness of the non-appearance plate is smaller than the minimum wall thickness of the appearance plate. Therefore, when the material flows out of the gate of the mold adjacent to the appearance plate mold cavity, more materials can flow directly into the appearance plate mold cavity easily, which can further ensure the stable flow of the material on the appearance plate, thereby reducing the flow liners at the appearance plate.

In some embodiments of the present disclosure, the non-appearance plate is a connection plate of a constant wall thickness. Thus, the structure of the mold can be simplified.

A household appliance according to the embodiments of the present disclosure includes the appearance part as described above.

With the household appliance according to the embodiments of the present disclosure, by providing the above appearance part, the thickness of the connection portion is smaller than the thickness of the end of the connection rib body connected to the connection portion; and/or the part of the connection portion facing towards the non-appearance surface is recessed away from the non-appearance surface to form the through hole, and the through hole penetrates the connection portion in the thickness direction of the connection portion. Thus, it is possible to at least prevent the flow liners from being generated at the connection between the appearance plate and the connection rib to some extent, Therefore, the qualified rate of the appearance part can be at least improved to some extent, thereby lowering the cost and satisfying the user's usage demands.

A description will be provided below taking a control panel of a laundry treating device as the appearance part as an example.

A core component of the laundry treating device, such as a control panel 10 of a front-load washing machine, is configured to control the washing machine for implementing programs such as washing, dehydrating, and drying, and has dual requirements of function and appearance.

Generally, a manufacturing process for the control panel 10 is mostly implemented through an injection molding and spraying process, and the sprayed control panel 10 has a gorgeous metal appearance effect. However, the spraying process has the defects such as serious pollution, high cost, low qualified rate, unrecyclable unqualified product, and the like, which seriously affects health of environment and production personnel, and does not conform to the green manufacturing concept. In order to overcome the defects in the spraying process, a spraying-free thermoplastic engineering material emerges, and the metal appearance effect of a product can be given by spraying-free injection molding. As a result, the spraying process can be replaced, thereby lowering production cost. Meanwhile, it is possible to avoid emission of pollutants during the spraying.

No matter whether the control panel 10 is manufactured by using a spraying-free material or through the injection molding and spraying process, for a material with poor fluidity, especially for a spraying-free material including metal particles, since there are the metal particles and other substances in the spraying-free material, uneven arrangement of the metal particles may be generated due to an obstruction to the material when flowing during the injection molding. As a result, the injection-molded product may occur light scattering under an irradiation of light, and flow liners thus are visually generated on the product, which results in a flow liner defect on the product. When the flow liners are generated on an appearance surface of the appearance part, the flow liners not only lead to low qualified rate, but also cannot satisfy user's usage demands. A description will be provided below taking the spraying-free material including metal particles as an example. That is, the control panel 10 may be a spray-free piece including a resin matrix and metal particles distributed in the resin matrix. Optionally, the metal particles are aluminum, silver, or copper.

According to the embodiments of the present disclosure, a control panel 10, a laundry treating device, and a panel mold 1 for forming the control panel 10 will be described below. The control panel 10 is an integral injection-molding piece. As a result, a structure of the integral piece not only can ensure structural and performance stability of the control panel 10, but also leads to convenient forming and simple manufacturing. Moreover, redundant assembly parts and connection steps can be removed, and connection reliability of the control panel 10 can be ensured. Furthermore, the integrally formed structure is high in overall strength and stability, is more convenient to be assembled, and is longer in service life. Optionally, the laundry treating device may be a washing machine, clothes dryer, or a washing and drying integrated machine.

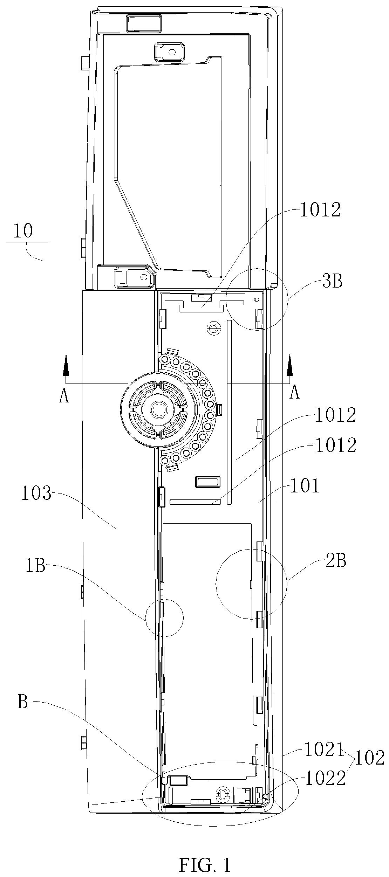

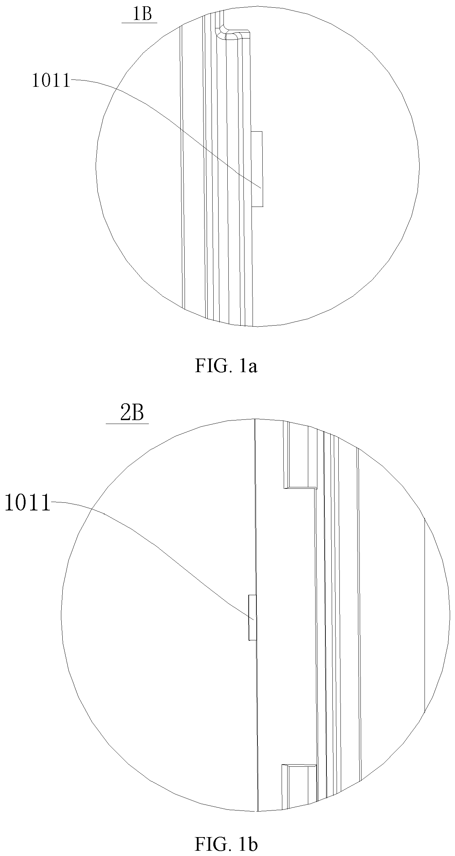

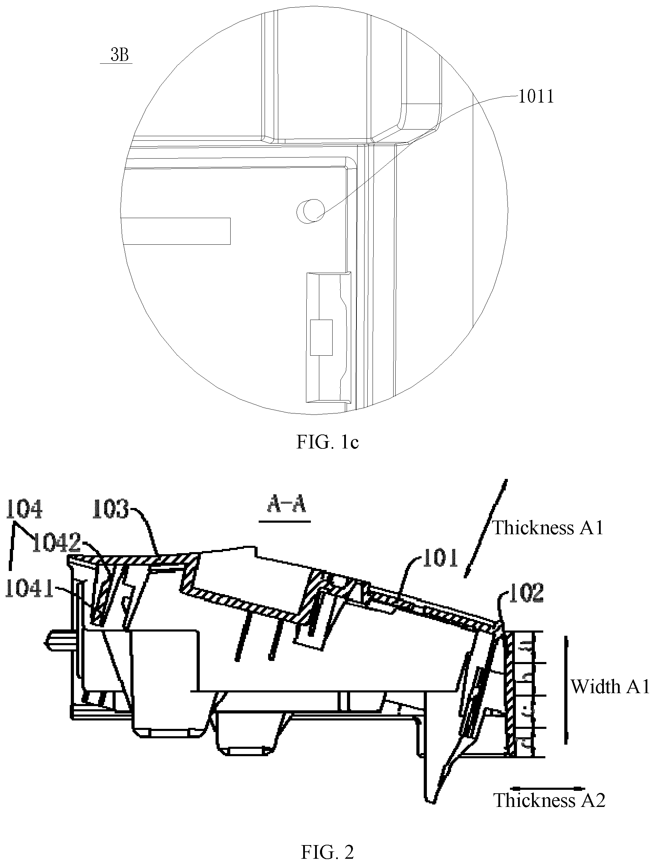

As illustrated in FIG. 1 and FIG. 2, according to embodiments of the present disclosure, a control panel 10 of a laundry treating device includes a panel connection plate 101 and a panel side plate 102.

A surface of the panel connection plate 101 is referred to as a non-appearance surface. That is, when the control panel 10 is applied in the laundry treating device, the surface of the panel connection plate 101 is not exposed.

The panel side plate 102 extends in a peripheral direction of the panel connection plate 101. An end of the panel side plate 102 in a width direction thereof is connected to an outer peripheral wall of the panel connection plate 101. A side surface of the panel side plate 102 facing away from the panel connection plate 101 in a thickness direction of the panel side plate 102 is an appearance surface. It should be noted that the end of the panel side plate 102 in the width direction thereof is an end connected to the panel connection plate 101, and another end of the panel side plate 102 in the width direction thereof is an end away from the panel connection plate 101.

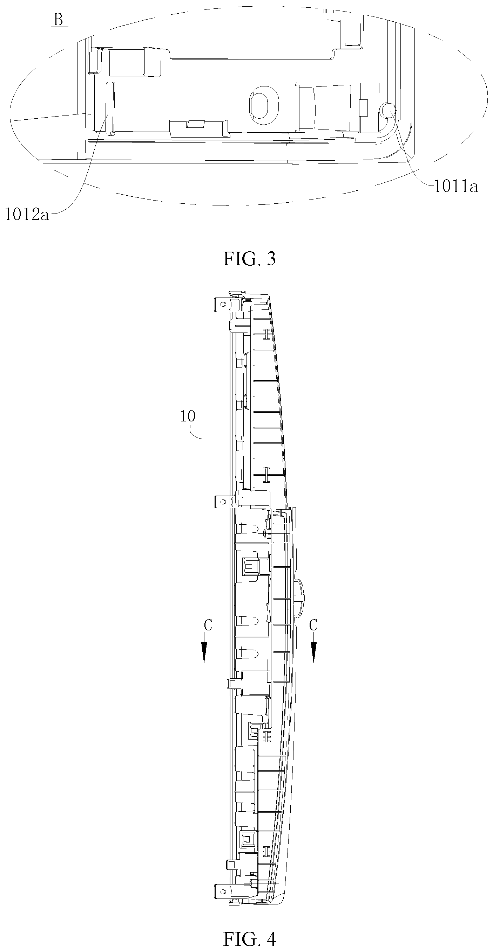

In some embodiments, as illustrated in FIG. 1a, FIG. 1b, FIG. 1c, and FIG. 3, the panel connection plate 101 has at least one panel gate forming region 1011 on a side surface of the panel connection plate 101 in a thickness direction thereof. The at least one panel gate forming region 1011 is adapted to correspond to a panel gate 1111 of the panel mold 1, and is formed adjacent to the panel side plate 102. The at least one panel gate forming region 1011 is located adjacent to the panel side plate 102, and the other end of the panel side plate 102 in the width direction thereof (i.e., an end away from the panel connection plate 101) has a minimum thickness. In this way, it is possible to at least reduce flow liners on the panel side plate 102 to some extent, to at least prevent the flow liners from being generated on an appearance surface of the panel side plate 102 to some extent. Therefore, qualified rate of the control panel 10 can be at least improved to some extent, thereby lowering the cost and satisfying user's usage demands.

In some embodiments, an end, adjacent to the panel connection plate 101, of a side surface of the panel side plate 102 facing away from the appearance surface of the panel side plate 102 has at least one panel gate forming region 1011. The panel gate forming region 1011 is adapted to correspond to the panel gate 1111 of the panel mold 1. The other end of the panel side plate 102 in the width direction thereof (i.e., the end away from the panel connection plate 101) has a minimum wall thickness. Thus, it is possible to at least reduce the flow liners on the panel side plate 102 to some extent, to at least prevent the flow liners from being generated on the appearance surface of the panel side plate 102 to some extent. Therefore, the qualified rate of the control panel 10 can be at least improved to some extent, thereby lowering the cost and satisfying the user's usage demands.

In some embodiments, after a control panel blank is formed through injection molding by the panel mold 1 and is de-molded from the panel mold 1, a part of a material at the panel gate 1111 of the panel mold 1 is left on the control panel blank and is formed into a panel gate forming portion. The panel gate forming region 1011 of the control panel 10 is a region where the panel gate forming portion is located. It can be understood that the control panel blank may be further processed to cut away or partially cut away the panel gate forming portion. In an example, the panel gate forming portion of the control panel blank may not be processed. That is, the panel gate forming portion is remained on the control panel 10. The embodiment of the present disclosure is not limited in this regard, and the panel gate forming portion may be provide as desired.

In order to facilitate explaining the reason why the flow liners on the panel side plate 102 are reduced, a panel mold 1 according to embodiments of the present disclosure will be described below, and the reason why the flow liners on the appearance surface of the panel side plate 102 are reduced is illustrated in principle and in combination with a structure of the panel mold 1.

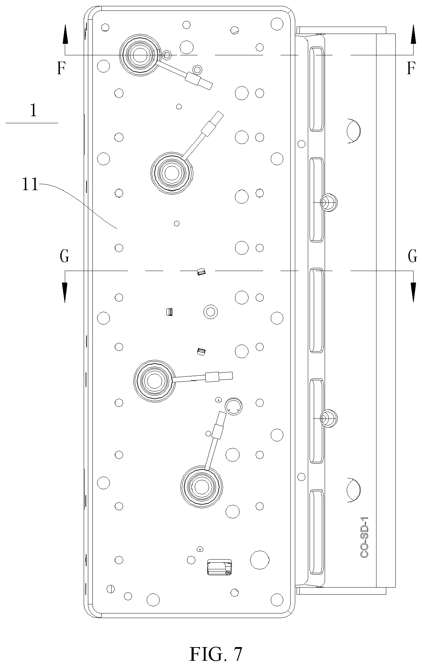

As illustrated in FIG. 7, according to the embodiments of the present disclosure, the panel mold 1 configured to shape the control panel 10 of the laundry treating device includes a panel mold core 11. The panel mold core 11 has a panel mold cavity.

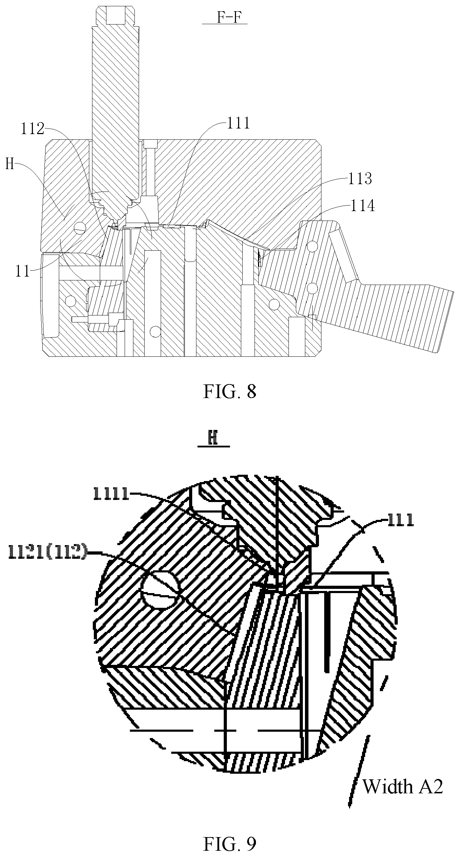

As illustrated in FIG. 8 and FIG. 9, the panel mold cavity includes a panel connection plate mold cavity 111 and a panel side plate mold cavity 112. The panel connection plate mold cavity 111 is configured to shape the panel connection plate 101 as described above. The panel side plate mold cavity 112 is configured to shape the panel side plate 102 as described above. The panel side plate mold cavity 112 extends in a peripheral direction of the panel connection plate mold cavity 111. An end of the panel side plate mold cavity 112 in a width direction thereof is in communication with an outer periphery of the panel connection plate mold cavity 111, and another end of the panel side plate mold cavity 112 in the width direction thereof has a minimum thickness. A side wall surface of the panel side plate mold cavity 112 away from the panel connection plate mold cavity 111 in a thickness direction of the panel side plate mold cavity 112 is configured to shape an appearance surface of the panel side plate 102. It can be understood that the end of the panel side plate mold cavity 112 in the width direction thereof is an end in communication with the panel connection plate mold cavity 111, and the other end of the panel side plate mold cavity 112 in the width direction thereof is an end away from the outer periphery of the panel connection plate mold cavity 111.

In some embodiments, as illustrated in FIG. 9, the panel mold core 11 has at least one panel gate 1111 located on a side wall surface of the panel connection plate mold cavity 111 in a thickness direction of the panel connection plate mold cavity 111. The at least one panel gate 1111 is formed adjacent to the panel side plate mold cavity 112.

In some embodiments, the panel mold core 11 has at least one panel gate 1111 located on another side wall surface of the panel side plate mold cavity 112 in the thickness direction of the panel side plate mold cavity 112 (i.e., a side wall surface opposite to an appearance surface for forming panel side plate 102) and adjacent to the panel connection plate mold cavity 111.

The reason why the flow liners are reduced will be set forth taking the panel gate 1111 being located at the panel connection plate mold cavity 111 as an example. After reading the following description, it will be apparent to those skilled in the art that flow liners can be reduced when the panel gate 111 is located at the panel side plate mold cavity 112.

In some embodiments, during the injection molding, after a hot melt material flows into the panel mold cavity through the panel gate 1111, the hot melt material is brought into contact with a cold inner wall of the panel mold cavity during its flowing. As a result, the material is quickly solidified on the inner wall of the panel mold cavity to form a thin solidification layer. A quality of an appearance of a spray-free product depends on an arrangement of metal particles in the solidification layer, and the stable flow can allow for a uniform metal particle orientation to obtain a better appearance. According to the embodiments of the present disclosure, at least one panel gate 1111 of the panel mold 1 is located on the side wall surface of the panel connection plate mold cavity 111 in the thickness direction of the panel connection plate mold cavity 111, and at least one of the panel gates 1111 is located adjacent to the panel side plate mold cavity 112. In this way, when the material flows out of the panel gate 1111 of the panel mold 1, a part of the material can directly flow towards the panel side plate mold cavity 112, which can shorten a path along which the material flows to the panel side plate mold cavity 112 from the panel gate 1111. As a result, it is possible to easily ensure that the material stably flows to the panel side plate mold cavity 112 from the panel connection plate mold cavity 111, thereby reducing the flow liners at the panel side plate 112. Therefore, product yield of the control panel 10 can be improved to some extent, and the user's usage demands can be satisfied.

Moreover, since the other end of the panel side plate mold cavity 112 in the width direction thereof has the minimum thickness, i.e., in the width direction of the panel side plate mold cavity 112, a thickness of a part (referred to as a large thickness portion) of the panel side plate mold cavity 112 adjacent to the panel connection plate mold cavity 111 and in direct communication with the other end of the panel side plate mold cavity 112 in the width direction of the panel side plate mold cavity 112 is necessarily greater than the thickness of the other end (referred to as a small thickness portion) of the panel side plate mold cavity 112 in the width direction of the panel side plate mold cavity 112. In this way, in the peripheral direction of the panel connection plate mold cavity 111, the material flows in the panel side plate mold cavity 112. Since the thickness of the large thickness portion is greater than the thickness of the small thickness portion, the material flows easily at the large thickness portion at a higher flow velocity. As a result, the material has a forward protruding form and an obvious front edge flow at the large thickness portion. Moreover, an actual flow direction of the material at each point on its front edge surface is an outward direction perpendicular to a tangent line of the front edge surface. Therefore, the flow direction at each point on the front edge surface is divergent, and does not intersect with each other. As a result, curling and rotation can be avoided, which can easily prevent the material at the large thickness portion and the material at the small thickness portion from being curled and rotated at the front edge of the material flow to some extent, to further ensure flow stability of the material. Therefore, flow liners at positions of the panel side plate 102 corresponding to the large thickness portion and the small thickness portion can be reduced. In addition, it is possible to at least improve the product yield of the control panel 10 to some extent and satisfy the user's usage demands.

There are several wall thickness variation relationships for the panel side plate 102, and these wall thickness variation relationships will be described below.

For a first wall thickness variation relationship, the wall thickness of the panel side plate 102 gradually decreases in a direction from one end to the other end of the panel side plate 102 in the width direction of the panel side plate 102. Correspondingly, in the panel mold 1, the thickness of the panel side plate mold cavity 112 gradually decreases in a direction from one end to the other end of the panel side plate mold cavity 112 in the width direction of the panel side plate mold cavity 112. In this way, in the peripheral direction of the panel connection plate mold cavity 111, when the material flows in the panel side plate mold cavity 112, depending on the thickness variation of the panel side plate mold cavity 112, it is easier for the material to flow at a position where the panel side plate mold cavity 112 has a large thickness with small flow resistance. As a result, a front edge surface of the material flow may be an inclined surface as illustrated in FIG. 12. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at its front edge can be avoided, and the material has more stable flow. In this manner, it is possible to further reduce the flow liners on the panel side plate 102, to further prevent the flow liners from being generated on the appearance surface of the panel side plate 102. Therefore, the qualified rate of the control panel 10 can be further improved, thereby lowering the cost and satisfying the user's usage demands.

For a second wall thickness variation relationship, the wall thickness of the panel side plate 102 is first constant and then gradually decreases in the direction from one end to the other end of the panel side plate 102 in the width direction of the panel side plate 102. Correspondingly, in the panel mold 1, the thickness of the panel side plate mold cavity 112 is first constant and then gradually decreases in the direction from one end to the other end of the panel side plate mold cavity 112 in the width direction of the panel side plate mold cavity 112. In this way, in the peripheral direction of the panel connection plate mold cavity 111, when the material flows in the length direction of the panel side plate mold cavity 112, depending on the thickness variation of the panel side plate mold cavity 112, it is easier for the material to flow at a position where the panel side plate mold cavity 112 has a large thickness with small flow resistance. As a result, as illustrated in FIG. 14, the front edge surface of the material flow may include a surface substantially parallel to the width direction of the panel side plate mold cavity 112 at a same thickness and an inclined surface towards an upstream of the material flow at a gradually decreasing thickness. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at the front edge can be avoided, and the material has more stable flow. In this manner, it is possible to further reduce the flow liners on the panel side plate 102, to further prevent the flow liners from being generated on the appearance surface of the panel side plate 102. Therefore, the qualified rate of the control panel 10 can be further improved, thereby lowering the cost and satisfying the user's usage demands.

For a third wall thickness variation relationship, the wall thickness of the panel side plate 102 first gradually increases and then gradually decreases in the direction from one end to the other end of the panel side plate 102 in the width direction of the panel side plate 102. Correspondingly, in the panel mold 1, the thickness of the panel side plate mold cavity 112 first gradually increases and then gradually decreases in the direction from one end to the other end of the panel side plate mold cavity 112 in the width direction of the panel side plate mold cavity 112. In this way, in the peripheral direction of the panel connection plate mold cavity 111, when the material flows in the length direction of the panel side plate mold cavity 112, depending on the thickness variation of the panel side plate mold cavity 112, it is easier for the material to flow at the position where the panel side plate mold cavity 112 has the large thickness with small flow resistance. As a result, the front edge surface of the material flow may have a forwarding protruding form as illustrated in FIG. 13. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at the front edge can be avoided, and the material has more stable flow. In this manner, it is possible to further reduce the flow liners on the panel side plate 102, to further prevent the flow liners from being generated on the appearance surface of the panel side plate 102. Therefore, the qualified rate of the control panel 10 can be further improved, thereby lowering the cost and satisfying the user's usage demands.

For a fourth wall thickness variation relationship, in the direction from one end to the other end of the panel side plate 102 in the width direction of the panel side plate 102, the wall thickness of the panel side plate 102 first gradually increases, then remains constant, and then gradually decreases. Correspondingly, in the panel mold 1, in the direction from one end to the other end of the panel side plate mold cavity 112 in the width direction of the panel side plate mold cavity 112, the thickness of the panel side plate mold cavity 112 first gradually increases, then remains constant, and then gradually decreases. In this way, in the peripheral direction of the panel connection plate mold cavity 111, when the material flows in the length direction of the panel side plate mold cavity 112, depending on the thickness variation of the panel side plate mold cavity 112, it is easier for the material to flow at the position where the panel side plate mold cavity 112 has the large thickness with small flow resistance. As a result, the front edge surface of the material flow may have a forward protruding form as illustrated in FIG. 15. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at the front edge can be avoided, and the material has more stable flow. In this manner, it is possible to further reduce the flow liners on the panel side plate 102, to further prevent the flow liners from being generated on the appearance surface of the panel side plate 102. Therefore, the qualified rate of the control panel 10 can be further improved, thereby lowering the cost and satisfying the user's usage demands.

Therefore, compared with a recessed front edge surface illustrated in FIG. 16 in the related art, according to the above embodiments of the present disclosure, it is more conducive to the reduction of the flow liners on the panel side plate 102.

For explanation, provided below is that the larger the wall thickness is, the faster a flow velocity of the material is.

When the material is injected into the panel mold 1 under a predetermined condition, a temperature of the material is sharply decreased due to contact with a cold wall surface of the panel mold cavity, and generates the solidification layer. In addition, a flow area of the panel mold cavity is reduced as a thickness of the solidification layer increases. As a result, the thickness of the solidification layer has an important influence on the flow resistance. A relationship between the fluidity s and the thickness h of the panel mold cavity satisfies formula I.

$$s = \int_0^k \frac{z^2}{\eta} z = \frac{h^3}{3\eta_{rep}}$$

(Formula I)

where $\eta_{rep}$ represents viscosity of the material.

According to the fluidity formula, the fluidity s is proportional to a cube of the thickness h. For example, when the thickness is reduced by fifty percent, the fluidity will be reduced to one eighth, which means that the flow resistance is increased to eight times. As a result, the thicker the panel mold cavity, the lower the flow resistance, the better the fluidity, and the faster the flow velocity.

With the panel mold 1 for forming the control panel 10 of the household appliance according to the embodiments of the present disclosure, the other end of the control panel mold cavity 112 in the width direction of the control panel mold cavity has the minimum thickness. In this way, it is possible to at least reduce the flow liners on the panel side plate 102 to some extent, to at least prevent the flow liners from being generated on the appearance surface of the panel side plate 102 to some extent. Therefore, the qualified rate of the control panel 10 can be at least improved to some extent, thereby lowering the cost and satisfying the user's usage demands.

In some embodiments of the present disclosure, a maximum wall thickness of the panel side plate 102 ranges from 2.5 mm to 3.5 mm. Correspondingly, a maximum thickness of the panel side plate mold cavity 112 ranges from 2.5 mm to 3.5 mm. Therefore, it is beneficial to ensure the fluidity of the material in the panel side plate mold cavity 112 to ensure that the panel side plate mold cavity 112 is filled with the material. As a result, it is possible to at least reduce the flow liners on the panel side plate 102 to some extent. Thus, the product yield can be improved. Moreover, it is also possible to ensure structural strength of the panel side plate 102, and avoid heavy product and material wasting due to too large thickness of the panel side plate 102.

For example, the maximum wall thickness of the panel side plate 102 is 2.6 mm, 2.7 mm, 2.8 mm, 2.9 mm, 3.0 mm, 3.1 mm, 3.2 mm, 3.3 mm, or 3.4 mm.

In some embodiments of the present disclosure, a minimum wall thickness of the panel side plate 102 ranges from 1.5 mm to 2.5 mm. Correspondingly, a minimum thickness of the panel side plate mold cavity 112 ranges from 1.5 mm to 2.5 mm. Therefore, it is beneficial to ensure the fluidity of the material in the panel side plate 102 to ensure that the panel side plate mold cavity 112 is filled with the material. As a result, it is possible to at least reduce the flow liners on the panel side plate 102 to some extent. Thus, the product yield can be improved. Moreover, it is possible to ensure the structural strength of the panel side plate 102.

For example, the minimum wall thickness of the panel side plate 102 is 1.6 mm, 1.7 mm, 1.8 mm, 1.9 mm, 2.0 mm, 2.1 mm, 2.2 mm, 2.3 mm, or 2.4 mm.

In some embodiments of the present disclosure, as illustrated in FIG. 2, the panel side plate 102 is divided into four equal sections in the width direction of the panel side plate 102. In the direction from one end to the other end of the panel side plate 102 in the width direction of the panel side plate 102, the four sections are sequentially referred to as a section a, a section b, a section c, and a section d.

Optionally, a wall thickness of the section a > a wall thickness of the section b > a wall thickness of the section c > a wall thickness of the section d. The wall thickness of the section a ranges from 2.8 mm to 3.5 mm. The wall thickness of the section b ranges from 2.5 mm to 3.0 mm. The wall thickness of the section c ranges from 2.5 mm to 2.8 mm. The wall thickness of the section d ranges from 1.5 mm to 2.5 mm.

Optionally, the wall thickness of the section b > the wall thickness of the section a > the wall thickness of the section c > the wall thickness of the section d. The wall thickness of the section a ranges from 2.5 mm to 2.8 mm. The wall thickness of the section b ranges from 2.8 mm to 3.5 mm. The wall thickness of the section c ranges from 2.5 mm to 2.8 mm. The wall thickness of the section d ranges from 1.5 mm to 2.5 mm.

Optionally, the wall thickness of the section a = the wall thickness of the section b = the wall thickness of the section c > the wall thickness of the section d. The wall thickness of the section a ranges from 2.5 mm to 3.5 mm. The wall thickness of the section d ranges from 1.5 mm to 2.5 mm.

Optionally, the wall thickness of the section a > the wall thickness of the section b = the wall thickness of the section c > the wall thickness of the section d. The wall thickness of the section a ranges from 2.5 mm to 3.5 mm. The wall thickness of the section d ranges from 1.5 mm to 2.5 mm.

In some embodiments of the present disclosure, a wall thickness of an end of the panel connection plate 101 connected to the panel side plate 102 is not greater than a wall thickness of the end of the panel side plate 102 in the width direction of the panel side plate 102. Correspondingly, in the panel mold 1, a thickness of the end, in communication with the panel side plate mold cavity 112, of the panel connection plate mold cavity 111 is not greater than a thickness of an end of the panel side plate mold cavity 112 in the width direction of the panel side plate mold cavity 112. Therefore, when the material flows out of the panel gate 1111 of the panel mold 1 adjacent to the panel side plate mold cavity 112, more materials can flow directly into the panel side plate mold cavity 112 easily, which can further ensure the stable flow of the material on the panel side plate 102, thereby reducing the flow liners at the panel side plate 102.

In some embodiments of the present disclosure, the wall thickness of the end of the panel connection plate 101 connected to the panel side plate 102 is smaller than the wall thickness of the end of the panel side plate 102 in the width direction of the panel side plate 102. Correspondingly, in the panel mold 1, the thickness of the end, in communication with the panel side plate mold cavity 112, of the panel connection plate mold cavity 111 is smaller than the thickness of the end of the panel side plate mold cavity 112 in the width direction of the panel side plate mold cavity 112. Therefore, when the material flows out of the panel gate 1111 of the panel mold 1 adjacent to the panel side plate mold cavity 112, more materials can flow directly into the panel side plate mold cavity 112 easily, which can further ensure the stable flow of the material on the panel side plate 102, thereby reducing the flow liners at the panel side plate 102.

In some embodiments of the present disclosure, the wall thickness of the panel connection plate 101 is smaller than the wall thickness of the panel side plate 102. That is, the wall thickness of the panel connection plate 101 is smaller than the minimum wall thickness of the panel side plate 102. Correspondingly, in the panel mold 1, the thickness of the panel connection plate mold cavity 111 is smaller than the minimum thickness of the panel side plate mold cavity 112. Therefore, when the material flows out of the panel gate 1111 of the panel mold 1 adjacent to the panel side plate mold cavity 112, more materials can flow directly into the panel side plate mold cavity 112 easily, which can further ensure the stable flow of the material on the panel side plate 102, thereby reducing the flow liners at the panel side plate 102.

In some embodiments of the present disclosure, the panel connection plate 101 is a connection plate of a constant wall thickness. Thus, the structure of the panel mold 1 can be simplified.

According to some embodiments of the present disclosure, in the panel gate forming region 1011 on the panel connection plate 101, a minimum distance between the panel gate forming region 1011 adjacent to the panel side plate 102 and the panel side plate 102 is smaller than or equal to 20 mm. Correspondingly, in the panel mold 1, the panel mold core has the at least one panel gate 1111 located on the side wall surface of the panel connection plate mold cavity 111 in the thickness direction of the panel connection plate mold cavity 111, and a minimum distance between the panel gate 1111 adjacent to the panel side plate mold cavity 112 and the panel side plate mold cavity 112 is smaller than or equal to 20 mm. Optionally, the distance may be 18 mm, 16 mm, 12 mm, 10 mm, 8 mm, 5 mm, or 0 mm. In this way, it is possible to allow more materials to flow directly into the panel side plate mold cavity 112 easily, to further ensure the stable flow of material on the panel side plate 102, thereby reducing the flow liners at the panel side plate 102.

In some embodiments of the present disclosure, a minimum distance between the panel gate forming region 1011 located at the panel side plate 102 and the panel connection plate 101 is smaller than or equal to 10 mm. Correspondingly, in the panel mold 1, the panel mold core has at least one panel gate 1111 formed on the other side wall surface of the panel side plate mold cavity 112 in the thickness direction of the panel side plate mold cavity 112 and adjacent to the panel connection plate mold cavity 111, and a minimum distance between the panel gate 1111 and the panel connection plate mold cavity 111 is smaller than or equal to 10 mm. For example, the minimum distance may be 5 mm, 2 mm, or 0 mm. Therefore, it is beneficial that more materials can flow directly into the panel side plate mold cavity 112 easily, to further ensure the stable flow of the material on the panel side plate 102, thereby reducing the flow liners at the panel side plate 102.

In some embodiments of the present disclosure, as illustrated in FIG. 1, FIG. 1a, FIG. 1b, and FIG. 1c, the outer peripheral wall of the panel connection plate 101 includes a first side wall surface and a second side wall surface that are arranged in the peripheral direction of the panel connection plate 101. An angle is formed between the first side wall surface and the second side wall surface. The panel side plate 102 includes a first side plate body 1021 and a second side plate body 1022 that are connected to each other. An angle is formed between the first side plate body 1021 and the second side plate body 1022. The first side plate body 1021 is connected to the first side wall surface, and the second side plate body 1022 is connected to the second side wall surface. One of the panel gate forming regions 1011a is formed adjacent to a connection between the first side plate body 1021 and the second side plate body 1022 (for example, a minimum distance between the panel gate forming region 1011 located adjacent to the connection between the first side plate body 1021 and the second side plate body 1022 and the first side plate body 1021 is smaller than or equal to 20 mm, for example, 0 mm, and a minimum distance between the panel gate forming region 1111 located adjacent to the connection between the first side plate body 1021 and the second side plate body 1022 and the second side plate body 1022 is smaller than or equal to 20 mm, for example, 0 mm).

In some embodiments, as illustrated in FIG. 9, in the panel mold 1, the panel side plate mold cavity 112 includes a first side plate body mold cavity 1121 and a second side plate body mold cavity. The first side plate body mold cavity 1121 and the second side plate body mold cavity are arranged in the peripheral direction of the panel connection plate mold cavity 111 and in communication with each other. The first side plate body mold cavity 1121 is configured to shape the first side plate body 1021. The second side plate body mold cavity is configured to shape the second side plate body 1022. An angle is formed between the first side plate body mold cavity 1121 and the second side plate body mold cavity. Each of the first side plate body mold cavity 1121 and the second side plate body mold cavity is in communication with the panel connection plate mold cavity 111. One of panel gates 1111 is formed adjacent to a position where the first side plate body mold cavity 1121 is in communication with the second side plate body mold cavity. Therefore, during the injection molding, the material flowing out of the panel gate 1111 can flow to the panel connection plate mold cavity 111, the first side plate body mold cavity 1121, and the second side plate body mold cavity, respectively. Thus, it is possible to prevent the material in the panel connection plate mold cavity 111, the material in the first side plate body mold cavity 1121, and the material in the second side plate body mold cavity from converging with each other at a corner to generate the flow liners. Therefore, it is beneficial for more materials to converge with each other at the panel connection plate mold cavity 111, thereby further avoiding the generation of the flow liners at the panel side plate 102.

In some embodiments of the present disclosure, a plurality of panel gate forming regions 1011 is formed at a position on the panel connection plate 101 adjacent to the first side plate body 1021. The plurality of panel gate forming regions 1011 is arranged at intervals in a length direction of the first side plate body 1021. The panel gates 1111 may be opened sequentially in a predetermined order as the material flows in the panel mold cavity. In an example, a panel gate 1111 at the connection between the first side plate body 1021 and the second side plate body 1022, i.e., a corner panel gate 1111, may be first opened, and other panel gates are sequentially opened in the length direction of the first side plate body 1021 and a direction away from the corner panel gate 1111, thereby assisting in ensuring that a flow speed of the front edge of the material at a position where the panel side plate 102 has the large wall thickness remains constantly fastest, and the front edges of the melt materials do not converge with each other.

In some embodiments of the present disclosure, as illustrated in FIG. 1 and FIG. 2, the control panel 10 includes a panel top plate 103. The panel top plate 103 is connected to the outer peripheral wall of the panel connection plate 101. The panel top plate 103 and the panel side plate 102 are sequentially arranged in the peripheral direction of the panel connection plate 101. Correspondingly, in the panel mold 1, the panel mold cavity includes a panel top plate mold cavity 113. The panel top plate mold cavity 113 is configured to shape the panel top plate 103, and is in communication with the outer periphery of the panel connection plate mold cavity 111. The panel top plate mold cavity 113 and the panel side plate mold cavity 112 are sequentially arranged in the peripheral direction of the panel connection plate mold cavity 111. Thus, the structure is simple.

In some embodiments of the present disclosure, at least one panel gate forming region 1011 is formed at a position on the panel connection plate 101 adjacent to the panel top plate 103 (for example, a minimum distance between the panel gate forming region 1011 and the panel top plate 103 is not greater than 20 mm, optionally, is 10 mm or 0 mm). When the plurality of panel gate forming regions 1011 is formed at the position on the panel connection plate 101 adjacent to the panel top plate 103, the plurality of panel gate forming regions 1011 is arranged at intervals in a length direction of the panel top plate 103. As a result, more materials can enter the panel top plate mold cavity 113 easily to reduce the flow liners at the panel top plate 103.

In some embodiments of the present disclosure, as illustrated in FIG. 1, one side surface of the panel top plate 103 a thickness direction thereof is referred to as an appearance surface. A plurality of panel blocking holes 1012 is formed on the panel connection plate 101 and arranged at intervals. The plurality of panel blocking holes 1012 penetrates the panel connection plate 101 in the thickness direction of the panel connection plate 101. Some of the plurality of panel gate forming regions 1011 are formed adjacent to the panel side plate 102, and the remaining of the plurality of panel gate forming regions 1011 are formed adjacent to the panel top plate 103. Some of the plurality of panel blocking holes 1012 are formed adjacent to the panel side plate 102 (for example, a minimum distance between each of the panel blocking holes 1012 and the panel side plate 102 is not greater than 20 mm), and the remaining of the plurality of panel blocking holes 1012 are formed adjacent to the panel top plate 103 (for example, a minimum distance between each of the panel blocking holes 1012 and the panel top plate 103 is not greater than 20 mm). Some of the plurality of panel blocking holes 1012 are spaced apart from some of the plurality of panel gate forming regions 1011 in the peripheral direction of the panel connection plate 11, and the remaining of the plurality of panel blocking holes 1012 are spaced apart from the remaining of the plurality of panel gate forming regions 1011 in the peripheral direction of the panel connection plate 11.

Correspondingly, in the panel mold 1, a plurality of panel post structures is provided in the panel connection plate mold cavity 111 and arranged at intervals. The plurality of panel post structures is configured to shape the panel blocking holes 1012, and extends across the panel connection plate mold cavity 111 in the thickness direction of the panel connection plate mold cavity 111. Some of the plurality of panel gates 1111 are formed adjacent to the panel side plate mold cavity 112, and the remaining of the plurality of panel gates 1111 are formed adjacent to the panel top plate mold cavity 113. Some of the plurality of panel post structures are formed adjacent to the panel side plate mold cavity 112, and are spaced apart from some of the plurality of panel gates 1111 in the peripheral direction of the panel connection plate mold cavity 111. The remaining part of the plurality of panel post structures are disposed adjacent to the panel top plate mold cavity 113, and are spaced apart from the remaining of the plurality of panel gates 1111 in the peripheral direction of the panel connection plate mold cavity 111.

Since some of the panel gates 1111 of the panel mold 1 are located adjacent to the panel side plate mold cavity 112, and the remaining of the panel gates 1111 of the panel mold 1 are formed adjacent to the panel top plate mold cavity 113, a part of the material flowing out of some of the panel gate 1111 of the panel mold 1 flows to the panel connection plate mold cavity 111 towards a center of the panel connection plate mold cavity 111, and the remaining part of the material directly flows to the panel side plate mold cavity 112 through an edge of the panel connection plate mold cavity 111. In order to prevent superfluous materials from flowing towards the panel side plate mold cavity 112 after the panel connection plate mold cavity 111 is filled with the material flowing towards the center of the panel connection plate mold cavity 111 to prevent the part of the material from converging, in the panel side plate mold cavity 112, with the material originally located in the panel side plate mold cavity 112. Therefore, by providing the panel post structure at a position on the panel connection plate mold cavity 111 adjacent to the panel side plate mold cavity 112, it is possible to further prevent the flow liners from being generated on the panel side plate 102.

Similarly, a part of the material flowing out of the remaining of the panel gates 1111 of the panel mold 1 flows to the panel connection plate mold cavity 111 towards the center of the panel connection plate mold cavity 111, and the remaining part of the material directly flows to the panel top plate mold cavity 113 through the edge of the panel connection plate mold cavity 111. In order to prevent superfluous materials from flowing to the panel top plate mold cavity 113 after the panel connection plate mold cavity 111 is filled with the material flowing towards the center of the panel connection plate mold cavity 111, to prevent the part of the material from converging, in the panel top plate mold cavity 113, with the material originally located in the panel top plate mold cavity 113. Therefore, by providing the panel post structure at the position on the panel connection plate mold cavity 111 adjacent to the panel top plate mold cavity 113, it is possible to further prevent the flow liners from being generated on the panel top plate 103.

In some embodiments of the present disclosure, a minimum distance between the panel gate forming region 1011 adjacent to the panel top plate 103 and the panel top plate 103 is smaller than or equal to 20 mm. Correspondingly, in the panel mold 1, a minimum distance between a panel gate 1111 adjacent to the panel top plate mold cavity 113 and the panel top plate mold cavity 113 is smaller than or equal to 20 mm. Optionally, the minimum distance between the panel gate forming region 1011 adjacent to the panel top plate 103 and the panel top plate 103 is 10 mm, 8 mm, 3 mm, or 0 mm.

In some embodiments of the present disclosure, a minimum distance between the blocking hole adjacent to the panel top plate and the panel top plate is smaller than or equal to 20 mm. Correspondingly, a minimum distance between the panel post structure adjacent to the panel top plate mold cavity 113 and the panel top plate mold cavity 113 is smaller than or equal to 20 mm. For example, the minimum distance between the blocking hole adjacent to the panel top plate and the panel top plate is 10 mm, 8 mm, 3 mm, or 0 mm.

In some embodiments of the present disclosure, a minimum distance between the panel blocking hole adjacent to the panel side plate and the panel side plate is smaller than or equal to 20 mm. Correspondingly, in the mold, a minimum distance between the panel post structure adjacent to the panel side plate mold cavity 112 and the panel side plate mold cavity 112 is smaller than or equal to 20 mm. For example, the minimum distance between the panel blocking hole adjacent to the panel side plate and the panel side plate is 10 mm, 8 mm, 3 mm, or 0 mm.

In some embodiments of the present disclosure, the outer peripheral wall of the panel connection plate 101 includes a first side wall surface, a second side wall surface, and a third side wall surface that are sequentially arranged in the peripheral direction of the panel connection plate 101. The third side wall surface is opposite to the first side wall surface. An angle is formed between the second side wall surface and the first side wall surface. The panel side plate 102 includes a first side plate body 1021 and a second side plate body 1022 that are connected to each other. An angle is formed between the first side plate body 1021 and the second side plate body 1022. The first side plate body 1021 is connected to the first side wall surface. The second side plate body 1022 is connected to the second side wall surface. The panel top plate 103 is connected to the third side wall surface. An end of the panel top plate 103 adjacent to the second side wall surface is connected to the second side plate body 1022. As illustrated in FIG. 3, one of the panel gate forming regions 1011a is formed adjacent to a connection between the second side plate body 1022 and the first side plate body 1021, and one of the panel blocking holes 1012a is formed adjacent to a connection between the second side plate body 1022 and the panel top plate 103.

Correspondingly, in the panel mold 1, in the peripheral direction of the panel connection plate mold cavity 111, the panel side plate mold cavity 112 includes a first side plate body mold cavity 1121 and a second side plate body mold cavity that are in communication with each other. The first side plate body mold cavity 1121 is configured to shape the first side plate body 1021. The second side plate body mold cavity is configured to shape the second side plate body 1022. An angle is formed between the first side plate body mold cavity 1121 and the second side plate body mold cavity. Each of the first side plate body mold cavity 1121 and the second side plate body mold cavity is in communication with the panel connection plate mold cavity 111. An end of the panel top plate mold cavity 113 adjacent to the second side plate body mold cavity is in communication with the second side plate body mold cavity. One of the panel gate 1111 is formed adjacent to a position where the first side plate body mold cavity 1121 is in communication with the second side plate body mold cavity, and one of the panel post structures is located adjacent to a position where the second side plate body mold cavity is in communication with the panel top plate mold cavity 113.

During the injection molding, one of the panel gates 1111 is formed adjacent to the position where the first side plate body mold cavity 1121 is in communication with the second side plate body mold cavity. Therefore, when the material flows out of this panel gate, it is more beneficial that the material can flow to the panel connection plate mold cavity 111, the first side plate body mold cavity 1121, and the second side plate body mold cavity, respectively. Thus, it is possible to prevent the material in the panel connection plate mold cavity 111, the material in the first side plate body mold cavity 1121, and the material in the second side plate body mold cavity from converging with each other at the corner to generate the flow liners, thereby further avoiding the generation of the flow liners at the panel side plate 102. In addition, one of the panel post structures is disposed adjacent to the position where the second side plate body mold cavity is in communication with the panel top plate mold cavity 113. Thus, it is possible to prevent the material flowing through the panel connection plate mold cavity 111 from flowing to the second side plate body mold cavity and the panel top plate mold cavity 113, to prevent the material originally located in the second side plate body mold cavity and the material originally located in the panel top plate mold cavity 113 from converging, in the second side plate body mold cavity and the panel top plate mold cavity 113, with the material flowing through the panel connection plate mold cavity 111. Therefore, the flow liners on both the panel side plate 102 and the panel top plate 103 can be further reduced.

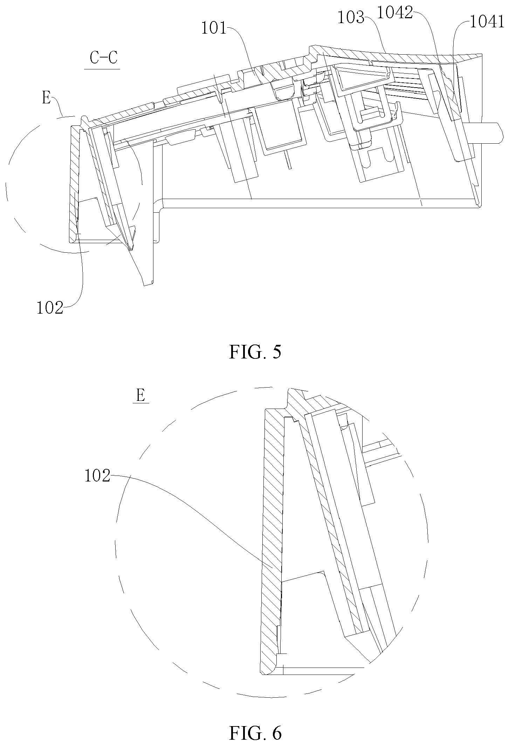

In some embodiments of the present disclosure, as illustrated in FIG. 2 and FIG. 5, a side surface of the panel top plate 103 in the thickness direction thereof is refers to as the appearance surface, and a panel connection rib 104 is provided on the other side surface of the panel top plate 103 in the thickness direction of the panel top plate 103. The panel connection rib 104 includes a panel connection rib body 1041 and a panel connection portion 1042. The panel connection portion 1042 is connected between the panel connection rib body 1041 and the panel top plate 103.

Correspondingly, in the panel mold 1, the panel mold cavity includes a panel connection rib mold cavity 114. A side wall surface of the panel top plate mold cavity 113 in a thickness direction thereof is configured to shape an appearance surface of the panel top plate 103. The panel connection rib mold cavity 114 is located on the other side wall surface of the panel top plate mold cavity 113 in the thickness direction of the panel top plate mold cavity 113 and is in communication with the panel top plate mold cavity 113. The panel connection rib mold cavity 114 includes a panel connection rib body mold cavity 1141 and a panel connection portion mold cavity 1142 that are in communication with each other. The panel connection portion mold cavity 1142 is communicated between the panel connection rib body mold cavity 1141 and the panel connection plate mold cavity 111. Therefore, by providing the panel connection rib 104, structural strength of the panel top plate 103 can be enhanced.

Optionally, a thickness of the panel connection portion 1042 is smaller than a thickness of an end of the panel connection rib body 1041 connected to the panel connection portion 1042. In the panel mold 1, a thickness of the panel connection portion mold cavity 1142 is smaller than a thickness of an end, in communication with the panel connection portion mold cavity 1142, of the panel connection rib body mold cavity 1141. In some embodiments, during the injection molding, since no panel gate 1111 is formed at a wall surface of the panel connection rib mold cavity 114, when the material flows in the panel mold cavity, the material first flows through the panel top plate mold cavity 113, and then flows to the panel connection rib mold cavity 114 through the panel top plate mold cavity 113. Moreover, by setting the thickness of the panel connection portion mold cavity 1142 smaller than a thickness of the panel connection rib body mold cavity 1141, it is possible to at least prevent the unstable flow field from being formed at a position where the panel connection rib mold cavity 114 is in communication with the panel top plate mold cavity 113 to some extent, to at least avoid the material converging due to a backflow of the material in the panel connection rib body mold cavity 1141 to the panel top plate mold cavity 113 through the panel connection portion mold cavity 1142 to some extent, thereby preventing the flow liners from being generated at the connection of the panel top plate 103 to the panel connection rib 104.

Optionally, the thickness of the panel connection portion 1042 is smaller than the thickness of the panel connection rib body 1041. Therefore, it is possible to at least prevent the unstable flow field from being formed at the position where the panel connection rib mold cavity 114 is in communication with the panel top plate mold cavity 113 to some extent, to at least avoid the material converging due to the backflow of the material in the panel connection rib body mold cavity 1141 to the panel top plate mold cavity 113 through the panel connection portion mold cavity 1142 to some extent, thereby preventing the flow liners from being generated at the connection of the panel top plate 103 to the panel connection rib 104.

Optionally, a part of a surface of the panel connection portion 1042 facing towards the panel top plate 103 is recessed away from the panel top plate 103 to form a panel through hole. The panel through hole penetrates the panel connection portion 1042 in the thickness direction of the panel connection portion 1042. Correspondingly, in the panel mold 1, the panel connection portion mold cavity 1142 is provided with a panel post structure for forming the panel through hole. The panel post structure extends across the panel connection portion mold cavity 1142 in the thickness direction of the panel connection portion mold cavity 1142. In this way, since no panel gate 1111 is formed at the panel connection rib mold cavity 114, when the material flows in the panel mold cavity, the material first flows through the panel top plate mold cavity 113, and then flows to the panel connection rib mold cavity 114 through the panel top plate mold cavity 113. Moreover, by providing the panel post structure, the panel post structure can reduce a flow area of a material flowing across the position where the panel connection rib mold cavity 114 is in communication with the panel top plate mold cavity 113. As a result, it is possible to at least prevent the unstable flow field from being formed at the position where the panel connection rib mold cavity 114 is in communication with the panel top plate mold cavity 113 to some extent, to at least avoid the material converging due to the backflow of the material in the panel connection rib body mold cavity 1141 to the panel top plate mold cavity 113 through the panel connection portion mold cavity 1142 to some extent, thereby preventing the flow liners from being generated at the connection of the panel top plate 103 to the panel connection rib 104.

In some embodiments of the present disclosure, the thickness of the panel connection plate 101 is smaller than a thickness of an end of the panel top plate 103 connected to the panel connection plate 101. Correspondingly, in the panel mold 1, the thickness of the panel connection plate mold cavity 111 is smaller than a thickness of an end, in communication with the panel connection plate mold cavity 111, of the panel top plate mold cavity 113. Therefore, when the material flows out of the panel gate 1111 of the panel mold 1 adjacent to the panel top plate mold cavity 113, it is more beneficial for more materials to directly flow to the panel top plate mold cavity 113, to further ensure that the material flows stably to the panel top plate mold cavity 113 from the panel connection plate mold cavity 111, thereby reducing the flow liners at the panel top plate 103.

In some embodiments of the present disclosure, the thickness of the panel connection plate 101 is smaller than a thickness of the panel top plate 103. Correspondingly, in the panel mold 1, the thickness of the panel connection plate mold cavity 111 is smaller than a thickness of the panel top plate mold cavity 113. Therefore, when the material flows out of the panel gate 1111 of the panel mold 1 adjacent to the panel top plate mold cavity 113, it is more beneficial for more materials to directly flow to the panel top plate mold cavity 113, to further ensure that the material flows stably to the panel top plate mold cavity 113 from the panel connection plate mold cavity 111, thereby reducing an obstruction to the material flow and the flow liners at the panel top plate 103.

In some embodiments of the present disclosure, a wall thickness of the panel top plate 103 gradually decreases in a direction away from the panel connection plate 101; or the wall thickness of the panel top plate 103 is constant and then gradually decreases in the direction away from the panel connection plate 101; or the wall thickness of the panel top plate 103 gradually increases and then gradually decreases in the direction away from the panel connection plate 101; or in the direction away from the panel connection plate 101, the wall thickness of the panel top plate 103 gradually increases, then remains constant, and then gradually decreases. In this way, it is possible to further reduce the flow liners on the panel top plate 103, to further prevent the flow liners from being generated on the appearance surface of the panel top plate 103. Therefore, it is possible to further improve the qualified rate of the control panel 10, thereby lowering the cost and satisfying the user's usage demands.

A laundry treating device according to the embodiments of the present disclosure includes the control panel 10 of the laundry treating device as described above.

With the laundry treating device according to the embodiments of the present disclosure, by providing the control panel 10, the other end of the panel side plate 102 in the width direction thereof has the minimum wall thickness, and the at least one panel gate forming region 1011 is formed adjacent to the panel side plate 102. In this way, it is possible to at least reduce the flow liners on the panel side plate 102 to some extent, to at least prevent the flow liners from being generated on the appearance surface of the panel side plate 102 to some extent. Therefore, the qualified rate of the control panel 10 can be at least improved to some extent, thereby lowering the cost and satisfying the user's usage demands.

A description will be provided below taking a knob cover plate of a laundry treating device as the appearance part as an example.

In general, a knob of the laundry treating device such as a front-load washing machine, is configured to control laundry program selection, and has dual requirements of function and appearance.

The knob includes a knob cover plate 20. A manufacturing process for the knob cover plate 20 is mostly implemented through an injection molding and spraying process, and the sprayed knob cover plate 20 has a gorgeous metal appearance effect. However, the spraying process has the defects such as serious pollution, high cost, low qualified rate, unrecyclable unqualified product, and the like, which seriously affects health of environment and production personnel, and does not conform to the green manufacturing concept. In order to overcome the defects in the spraying process, a spraying-free thermoplastic engineering material emerges, and the metal appearance effect of a product can be given by spraying-free injection molding. As a result, the spraying process can be replaced, thereby lowering production cost. Meanwhile, it is possible to avoid emission of pollutants during the spraying.

No matter whether the knob cover plate 20 is manufactured by using a spraying-free material or through the injection molding and spraying process, for a material with poor fluidity, especially for a spraying-free material including metal particles, since there are the metal particles and other substances in the spraying-free material, uneven arrangement of the metal particles may be generated due to an obstruction to the material when flowing during the injection molding. As a result, the injection-molded product may occur light scattering under an irradiation of light, and flow liners thus are visually generated on the product, which results in a flow liner defect on the product. When the flow liners are generated on an appearance surface of the appearance part, the flow liners not only lead to low qualified rate, but also cannot satisfy user's usage demands. A description will be provided below taking the spraying-free material including metal particles as an example. That is, the knob cover plate 20 may be a spray-free piece including a resin matrix and metal particles distributed in the resin matrix. Optionally, the metal particles are aluminum, silver, or copper.

According to the embodiments of the present disclosure, a knob cover plate 20, a knob, a laundry treating device, and a knob cover plate mold 2 for forming the knob cover plate 20 will be described below. The knob cover plate 20 is an integral injection-molding piece. As a result, a structure of the integral piece not only can ensure structural and performance stability of the knob cover plate 20, but also leads to convenient forming and simple manufacturing. Moreover, redundant assembly parts and connection steps can be removed, and connection reliability of the knob cover plate 20 can be ensured. Furthermore, the integrally formed structure is high in overall strength and stability, is more convenient to be assembled, and is longer in service life. Optionally, the laundry treating device may be a washing machine, clothes dryer, or a washing and drying integrated machine.

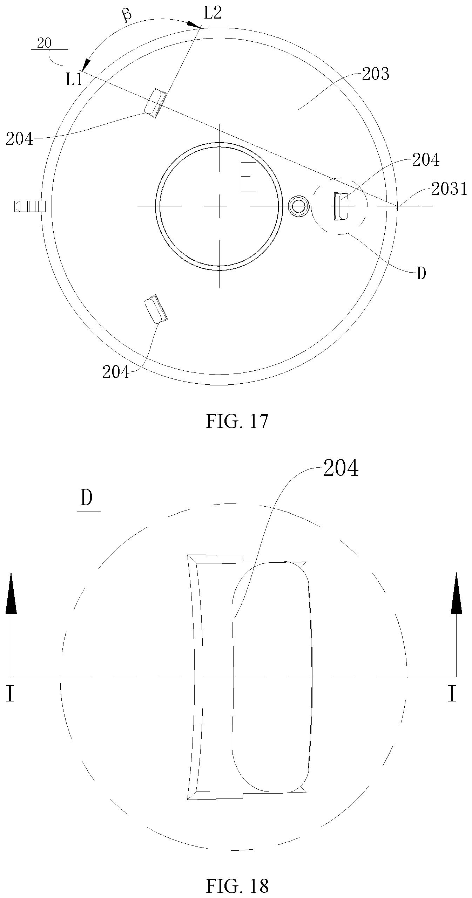

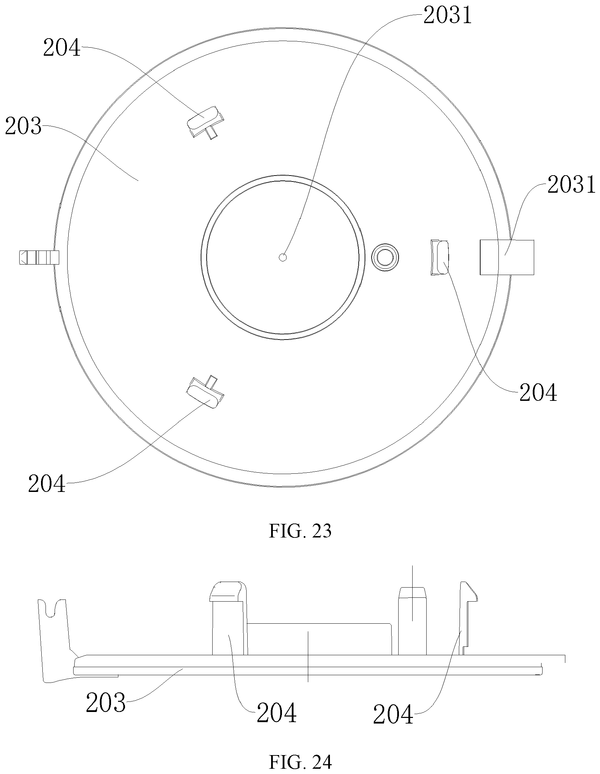

As illustrated in FIG. 17, FIG. 23, and FIG. 24, according to the embodiments of the present disclosure, the knob cover plate 20 of the laundry treating device includes a cover plate body 203 and a cover plate connection rib 204.

One side surface of the cover plate body 203 in a thickness direction thereof is referred to as an appearance surface, and the other side surface of the cover plate body 203 in the thickness direction thereof is referred to as a non-appearance surface. The other side surface of the cover plate body 203 in the thickness direction thereof being referred to as the non-appearance surface means that when the knob cover plate 20 is mounted in the knob, the other side surface of the cover plate body 203 in the thickness direction thereof is not exposed. In addition, the one side surface of the cover plate body 203 in the thickness direction thereof being referred to as the appearance surface means that when the knob cover plate 20 is mounted in the knob, the one side surface of the cover plate body 203 in the thickness direction thereof is exposed.

As illustrated in FIG. 17, a cover plate gate forming region 2031 is located on an outer peripheral wall of the cover plate body 203 and/or at a center of the other side surface of the cover plate body 203 in the thickness direction of the cover plate body 203, and is adapted to correspond to a cover plate gate of the knob cover plate mold 2. That is, the cover plate gate forming region 2031 adapted to correspond to the cover plate gate of the knob cover plate mold 2 may be formed on the outer peripheral wall of the cover plate body 203, or formed at the center of the other side surface of the cover plate body 203 in the thickness direction of the cover plate body 203, or formed on the outer peripheral wall of the cover plate body 203 and the center of the other side surface of the cover plate body 203 in the thickness direction of the cover plate body 203.

In some embodiments, after a knob cover plate blank is formed through injection molding by a knob cover plate mold 2 and is de-molded from the knob cover plate mold 2, a part of a material at the cover plate gate of the knob cover plate mold 2 is left on the knob cover plate blank and is formed into a cover plate gate forming portion. The cover plate gate forming region 2031 of the knob cover plate 20 is a region where the cover plate gate forming portion is located. It can be understood that the knob cover plate blank may be further processed to cut away or partially cut away the cover plate gate forming portion. In an example, the cover plate gate forming portion of the knob cover plate blank may not be processed. That is, the cover plate gate forming portion is remained on the knob cover plate 20. The embodiment of the present disclosure is not limited in this regard, and the cover plate gate forming portion may be provide as desired.

In addition, it can be understood that one cover plate gate is formed at the center of the other side surface of the cover plate body 203 in the thickness direction of the cover plate body 203. One cover plate gate or a plurality of cover plate gates may be formed on the outer peripheral wall of the cover plate body 203, and the plurality of cover plate gates is arranged at intervals in a peripheral direction of the cover plate body 203.

The cover plate connection rib 204 is disposed on the other side surface of the cover plate body 203 in the thickness direction of the cover plate body 203. As a result, by providing the cover plate connection rib 204, structural strength of the knob cover plate 20 can be enhanced.

In some embodiments, as illustrated in FIG. 17 and FIG. 18, in a plane parallel to the cover plate body 203, a connection line between a projection of a center of the cover plate gate forming region 2031 and a projection of a center of the cover plate connection rib 204 is referred to as L1, a width direction of the cover plate connection rib 204 is referred to as L2, and an angle $\beta$ between the connection line L1 and the width direction L2 ranges from 80° to 100°. For example, the angle $\beta$ is 81°, 82°, 83°, 84°, 85°, 86°, 87°, 88°, 89°, 90°, 91°, 92°, 93°, 94°, 95°, 96°, 97°, 98°, or 99°.

In order to facilitate explaining the reason why the flow liners on the cover plate body 203 are reduced, the knob cover plate mold 2 according to the embodiments of the present disclosure will be described below, and the reason why the flow liners on an appearance surface of the cover plate body 203 are reduced is illustrated in principle and in combination with a structure of the knob cover plate mold 2.

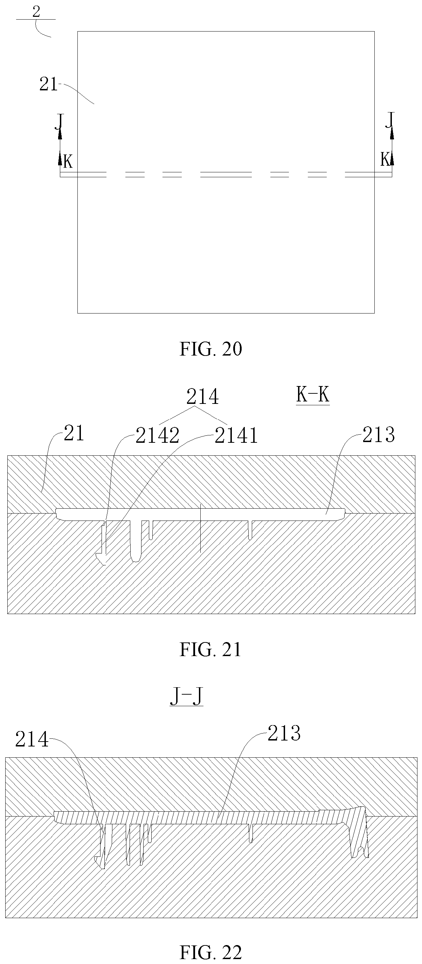

As illustrated in FIG. 20 and FIG. 21, according to the embodiments of the present disclosure, a knob cover plate mold 2 for forming the knob cover plate 20 of a laundry treating device includes a knob cover plate mold core 21.

The knob cover plate mold core 21 has a knob cover plate mold cavity. The knob cover plate includes a cover plate body mold cavity 213 and a plurality of cover plate connection rib mold cavities 214. One side wall surface of the cover plate body mold cavity 213 in a thickness direction thereof is configured to shape an appearance surface of the cover plate body 203. The cover plate connection rib mold cavity 214 is located at another side wall surface of the cover plate body mold cavity 213 in the thickness direction of the cover plate body mold cavity 213, and is in communication with the cover plate body mold cavity 213. The knob cover plate mold core 21 has a cover plate gate located on an outer peripheral wall of the cover plate body mold cavity 213, and/or a cover plate gate located at the center of the other side wall surface of the cover plate body mold cavity 213 in the thickness direction of the cover plate body mold cavity 213.

In a plane parallel to the cover plate body mold cavity 213, a connection line between a projection of a center of the cover plate gate and a projection of a center of the cover plate connection rib mold cavity 214 is referred to as L1', a width direction of the cover plate connection rib mold cavity 214 is referred to as L2', and an angle between the connection line L1' and width direction L2' ranges from 80° to 100°. For example, the angle between the connection line L1' and width direction L2' is 81°, 82°, 83°, 84°, 85°, 86°, 87°, 88°, 89°, 90°, 91°, 92°, 93°, 94°, 95°, 96°, 97°, 98°, or 99°.

In some embodiments, during injection molding, after a hot melt material flows into the knob cover plate mold 2 through the cover plate gate, the hot melt material is brought into contact with a cold inner wall of the knob cover plate mold cavity during its flowing. As a result, the material is quickly solidified on the inner wall of the knob cover plate mold cavity to form a thin solidification layer. A quality of an appearance of a spray-free product depends on an arrangement of metal particles in the solidification layer, and the stable flow can allow for a uniform metal particle orientation to obtain a better appearance. However, when the cover plate body mold cavity 213 is in communication with the cover plate connection rib mold cavity 214 and the material flows through a position where the cover plate connection rib mold cavity 214 is in communication with the cover plate body mold cavity 213, the material flow is divided in such a manner that a part of the material flow continues to flow in the cover plate body mold cavity 213 in the original flow direction, and the remaining part of the material flow flows to the cover plate connection rib mold cavity 214. The material flowing into the cover plate connection rib mold cavity 214 flows back into the cover plate body mold cavity 213 from the cover plate connection rib mold cavity 214. When the subsequent melt materials is continuously feed, an unstable flow field is generated near a bottom of the cover plate connection rib mold cavity 214. In addition, due to the continuous action of a fluid pressure, a solidification layer of an appearance surface of the cover plate body mold cavity 213 at a position corresponding to the cover plate connection rib mold cavity 214 is damaged, which results in orientation disorder of metal particles in the solidification layer in this region, which in turn results in flow mark on the appearance surface.

Particularly, in a case where the flow direction of the material is substantially same as the width direction of the cover plate connection rib mold cavity 214, a width of the cover plate connection rib mold cavity 214 is greater than a thickness of the cover plate connection rib mold cavity 214. Therefore, in the width direction of the cover plate connection rib mold cavity 214, the material enters the cover plate connection rib mold cavity 214, and flows back into the cover plate body mold cavity 213 from the cover plate connection rib 204 without filling the cover plate connection rib mold cavity 214 fully, and materials at the other positions on the cover plate body mold cavity 213 may enter the cover plate connection rib mold cavity 214 again, and then flows back again. In other words, when the material flows in the width direction of the cover plate connection rib mold cavity 214, the material flows back to the cover plate body mold cavity 213 from the cover plate connection rib mold cavity 214 for many times, which causes the solidification layer at the position where the cover plate connection rib mold cavity 214 is in communication with the cover plate body mold cavity 203 to be seriously damaged, which in turn results in severe flow liners generated at a position on the cover plate body 203 corresponding to the cover plate connection rib 204.

However, according to the present disclosure, in the plane parallel to the cover plate body mold cavity 213, the connection line between the projection of the center of the cover plate gate and the projection of the center of the cover plate connection rib mold cavity 214 is referred to as L 1', the width direction of the cover plate connection rib mold cavity 214 is referred to as L2', and the angle between the connection line L1' and width direction L2' ranges from 80° to 100°. Moreover, after flowing out of the cover plate gate, the material usually flows in a divergent form. In this way, it facilitates flow of the material in the thickness direction of the cover plate connection rib mold cavity 214, thereby assisting in reducing a number of times that the material flows back to the cover plate body mold cavity 213 from the cover plate connection rib mold cavity 214. Thus, it is possible to facilitate at least reducing the flow liners on the cover plate body 203 to some extent. Therefore, yield of the cover plate body 20 can be at least improved to some extent, thereby lowering the cost and satisfying the user's usage demands.

With the knob cover plate mold 2 for forming the knob cover plate 20 of the laundry treating device according to the embodiments of the present disclosure, in the plane parallel to the cover plate body mold cavity 213, the connection line between the projection of the center of the cover plate gate and the projection of the center of the cover plate connection rib mold cavity 214 is referred to as L1 ', the width direction of the cover plate connection rib mold cavity 214 is referred to as L2', and the angle between the connection line L1' and width direction L2' ranges from 80° to 100°. Moreover, after flowing out of the cover plate gate, the material usually flows in the divergent form. In this way, it facilitates the flow of the material in the thickness direction of the cover plate connection rib mold cavity 214, thereby assisting in reducing the number of times that the material flows back to the cover plate body mold cavity 213 from the cover plate connection rib mold cavity 214. Thus, it is possible to facilitate at least reducing the flow liners on the cover plate body 203 to some extent. Therefore, yield of the cover plate body 203 can be at least improved to some extent, thereby lowering the cost and satisfying the user's usage demands.

With the knob cover plate 20 of the laundry treating device according to the embodiments of the present disclosure, in the plane parallel to the cover plate body 203, the connection line between the projection of the center of the cover plate gate forming region 2031 and the projection of the center of the cover plate connection rib 204 is referred to as L1, the width direction of the cover plate connection rib 204 is referred to as L2, and the angle between the connection line L1 and width direction L2 ranges from 80° to 100°. Thus, it is possible to facilitate at least reducing the flow liners on the cover plate body 203 to some extent. Therefore, the yield of the cover plate body 203 can be at least improved to some extent, thereby lowering the cost and satisfying the user's usage demands.

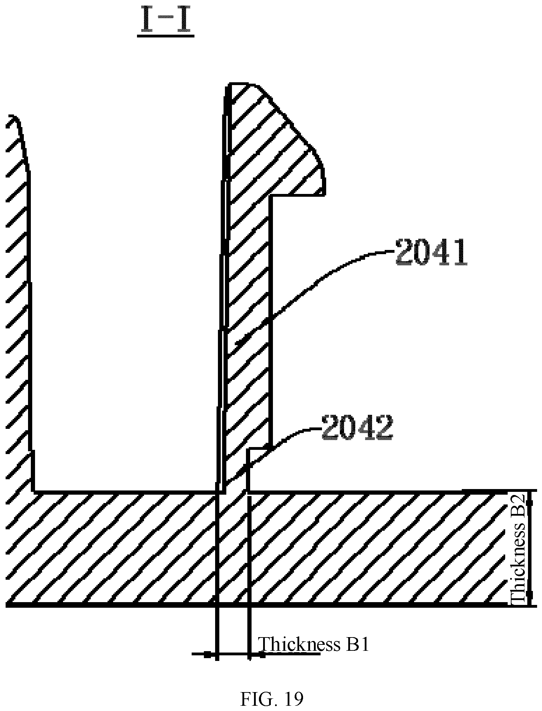

In some embodiments of the present disclosure, as illustrated in FIG. 19, the cover plate connection rib 204 includes a cover plate connection rib body 2041 and a cover plate connection portion 2042. The cover plate connection portion 2042 is connected between the cover plate connection rib body 2041 and the cover plate body 203. Correspondingly, in the knob cover plate mold 2, as illustrated in FIG. 21 and FIG. 22, the cover plate connection rib mold cavity 214 includes a cover plate connection rib body mold cavity 2141 and a cover plate connection portion mold cavity 2142. The cover plate connection portion mold cavity 2142 is communicated between the cover plate connection rib body mold cavity 2141 and the cover plate body mold cavity 213. As a result, the structure is simple.

Optionally, as illustrated in FIG. 19, a thickness of the cover plate connection portion 2042 is smaller than a thickness of an end of the cover plate connection rib body 2041 connected to the cover plate connection portion 2042. Correspondingly, in the knob cover plate mold 2, as illustrated in FIG. 21, a thickness of the cover plate connection portion mold cavity 2142 is smaller than a thickness of an end, in communication with the cover plate connection portion mold cavity 2142, of the cover plate connection rib body mold cavity 2141. During the injection molding, since no cover plate gate is formed at the wall surface of the cover plate connection rib mold cavity 214, when flowing in the mold cavity, the material first flows through the cover plate body mold cavity 213, and then flows to the cover plate connection rib mold cavity 214 through the cover plate body mold cavity 213. Moreover, the thickness of the cover plate connection portion mold cavity 2142 is smaller than the thickness of the cover plate connection rib body mold cavity 2141, it is thus possible to reduce the flow area and the number of times of backflow of the material to the cover plate body mold cavity 213 from the cover plate connection rib mold cavity 214. Therefore, it is possible to further prevent the unstable flow field from being formed at the position where the cover plate connection rib mold cavity 214 is in communication with the cover plate body mold cavity 213, to further avoid the material converging due to the backflow of the material of the cover plate connection rib mold cavity 2141 to the cover plate body mold cavity 213 through the cover plate connection portion mold cavity 2142. Therefore, it is possible to prevent the flow liners from being generated at the connection between the cover plate body 203 and the cover plate connection rib 204.

Optionally, the thickness of the cover plate connection portion 2042 is smaller than the thickness of the cover plate connection rib body 2041. Therefore, it is possible to reduce the flow area and the number of times of the backflow of the material to the cover plate body mold cavity 213 from the cover plate connection rib mold cavity 214. As a result, it is possible to further prevent the unstable flow field from being formed at the position where the cover plate connection rib mold cavity 214 is in communication with the cover plate body mold cavity 213, to further avoid the material converging due to the backflow of the material of the cover plate connection rib mold cavity 2141 to the cover plate body mold cavity 213 through the cover plate connection portion mold cavity 2142. Therefore, it is possible to prevent the flow liners from being generated at the connection between the cover plate body 203 and the cover plate connection rib 204.

Optionally, a part of the cover plate connection portion 2042 facing towards the cover plate body 203 is recessed away from the cover plate body 203 to form a cover plate through hole. The cover plate through hole penetrates the cover plate connection portion 2042 in a thickness direction of the cover plate connection portion 2042. Correspondingly, for the knob cover plate mold 2, a cover plate post structure is provided at the cover plate connection portion mold cavity 2142, and is configured to shape the cover plate through hole. The cover plate post structure extends across the cover plate connection portion mold cavity 2142 in a thickness direction of the cover plate connection portion mold cavity 2142. In this way, since no cover plate gate is formed at the cover plate connection rib mold cavity 214, when flowing in the mold cavity of the knob cover plate mold 2, the material first flows through the cover plate body mold cavity 213, and then flows to the cover plate connection rib mold cavity 214 through the cover plate body mold cavity 213. Moreover, by providing the cover plate post structure, the cover plate post structure can reduce the flow area of backflow of the material to the cover plate body mold cavity 213 from the cover plate connection rib mold cavity 214. As a result, it is possible to further prevent the unstable flow field from being formed at the position where the cover plate connection rib mold cavity 214 is in communication with the cover plate body mold cavity 213, to further avoid the material converging due to the backflow of the material of the cover plate connection rib mold cavity 2141 to the cover plate body mold cavity 213 through the cover plate connection portion mold cavity 2142. Therefore, it is possible to prevent the flow liners from being generated at the connection between the cover plate body 203 and the cover plate connection rib 204.

In some embodiments of the present disclosure, the thickness of the cover plate connection portion 2042 ranges from 0.15 mm to 0.6 mm. Correspondingly, the thickness of the cover plate connection portion mold cavity 2142 ranges from 0.15 mm to 0.6 mm. For example, the thickness is 0.16 mm, 0.17 mm, 0.18 mm, 0.19 mm, 0.2 mm, 0.21 mm, 0.22 mm, 0.23 mm, 0.24 mm, 0.25 mm, 0.26 mm, 0.27 mm, 0.28mm, 0.29 mm, 0.3 mm, 0.31 mm, 0.32 mm, 0.32 mm, 0.33 mm, 0.34 mm, 0.35 mm, 0.36 mm, 0.37 mm, 0.38 mm, 0.39 mm, 0.4 mm, 0.41 mm, 0.42 mm, 0.43 mm, 0.44 mm, 0.45 mm, 0.46 mm, 0.47 mm, 0.48 mm, 0.49 mm, 0.5 mm, 0.51 mm, 0.52 mm, 0.53 mm, 0.54 mm, 0.55 mm, 0.56 mm, 0.57 mm, 0.58 mm, or 0.59 mm. Therefore, structural strength of the cover plate connection portion 2042 can be ensured. Further, it is also possible to prevent the unstable flow field from being formed at the position where the cover plate connection rib mold cavity 214 is in communication with the cover plate body mold cavity 213 due to too large wall thickness of the cover plate connection portion mold cavity 2142. As a result, it is possible to further avoid the material converging due to the backflow of the material of the cover plate connection rib mold cavity 2141 to the cover plate body mold cavity 213 through the cover plate connection portion mold cavity 2142. Therefore, it is possible to prevent the flow liners from being generated at the connection between the cover plate body 203 and the cover plate connection rib 204.

In some embodiments of the present disclosure, the thickness of the cover plate body 203 ranges from 1.5 mm to 3.5 mm. Correspondingly, the thickness of the cover plate body mold cavity 213 ranges from 1.5 mm to 3.5 mm. For example, the thickness is 1.6 mm, 1.7 mm, 1.8 mm, 1.9 mm, 2.0 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, or 3.5 mm. Therefore, structural strength of the cover plate body 203 can be ensured.

In some embodiments of the present disclosure, in a case where the thickness of the cover plate body 203 is not smaller than 2.5 mm, the thickness of the cover plate connection portion 2042 ranges from 0.3 mm to 0.6 mm. Correspondingly, in a case where the thickness of the cover plate body mold cavity 213 is not smaller than 2.5 mm, the thickness of the cover plate connection portion mold cavity 2142 ranges from 0.3 mm to 0.6 mm. in addition, in a case where the thickness of the cover plate body 203 is smaller than 2.5 mm, the thickness of the cover plate connection portion 2042 ranges from 0.15 mm to 0.3 mm. Correspondingly, in a case where the thickness of the cover plate body mold cavity 213 is smaller than 2.5 mm, the thickness of the cover plate connection portion mold cavity 2142 ranges from 0.15 mm to 0.3 mm. Therefore, by combing the thickness of the cover plate body 203 with the thickness of the cover plate connection portion 2042, it is possible to at least prevent the unstable flow field from being formed at the position where the cover plate connection rib mold cavity 214 is in communication with the cover plate body mold cavity 213 due to the too large wall thickness of the cover plate connection portion mold cavity 2142. Therefore, it is possible to avoid the material converging due to the backflow of the material of the cover plate connection rib mold cavity 2141 to the cover plate body mold cavity 213 through the cover plate connection portion mold cavity 2142. Therefore, it is possible to prevent the flow liners from being generated at the connection between the cover plate body 203 and the cover plate connection rib 204.

In some embodiments of the present disclosure, the thickness of the cover plate connection portion 2042 is smaller than the thickness of the cover plate body 203. In the knob cover plate mold 2, the thickness of the cover plate connection portion mold cavity 2142 is smaller than the thickness of the cover plate body mold cavity 213. Therefore, it is beneficial for the material to preferentially fill the cover plate body mold cavity 213, thereby reducing the flow liners on the cover plate body 203.

In some embodiments of the present disclosure, a plurality of cover plate connection ribs 204 is provided and arranged at intervals in the peripheral direction of the cover plate body. For example, as illustrated in FIG. 17, three cover plate connection ribs 204 are provided.

In some embodiments of the present disclosure, the plurality of cover plate connection ribs 204 is arranged uniformly at intervals in the peripheral direction of the cover plate body. Optionally, in the plane parallel to the cover plate body 203, projections of the plurality of cover plate connection ribs 204 are located on a circle centered on the center of the other side surface of the cover plate body 203. Therefore, the structure is simple.

In some embodiments of the present disclosure, the cover plate body 203 has a constant thickness. Therefore, the structure is simple, and processing and manufacturing of the knob cover plate mold are facilitated.

A knob of a laundry treating device according to the embodiment of the present disclosure includes a knob body and the knob cover plate 20. An engagement hole is disposed on the knob body. The cover plate connection rib 204 is configured as an engagement hook engaged into the engagement hole.

With the knob of the laundry treating device according to the embodiments of the present disclosure, by providing the knob cover plate 20 of the laundry treating device as describe above, in the plane parallel to the cover plate body 203, the connection line between the projection of the center of the cover plate gate forming region 2031 and the projection of the center of the cover plate connection rib 204 is referred to as L1, the width direction of the cover plate connection rib 204 is referred to as L2, and the angle between the connection line L1 and width direction L2 ranges from 80° to 100°. Thus, it is possible to facilitate at least reducing the flow liners on the cover plate body 203 to some extent. Therefore, the yield of the cover plate body 203 can be at least improved to some extent, thereby lowering the cost and satisfying the user's usage demands.

In some embodiments of the present disclosure, the knob body is a spray-free piece including a resin matrix and metal particles distributed in the resin matrix.

The knob body is an integral injection-molding piece. As a result, a structure of the integral piece not only can ensure structural and performance stability of the knob body, but also leads to convenient forming and simple manufacturing. Moreover, redundant assembly parts and connection steps can be removed, and connection reliability of the knob body can be ensured. Furthermore, the integrally formed structure is high in overall strength and stability, is more convenient to be assembled, and is longer in service life.

A laundry treating device according to embodiments of the present disclosure includes the knob as described above.

With the laundry treating device according to the embodiments of the present disclosure, by providing the knob and the knob cover plate 20 of the laundry treating device, in the plane parallel to the cover plate body 203, the connection line between the projection of the center of the cover plate gate forming region 2031 and the projection of the center of the cover plate connection rib 204 is referred to as L1, the width direction of the cover plate connection rib 204 is referred to as L2, and the angle between connection line L1 and width direction L2 ranges from 80° to 100°. Thus, it is possible to facilitate at least reducing the flow liners on the cover plate body 203 to some extent. Therefore, the yield of the cover plate body 203 can be at least improved to some extent, thereby lowering the cost and satisfying the user's usage demands.

A description will be provided below taking a worktop of a laundry treating device as the appearance part as an example.

A worktop 50 used in the laundry treating device such as a top-load washing machine is an important component of the top-load washing machine, and has dual requirements of function and appearance.

Generally, a manufacturing process for the worktop 50 is mostly implemented through an injection molding and spraying process, and the sprayed worktop 50 has a gorgeous metal appearance effect. However, the spraying process has the defects such as serious pollution, high cost, low qualified rate, unrecyclable unqualified product, and the like, which seriously affects health of environment and production personnel, and does not conform to the green manufacturing concept. In order to overcome the defects in the spraying process, a spraying-free thermoplastic engineering material emerges, and the metal appearance effect of a product can be given by spraying-free injection molding. As a result, the spraying process can be replaced, thereby lowering production cost. Meanwhile, it is possible to avoid emission of pollutants during the spraying.

No matter whether the worktop 50 is manufactured by using a spraying-free material or through the injection molding and spraying process, for a material with poor fluidity, especially for a spraying-free material including metal particles, since there are the metal particles and other substances in the spraying-free material, uneven arrangement of the metal particles may be generated due to an obstruction to the material when flowing during the injection molding. As a result, the injection-molded product may occur light scattering under an irradiation of light, and flow liners thus are visually generated on the product, which results in a flow liner defect on the product. When the flow liners are generated on an appearance surface of the product, the flow liners not only lead to low qualified rate, but also cannot satisfy user's usage demands. A description will be provided below taking the spraying-free material including metal particles as an example. That is, the worktop 50 may be a spray-free piece including a resin matrix and metal particles distributed in the resin matrix. Optionally, the metal particles are aluminum, silver, or copper.

According to the embodiments of the present disclosure, a worktop 50 of a laundry treating device, a laundry treating device, and a worktop mold 5 for forming the worktop 50 will be described below. The worktop 50 is an integral injection-molding piece. As a result, a structure of the integral piece not only can ensure structural and performance stability of the worktop 50, but also leads to convenient forming and simple manufacturing. Moreover, redundant assembly parts and connection steps can be removed, and connection reliability of the worktop 50 can be ensured. Furthermore, the integrally formed structure is high in overall strength and stability, is more convenient to be assembled, and is longer in service life. Optionally, the laundry treating device may be a washing machine, clothes dryer, or a washing and drying integrated machine.

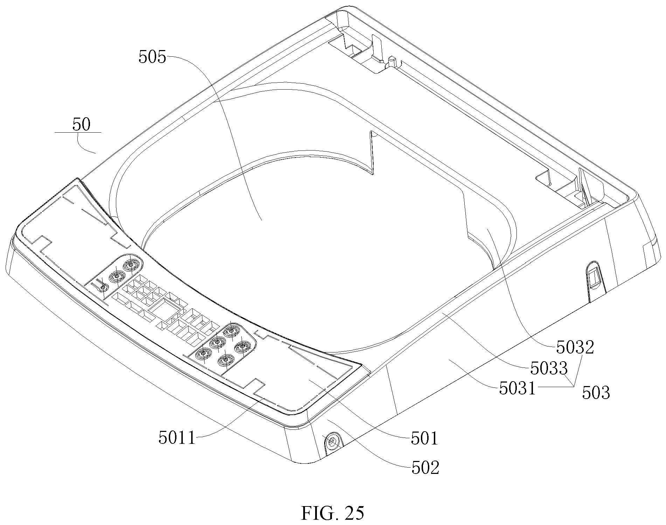

In some embodiments, as illustrated in FIG. 25, the worktop 50 of the laundry treating device has a laundry feeding port 505. When the worktop 50 is mounted in the laundry treating device, the laundry feeding port 505 is directly opposite to an opening of an inter tub of the laundry treating device. As a result, the laundry is conveniently placed into the inner tub or taken away from the inner tub.

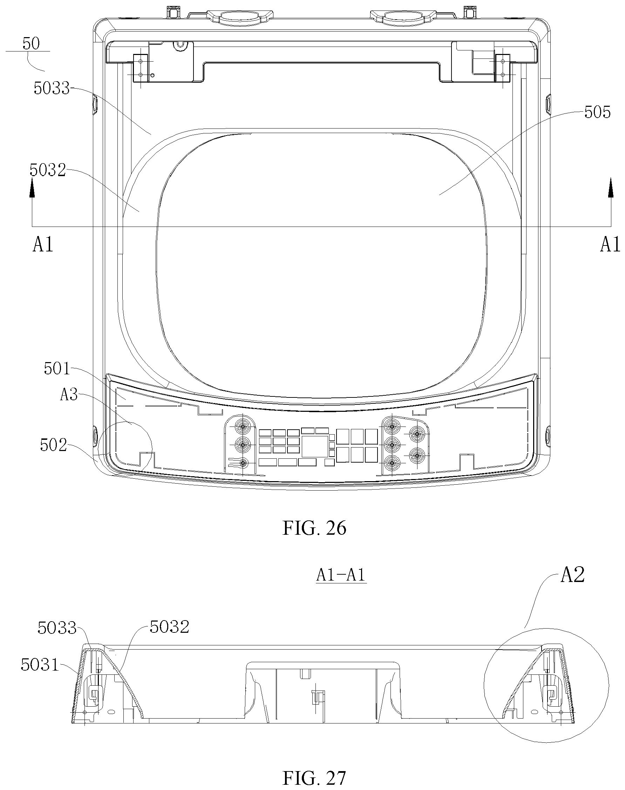

As illustrated in FIG. 25 and FIG. 26, according to the embodiments of the present disclosure, the worktop 50 of the laundry treating device includes a worktop connection plate 501 and a worktop side plate 502.

A surface of the worktop connection plate 501 is a non-appearance surface. That is, when the worktop 50 is applied in the laundry treating device, the surface of the worktop connection plate 501 is not exposed.

As illustrated in FIG. 25, FIG. 26, and FIG. 35g, the worktop side plate 502 extends in a peripheral direction of the worktop connection plate 501. An angle is formed between the worktop side plate 502 and the worktop connection plate 501. One end of the worktop side plate 502 in a width direction thereof is connected to an outer peripheral wall of the worktop connection plate 501. An end surface of the other end of the worktop side plate 502 in the width direction thereof has at least one worktop gate forming region 5021 adapted to correspond to a worktop gate of a worktop mold 5. It can be understood that for the end and the other end of the worktop side plate 102 in the width direction thereof, the end of the worktop side plate 502 in the width direction thereof is an end connected to the worktop connection plate 501, the other end of the worktop side plate 502 in the width direction thereof is an end away from the worktop connection plate 501, and the worktop gate forming region 5021 is formed at the end surface of the other end of the worktop side plate 502 in the width direction of the worktop side plate 502.

In some embodiments, after the worktop 50 is formed through injection molding by the worktop mold 5 and the worktop 50 is de-molded from the worktop mold, a part of a material at the worktop gate of the worktop mold 5 is left on the worktop 50 and is formed into a worktop gate forming portion. The worktop gate forming region 5021 of the worktop 50 is a region where the worktop gate forming portion is located. It can be understood that the worktop 50 may be further processed to cut away or partially cut away the worktop gate forming portion. In an example, the worktop gate forming portion of the worktop 50 may not be processed. That is, the worktop gate forming portion is remained on the worktop 50. The embodiment of the present disclosure is not limited in this regard, and the worktop gate forming portion may be provide as desired.

A side surface of the worktop side plate 502 facing away from the worktop connection plate 501 in a thickness direction of the worktop side plate 502 is referred to as an appearance surface. That is, an outer peripheral wall of the worktop side plate 502 is referred to as the appearance surface, and an inner peripheral wall of the worktop side plate 502 is referred to as the non-appearance surface. The end surface of the other end of the worktop side plate 502 in the width direction thereof, i.e., the end surface of the end away from the worktop connection plate 501, is referred to as the non-appearance surface. The appearance surface means that the surface is exposed when the worktop 50 is applied in the laundry treating device. The non-appearance surface means that the surface is not exposed when the worktop 50 is applied in the laundry treating device.

The worktop side plate 502 has a worktop constant wall thickness region 5024. The worktop constant wall thickness region 5024 extends across the worktop side plate 502 in the width direction of the worktop side plate 502. That is, the worktop constant wall thickness region 5024 extends to both ends of the worktop side plate 502 in the width direction of the worktop side plate 502, and has a constant wall thickness at any position.

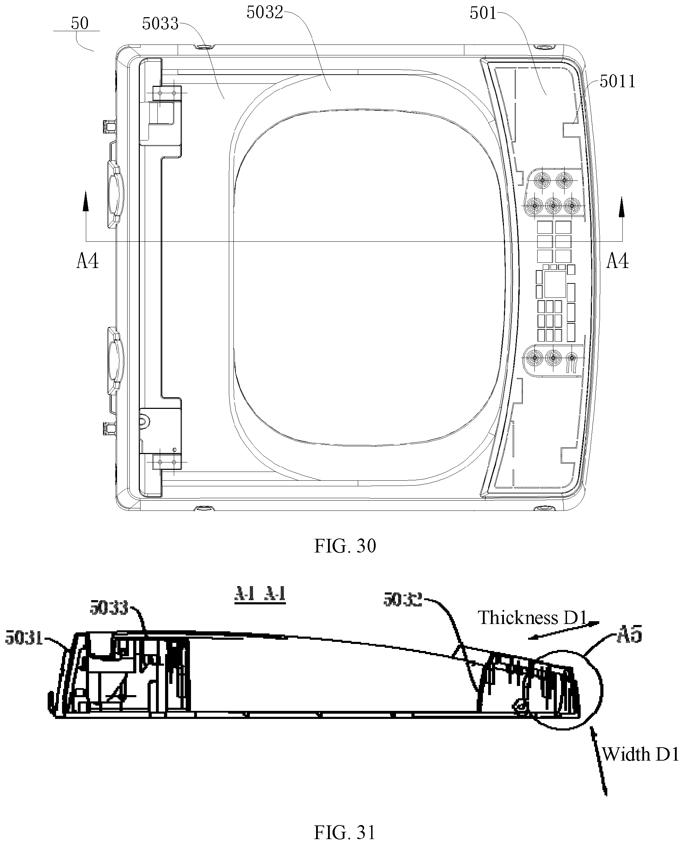

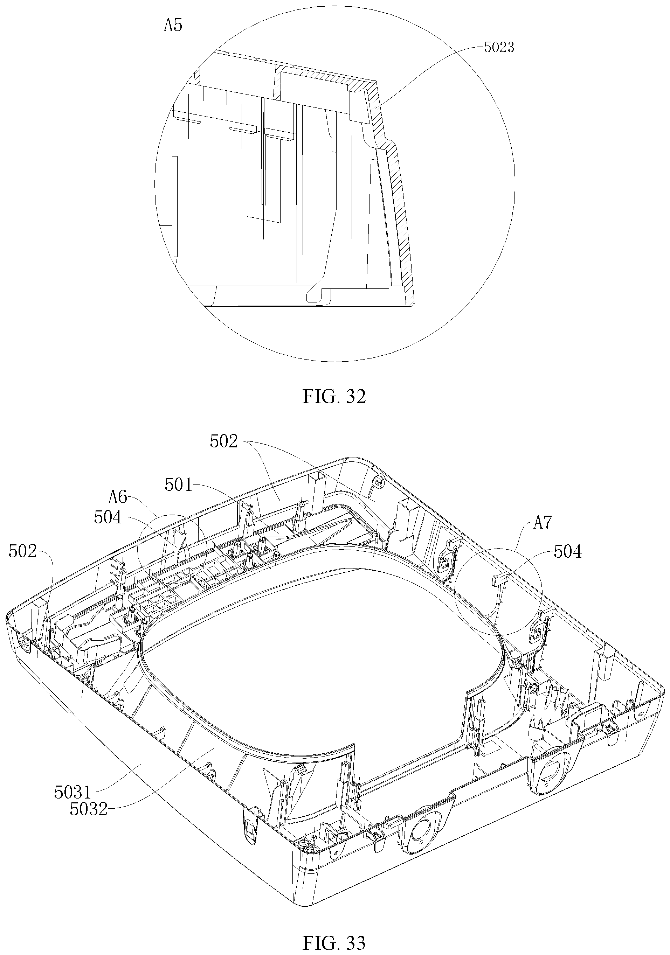

As illustrated in FIG. 31 and FIG. 32, the worktop gate forming region 5021 is formed at the worktop constant wall thickness region 5024. That is, the worktop gate forming region 5021 is located at the end of the worktop constant wall thickness region 5024 away from the worktop connection plate 501. Other region of the worktop side plate 502 rather than the worktop constant wall thickness region 5024 is a worktop variable wall thickness region 5023. A wall thickness of the worktop constant wall thickness region 5024 is not smaller than (i.e., is equal to or greater than) a maximum wall thickness of the worktop variable wall thickness region 5023. Further, an end of the worktop variable wall thickness region 5023 away from the worktop connection plate 501 has a minimum wall thickness. That is, in the width direction of the worktop side plate 502, the wall thickness of the end of the worktop variable wall thickness region 5023 away from the worktop connection plate 501 is minimum. In this way, it is possible to at least reduce flow liners on the worktop side plate 502 to some extent, to at least prevent the flow liners from being generated on an appearance surface of the worktop side plate 502 to some extent. Therefore, a qualified rate of the worktop side plate 502 can be at least improved to some extent, thereby lowering the cost and satisfying the user's usage demands.

In order to facilitate explaining the reason why the flow liners on the worktop side plate 502 are reduced, the worktop mold 5 for forming the worktop 50 according to the embodiments of the present disclosure will be described below, and the reason why the flow liners on the appearance surface of the worktop side plate 502 are reduced are illustrated in principle and in combination with a structure of the worktop mold 5.

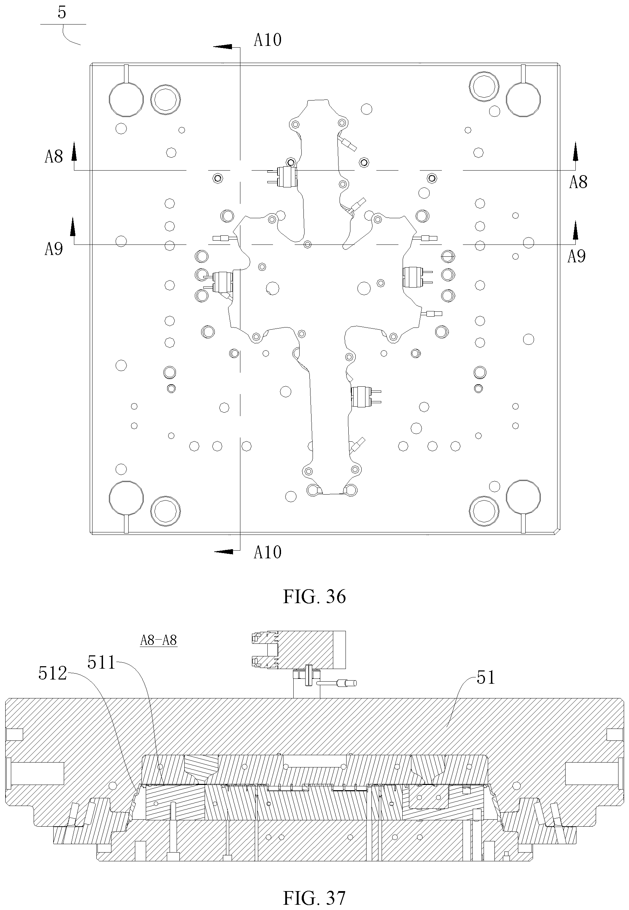

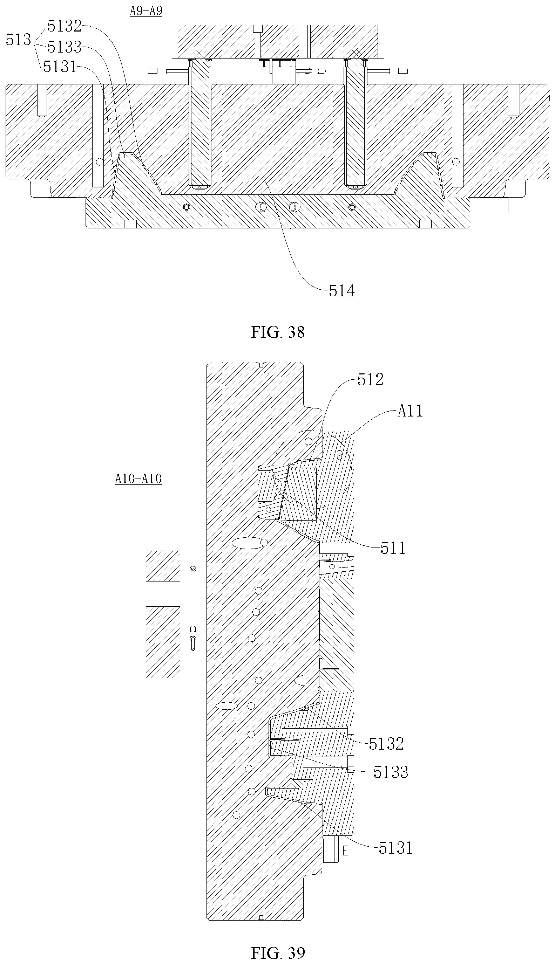

As illustrated in FIG. 36 and FIG. 38, according to the embodiments of the present disclosure, the worktop mold 5 for forming the worktop 50 includes a worktop mold core 51. The worktop mold core 51 has a worktop mold cavity. A column 514 for forming the laundry feeding port 505 is provided in the worktop mold cavity.

In some embodiments, as illustrated in FIG. 37, the worktop mold cavity includes a worktop side plate mold cavity 512 and a worktop connection plate mold cavity 511. The worktop side plate mold cavity 512 is configured to shape the worktop side plate 502, and the worktop connection plate mold cavity 511 is configured to shape the worktop connection plate 501.

The worktop side plate mold cavity 512 extends in a peripheral direction of the worktop connection plate mold cavity 511. An angle is formed between the worktop side plate mold cavity 512 and the worktop connection plate mold cavity 511. An end of the worktop side plate mold cavity 512 in a width direction thereof is in communication with an outer periphery of the worktop connection plate mold cavity 511. The worktop mold core 51 has a worktop gate located on a wall surface of the other end of the worktop side plate mold cavity 512 in the width direction of the worktop side plate mold cavity 512. A side wall surface of the worktop side plate mold cavity 512 in a thickness direction thereof is configured to shape an appearance surface of the worktop side plate 502. It can be understood that the end of the worktop side plate mold cavity 512 in the width direction thereof is an end in communication with the worktop connection plate mold cavity 511, and the other end of the worktop side plate mold cavity 512 in the width direction thereof is an end away from the worktop connection plate mold cavity 511.

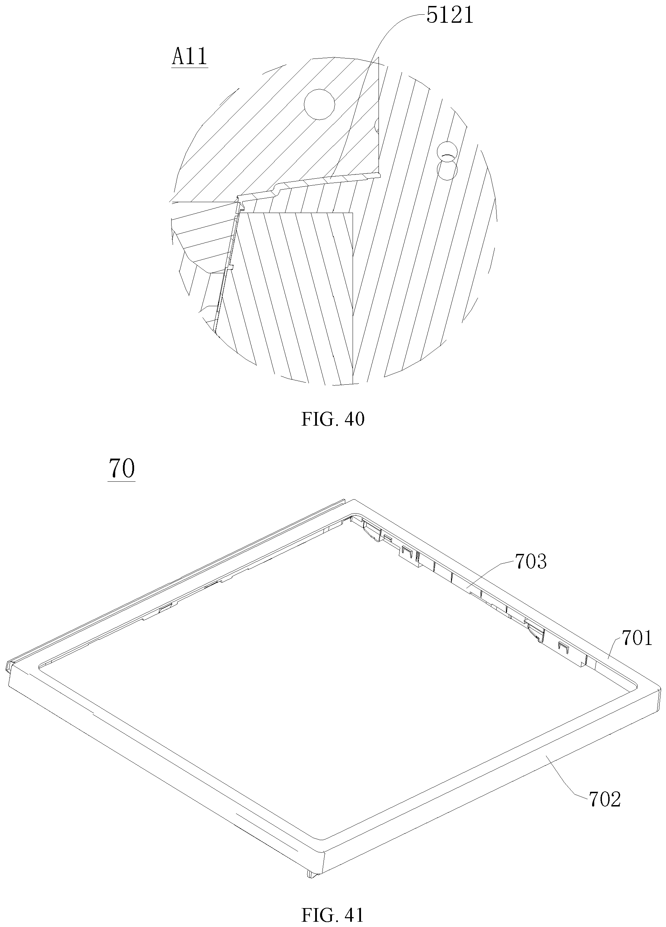

The worktop side plate mold cavity 512 has a worktop constant thickness region. The worktop gate is located at the worktop constant thickness region. The worktop constant thickness region extends across the worktop side plate mold cavity 512 in the width direction of the worktop side plate mold cavity 512. Other region of the worktop side plate mold cavity 512 rather than the worktop constant thickness region is a worktop variable thickness region 5121. As illustrated in FIG. 39 and FIG. 40, a thickness of the worktop constant thickness region is not smaller than (i.e., is equal to or greater than) a maximum thickness of the worktop variable thickness region 5121, and an end of the worktop variable thickness region 5121 away from the worktop connection plate mold cavity 511 has a minimum thickness. That is, in the width direction of the worktop side plate mold cavity 512, the other end of the worktop variable thickness region 5121 in a width direction thereof, i.e., an end away from the worktop connection plate mold cavity 511, has a minimum thickness.

In some embodiments, during the injection molding, when the material flows, after the hot melt material flows into the worktop mold cavity through the worktop gate, the hot melt material is brought into contact with a cold inner wall of the worktop mold cavity during its flowing. As a result, the material is quickly solidified on the inner wall of the worktop mold cavity to form a thin solidification layer. A quality of an appearance of a spray-free product depends on an arrangement of metal particles in the solidification layer, and the stable flow can allow for a uniform metal particle orientation to obtain a better appearance. According to the embodiments of the present disclosure, the worktop gate of the mold is located at the worktop constant thickness region, and the thickness of the worktop constant thickness region is not smaller than the maximum thickness of the worktop variable thickness region. In this way, when the material flows out of the gate of the worktop mold, the material can directly flow to the worktop constant thickness region and is full of worktop constant thickness region. Then, most of the material flows towards the worktop variable thickness region 5121 from two sides of the worktop constant thickness region along the worktop side plate mold cavity 512, respectively. Thus, it is possible to facilitate the material to be formed at the worktop side plate mold cavity 512 preferentially. Therefore, it is possible to at least reduce the flow liners at the worktop side plate mold cavity 512 to some extent, to prevent the flow liners from being generated on an appearance surface of the worktop side plate mold cavity 512. Therefore, the qualified rate of the product can be improved, thereby lowering the cost and satisfying the user's usage demands.

Moreover, since the end of the worktop variable thickness region 5121 away from the worktop connection plate mold cavity 511 has the minimum thickness, i.e., in the width direction of the worktop side plate mold cavity 512, a thickness of a part (referred to as a large thickness portion) of the worktop variable thickness region 5121 adjacent to the worktop connection plate mold cavity 511 and in direct communication with the minimum thickness portion of the worktop variable thickness region 5121 is necessarily greater than the thickness of the end of the worktop variable thickness region 5121 away from the worktop connection plate mold cavity 511. In this way, in the peripheral direction of the worktop connection plate mold cavity 511, when the material flows, it is easier for the material to flow at the large thickness portion at a higher flow velocity. As a result, the material has a forward protruding form and obvious front edge flow at the large thickness portion. Moreover, an actual flow direction of the material at each point on the front edge surface is an outward direction perpendicular to a tangent line of the front edge surface. Therefore, the flow direction at each point on the front edge surface is divergent, and does not intersect with each other, thereby avoiding occurrence of curling and rotation. As a result, it is possible to prevent the material at the large thickness portion and the material at the small thickness portion from being curled and rotated at the front edge to some extent, to further ensure the flow stability of the material. Therefore, the flow liners at positions on the worktop side plate 502 corresponding to the large thickness portion and the small thickness portion can be reduced. In addition, it is possible to at least improve the product yield to some extent and satisfy the user’s usage demands.

There are several variation relationships for the worktop variable wall thickness region 5023 of the worktop side plate 502, and these variation relationships will be described below.

For a first variation relationship, a wall thickness of the worktop variable wall thickness region 5023 gradually decreases in a direction from one end to the other end of the worktop side plate 502 in the width direction of the worktop side plate 502. Correspondingly, in the worktop mold 5, a thickness of the worktop variable thickness region 5121 gradually decreases in a direction from one end to the other end of the worktop side plate mold cavity 512 in the width direction of the worktop side plate mold cavity 512. In this way, in the peripheral direction of the worktop connection plate mold cavity 511, when the material flows in the worktop side plate mold cavity 512, depending on the thickness variation of the worktop variable thickness region 5121, it is easier for the material to flow at a position where the worktop variable thickness region 5121 has the large thickness with small flow resistance. As a result, a front edge surface of the material flow may be an inclined surface as illustrated in FIG. 12. Moreover, an actual flow direction of the material at each point on its front edge surface is an outward direction perpendicular to a tangent line of the front edge surface. Therefore, the flow direction at each point on the front edge surface is divergent and does not intersect with each other. As a result, curling and rotation of the material at its front edge can be avoided, and the material has more stable flow. In this manner, it is possible to further reduce the flow liners at the worktop side plate 502, to further prevent the flow liners from being generated on the appearance surface of the worktop side plate 502. Therefore, the qualified rate of the product can be improved, thereby lowering the cost and satisfying the user’s usage demands.

For a second variation relationship, the wall thickness of the worktop variable wall thickness region 5023 is first constant and then gradually decreases in the direction from one end to the other end of the worktop side plate 502 in the width direction of the worktop side plate 502. Correspondingly, in the worktop mold 5, the thickness of the worktop variable thickness region 5121 is first constant and then gradually decreases in the direction from one end to the other end of the worktop side plate mold cavity 512 in the width direction of the worktop side plate mold cavity 512. In this way, in the peripheral direction of the worktop connection plate mold cavity 511, when the material flows, depending on the thickness variation of the worktop variable thickness region 5121, it is easier for the material to flow at a position where the worktop variable thickness region 5121 has the large thickness with small flow resistance. As a result, as illustrated in FIG. 14, the front edge surface of the material flow may include a surface substantially parallel to the width direction of the worktop side plate mold cavity 512 at a same thickness and an inclined surface towards an upstream of the material flow at a gradually decreasing thickness position. Moreover, the actual flow direction of the material at each point on its front edge surface is the outward direction perpendicular to the tangent line of the front edge surface. Therefore, the flow direction at each point on the front edge surface is divergent and does not intersect with each other. As a result, the curling and rotation of the material at the front edge can be avoided, and the material has more stable flow. In this manner, it is possible to further reduce the flow liners at the worktop side plate 502, to further prevent the flow liners from being generated on the appearance surface of the worktop side plate 502. Therefore, the qualified rate of the product can be improved, thereby lowering the cost and satisfying the user’s usage demands.

For a third variation relationship, the wall thickness of the worktop side plate 502 gradually increases and then gradually decreases in the direction from one end to the other end of the worktop side plate 502 in the width direction of the worktop side plate 502. Correspondingly, in the worktop mold 53, the thickness of the worktop side plate mold cavity 512 gradually increases and then gradually decreases in the direction from one end to the other end of the worktop side plate mold cavity 512 in the width direction of the worktop side plate mold cavity 512. In this way, in the peripheral direction of the worktop connection plate mold cavity 511, when the material flows, depending on the thickness variation of the worktop variable thickness region 5121, it is easier for the material to flow at a position where the worktop variable thickness region 5121 has the large thickness with small flow resistance. As a result, the front edge surface of the material flow may have a forwarding protruding form as illustrated in FIG. 13. Moreover, the actual flow direction of the material at each point on its front edge surface is the outward direction perpendicular to the tangent line of the front edge surface. Therefore, the flow direction at each point on the front edge surface is divergent and does not intersect with each other. As a result, the curling and rotation of the material at the front edge can be avoided, and the material has more stable flow. In this manner, it is possible to further reduce the flow liners at the worktop side plate 502, to further prevent the flow liners from being generated on the appearance surface of the worktop side plate 502. Therefore, the qualified rate of the product can be improved, thereby lowering the cost and satisfying the user's usage demands.

For a fourth variation relationship, in the direction from one end to the other end of the worktop side plate 502 in the width direction of the worktop side plate 502, the wall thickness of the worktop variable wall thickness region 5023 first gradually increases, then remains constant, and then gradually decreases. Correspondingly, in the worktop mold 5, in the direction from one end to the other end of the worktop side plate mold cavity 512 in the width direction of the worktop side plate mold cavity 512, the thickness of the worktop variable thickness region 5121 first gradually increases, then remains constant, and then gradually decreases. In this way, in the peripheral direction of the worktop connection plate mold cavity 511, when the material flows, depending on the thickness variation of the worktop variable thickness region 5121, it is easier for the material to flow at a position where the worktop variable thickness region 5121 has the large thickness with small flow resistance. As a result, the front edge surface of the material flow may have a forward protruding form as illustrated in FIG. 15. As a result, the curling and rotation of the material at its front edge can be avoided, and the material has more stable flow. In this manner, it is possible to further reduce the flow liners at the worktop side plate 502, to further prevent the flow liners from being generated on the appearance surface of the worktop side plate 502. Therefore, the qualified rate of the product can be improved, thereby lowering the cost and satisfying the user's usage demands.

Therefore, compared with a recessed front edge surface illustrated in FIG. 16 in the related art, according to the above embodiments of the present disclosure, it is more conducive to the reduction of the flow liners on the worktop side plate 502.

For explanation, provided below is that the larger the wall thickness is, the faster a flow velocity of the material is.

When the material is injected into the worktop mold 5 under a predetermined condition, a temperature of the material is sharply decreased due to contact with a cold wall surface of the worktop mold cavity and generates the solidification layer. In addition, a flow area of the worktop mold cavity is reduced as a thickness of the solidification layer increases. As a result, the thickness of the solidification layer has an important influence on the flow resistance. A relationship between the fluidity s and the thickness h of the worktop 50 mold cavity satisfies formula I.

$$s = \int_0^k \frac{z^2}{\eta} z = \frac{h^3}{3\eta_{rep}}$$

（Formula I）

where $\eta_{rep}$ represents viscosity of the material.

According to the fluidity formula, the fluidity s is proportional to a cube of the thickness h. For example, when the thickness is reduced by fifty percent, the fluidity will be reduced to one eighth, which means that the flow resistance is increased to eight times. As a result, the thicker the mold cavity, the lower the flow resistance, the better the fluidity, and the faster the flow velocity.

With the worktop mold 5 for forming the worktop 50 according to the embodiments of the present disclosure, the worktop gate is located at the worktop constant thickness region, and the thickness of the worktop constant thickness region is not smaller than the maximum thickness of the worktop variable thickness region 5121. Thus, it is possible to facilitate ensuring the stability of the flow of material, thereby reducing the flow liners at the worktop side plate 502. Therefore, it is possible to at least improve the product yield to some extent, thereby satisfying the user's usage demands.

With the worktop 50 of the laundry treating device according to the embodiments of the present disclosure, the worktop gate forming region 5021 is formed on the worktop constant wall thickness region 5024, and the wall thickness of the worktop constant wall thickness region 5024 is not smaller than the maximum wall thickness of the worktop variable wall thickness region 5023. Thus, it is beneficial to reduce the flow liners at the worktop side plate 502. Therefore, the product yield can be at least improved to some extent, thereby satisfying the user's usage demands.

In some embodiments of the present disclosure, the maximum wall thickness of the worktop variable wall thickness region 5023 ranges from 2.5 mm to 3.5 mm, i.e., in the worktop mold 5, the maximum thickness of the worktop variable thickness region 5121 ranges from 2.5 mm to 3.5 mm. Therefore, it is beneficial to ensure fluidity of the material on the worktop variable thickness region 5121 to ensure that the worktop side plate 502 is filled with the material. As a result, it is possible to at least reduce the flow liners at the worktop side plate 502 to some extent, thereby improving the product yield. Moreover, structural strength of the worktop side plate 502 can be ensured. Meanwhile, it is also possible to ensure the structural strength of the worktop side plate 502 and avoid heavy product and material wasting due to too large wall thickness of the worktop side plate 502.

For example, the maximum wall thickness of the worktop variable wall thickness region 5023 is 2.6 mm, 2.7 mm, 2.8 mm, 2.9 mm, 3.0 mm, 3.1 mm, 3.2 mm, 3.3 mm, or 3.4 mm.

In some embodiments of the present disclosure, a minimum wall thickness of the worktop variable wall thickness region 5023 ranges from 1.5 mm to 2.5 mm, i.e., in the worktop mold 5, a minimum thickness of the worktop variable thickness region 5121 ranges from 1.5 mm to 2.5 mm. Therefore, it is beneficial to ensure the fluidity of the material on the worktop variable thickness region 5121, to ensure that the worktop side plate 502 is filled with the material. As a result, it is possible to at least reduce the flow liners at the worktop side plate 502 to some extent, thereby improving the product yield. Moreover, the structural strength of the worktop side plate 502 can be ensured.

For example, the minimum wall thickness of the worktop variable wall thickness region 5023 is 1.6 mm, 1.7 mm, 1.8 mm, 1.9 mm, 2.0 mm, 2.1 mm, 2.2 mm, 2.3 mm, or 2.4 mm.

In some examples, the wall thickness of the worktop variable wall thickness region 5023 gradually decreases from 2.8mm to 1.6mm in the direction from one end to the other end of the worktop side plate 502 in the width direction of the worktop side plate 502.

In some embodiments of the present disclosure, a wall thickness of the end of the worktop connection plate 501 connected to the worktop side plate 502 is not greater than a wall thickness of the end of the worktop side plate 502 in the width direction of the worktop side plate 502. Correspondingly, in the worktop mold 5, a thickness of an end, in communication with the worktop side plate mold cavity 512, of the worktop connection plate mold cavity 511 is not greater than a thickness of the end of the worktop side plate mold cavity 512 in the width direction of the worktop side plate mold cavity 512. Therefore, more materials can flow directly into the worktop side plate mold cavity 512 easily, to further ensure the stable flow of the material, and reduce the obstruction to the material flow, thereby reducing the flow liners at the worktop side plate 502.

In some embodiments of the present disclosure, the wall thickness of the end of the worktop connection plate 501 connected to the worktop side plate 502 is smaller than the wall thickness of the end of the worktop side plate 502 in the width direction of the worktop side plate 502. Correspondingly, in the worktop mold 5, the thickness of the end, in communication with the worktop side plate mold cavity 512, of the worktop connection plate mold cavity 511 is smaller than the thickness of the end of the worktop side plate mold cavity 512 in the width direction of the worktop side plate mold cavity 512. Therefore, more materials can flow directly into the worktop side plate mold cavity 512 easily, to further ensure the stable flow of the material and reduce the obstruction to the material flow, thereby reducing the flow liners at the worktop side plate 502.

In some embodiments of the present disclosure, a wall thickness of the worktop connection plate 501 is smaller than a wall thickness of an end of the worktop side plate 502 connected to the worktop connection plate 501. Correspondingly, in the worktop mold 5, a thickness of the worktop connection plate mold cavity 511 is smaller than a thickness of an end, in communication with the worktop connection plate mold cavity 511, of the worktop side plate mold cavity 512. Therefore, more materials can flow directly into the worktop side plate mold cavity 512 easily, to further ensure the stable flow of the material and reduce the obstruction to the material flow, thereby reducing the flow liners at the worktop side plate 502.

In some embodiments of the present disclosure, the wall thickness of the worktop connection plate 501 is smaller than the wall thickness of an end of the worktop side plate 502. That is, the wall thickness of the worktop connection plate 501 is smaller than a minimum wall thickness of the worktop side plate 502. Therefore, more materials can flow directly into the worktop side plate mold cavity 512 easily, to further ensure the stable flow of the material and reduce the obstruction to the material flow, thereby reducing the flow liners at the worktop side plate 502.

In some embodiments of the present disclosure, the wall thickness of the worktop connection plate 501 ranges from 0.8 mm to 2.2 mm. For example, the wall thickness of the worktop connection plate 501 is 0.9 mm, 1.0 mm, or 1.1 mm.

In the worktop mold 5, the thickness of the worktop connection plate mold cavity 511 ranges from 0.8 mm to 2.2 mm. For example, the thickness of the worktop connection plate mold cavity 511 is 0.9 mm or 1.0 mm. Therefore, more materials can preferentially flow and is formed in the worktop side plate mold cavity 512, thereby improving appearance attractiveness of the worktop side plate 502.

In some embodiments of the present disclosure, the worktop 50 includes a feeding table 503. The feeding table 503 is connected to the outer peripheral wall of the worktop connection plate 501. The worktop side plate 502 and the feeding table 503 are arranged in the peripheral direction of the worktop connection plate 501. Two ends of the worktop side plate 502 in the peripheral direction of the worktop connection plate 501 are connected to two corresponding ends of the feeding table 503 in the peripheral direction of the worktop connection plate 501. The feeding table 503 has the above laundry feeding port 505. Each of an inner peripheral wall of the laundry feeding port 505, an outer peripheral surface of the feeding table 503, and a top surface of the feeding table 503 is an appearance surface. Therefore, the structure is simple. Further, by providing the laundry feeding port 505, it is possible for the laundry to be conveniently placed into an inner tub or are taken away from the inner tub.

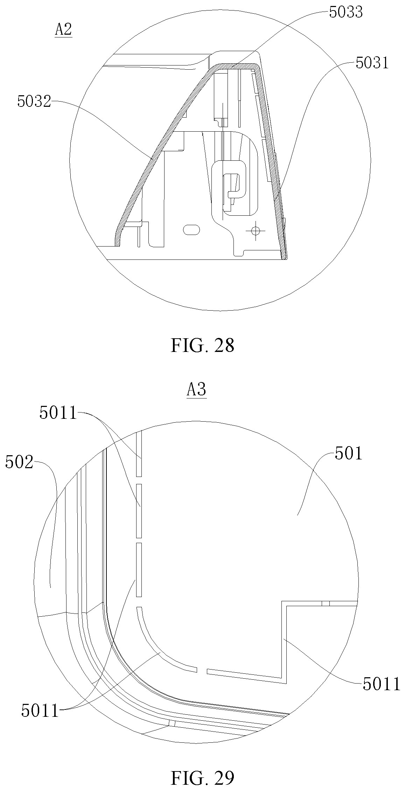

In some embodiments of the present disclosure, as illustrated in FIG. 29, a plurality of worktop blocking holes 5011 is formed on the worktop connection plate 501 and arranged at intervals. The plurality of worktop blocking holes 5011 penetrates the worktop connection plate 501 in a thickness direction of the worktop connection plate 501. The worktop connection plate 501 has no worktop gate forming region 5021 adapted to correspond to the worktop gate of the worktop mold 5. Some of the plurality of worktop blocking holes 5011 are formed adjacent to the worktop side plate 502 (for example, a minimum distance between the worktop blocking hole 5011 adjacent to the worktop side plate 502 and the worktop side plate 502 is not greater than 20 mm, and preferably is 10 mm, 5 mm, or 0 mm), and the remaining of the plurality of worktop blocking holes 5011 are formed adjacent to the feeding table 503 (for example, a minimum distance between the worktop blocking hole 5011 adjacent to the feeding table 503 and the feeding table 503 is not greater than 20 mm, preferably is 10 mm, 5 mm, or 0 mm). For example, the plurality of worktable blocking holes 5011 is arranged at intervals in a peripheral direction of the worktable connection plate 501.

Correspondingly, as illustrated in FIG. 38, the worktop mold cavity includes a feeding table mold cavity 513. The feeding table mold cavity 513 is in communication with the outer periphery of the worktop connection plate mold cavity 511. The feeding table mold cavity 513 and the worktop side plate mold cavity 512 are arranged in the peripheral direction of the worktop connection plate mold cavity 511. Two ends, in the peripheral direction of the worktop connection plate mold cavity 511, of the worktop side plate mold cavity 512 are both in communication with the feeding table mold cavity 513. A column 514 for forming the laundry feeding port 505 is arranged in the feeding table mold cavity 513. The worktop mold core 51 has no worktop gate located at the worktop connection plate mold cavity 511. A worktop post structure for forming the worktop blocking hole 5011 is provided in the worktop connection plate mold cavity 511. The worktop 50 post structure extends across the worktop connection plate mold cavity 511 in a thickness direction of the worktop connection plate mold cavity 511. Some of a plurality of worktop 50 post structures are arranged adjacent to the worktop side plate mold cavity 512 (for example, a minimum distance between the worktop 50 post structure adjacent to the worktop side plate mold cavity 512 and the worktop side plate mold cavity 512 is not greater than 20 mm, preferably is 10 mm, 5 mm, or 0 mm), and the remaining of the plurality of worktop 50 post structures are arranged adjacent to the feeding table mold cavity 513 (for example, a minimum distance between the worktop 50 post structure adjacent to the feeding table mold cavity 513 and the feeding table mold cavity 513 is not greater than 20 mm, preferably is 10 mm, 5 mm, or 0 mm).

In the worktop mold 5, the worktop gate is located at a wall surface of the worktop side plate mold cavity 512 away from the worktop connection plate mold cavity 511. In this way, when flowing out of the worktop gate, the material first flows through the worktop side plate mold cavity 512, and then flows to the worktop connection plate mold cavity 511 and the feeding table mold cavity 513. On the one hand, the plurality of worktop post structures arranged adjacent to the worktop side plate mold cavity 512 can block a flow of the material to the worktop connection plate mold cavity 511, and more materials can be preferentially formed in the worktop side plate mold cavity 512. On the other hand, the plurality of worktop post structures can block the material located in the worktop connection plate mold cavity 511 from flowing back to the worktop side plate mold cavity 512, to prevent this material from converging, in the worktop side plate mold cavity 512, with the material originally located in the worktop side plate mold cavity 512. Therefore, it is possible to further prevent the flow liners from being generated on the worktop side plate 502.

Moreover, the material in the worktop side plate mold cavity 512 can further flow to the feeding table mold cavity 513. On the one hand, the plurality of worktop 50 post structures arranged adjacent to the feeding table mold cavity 513 can block the flow of the material to the worktop connection plate mold cavity 511, and more materials can be preferentially formed in the feeding table mold cavity 513. On the other hand, it is also possible to block the material located in the worktop connection plate mold cavity 511 from flowing back to the feeding table mold cavity 513, to prevent this material from converging, in the feeding table mold cavity 513, with the material originally located in the feeding table mold cavity 513. Therefore, it is possible to further prevent the flow liners from being generated on the feeding table 503.

In some embodiments of the present disclosure, as illustrated in FIG. 25 to FIG. 28, the feeding table 503 includes a U-shaped outer peripheral side plate 5031, an annular enclosing plate 5032, and a U-shaped top plate 5033. Two ends of the outer peripheral side plate 5031 in a peripheral direction thereof are connected to two ends of the worktop side plate 502 in the peripheral direction of the worktop connection plate 501 in one-to-one correspondence, respectively. The enclosing plate 5032 is located at an inner side of the outer peripheral side plate 5031. A part of an upper end of an outer peripheral wall of the enclosing plate 5032 is connected to the outer peripheral wall of the worktop connection plate 501. The laundry feeding port 503 is defined by the enclosing plate 5032. The top plate 5033 is connected between the remaining part of the upper end of the outer peripheral wall of the enclosing plate 5032 and an upper end of an inner peripheral wall of the outer peripheral side plate 5031. End surfaces of two ends of the top plate 5033 in the peripheral direction of the top plate 5033 are located at two radial sides of the enclosing plate 5032 and are connected to the worktop connection plate 501. Therefore, each of the inner peripheral wall of the enclosing plate 5032, the outer peripheral surface of the outer peripheral side plate 5031, and the top surface of the top plate 5033 is an appearance surface.

Correspondingly, in the worktop mold 5, the feeding table mold cavity 513 includes a U-shaped outer peripheral side plate mold cavity 5131, an annular enclosing plate mold cavity 5132, and a U-shaped top plate mold cavity 5133. Two ends of the outer peripheral side plate mold cavity 5131 in a peripheral direction thereof are in communication with two ends of the worktop side plate mold cavity 512 in the peripheral direction of the worktop connection plate mold cavity 511 in one-to-one correspondence, respectively. The enclosing plate mold cavity 5132 is located on an inner periphery of the outer peripheral side plate mold cavity 5131. A part of an outer periphery of an axial end of the enclosing plate mold cavity 5132 is in direct communication with the outer periphery of the worktop connection plate mold cavity 511. An outer peripheral wall of the column 514 severs as an inner peripheral wall of the enclosing plate mold cavity 5132. The top plate mold cavity 5133 is communicated between the remaining part of the outer periphery of the axial end of the enclosing plate mold cavity 5132 and an upper end of the inner periphery of the outer peripheral side plate mold cavity 5131. Two ends of the top plate mold cavity 5133 in a peripheral direction of the top plate mold cavity 5133 are located at two radial sides of the enclosing plate mold cavity 5132 and are both in communication with the worktop connection plate mold cavity 511.

In some embodiments of the present disclosure, in a direction from one end of the outer peripheral side plate 5031 connected to the top plate 5033 to the other end of the outer peripheral side plate 5031, i.e., in the width direction of the worktop side plate 502, an end of the outer peripheral side plate 5031 away from the top plate 5033 has a minimum wall thickness.

There are several wall thickness variation relationships for the outer peripheral side plate 5031, and these wall thickness variation relationships will be described below. In a first wall thickness variation relationship, in the direction from one end of the outer peripheral side plate 5031 connected to the top plate 5033 to the other end of the outer peripheral side plate 5031, a wall thickness of the outer peripheral side plate 5031 gradually decreases. In a second wall thickness variation relationship, in the direction from one end of the outer peripheral side plate 5031 connected to the top plate 5033 to the other end of the outer peripheral side plate 5031, the wall thickness of the outer peripheral side plate 5031 first remains constant and then gradually decreases. In a third wall thickness variation relationship, in the direction from one end of the outer peripheral side plate 5031 connected to the top plate 5033 to the other end of the outer peripheral side plate 5031, the wall thickness of the outer peripheral side plate 5031 gradually increases and then gradually decreases. In a fourth wall thickness variation relationship, in the direction from one end of the outer peripheral side plate 5031 connected to the top plate 5033 to the other end of the outer peripheral side plate 5031, the wall thickness of the outer peripheral side plate 5031 first gradually increases, then remains constant, and then gradually decreases. As a result, compared with the worktop connection plate 501, the outer peripheral side plate 5031 is preferentially formed, thus facilitating a final convergence of the material in the worktop connection plate mold cavity 511. Therefore, it is possible to avoid the convergence of the material on the outer peripheral side plate 5031, which in turn prevents the flow liners from being generated on the outer peripheral side plate 5031.

In some embodiments of the present disclosure, a maximum wall thickness of the outer peripheral side plate 5031 ranges from 2.5 mm to 3.5 mm, i.e., a maximum thickness of the outer peripheral side plate 5031 ranges from 2.5 mm to 3.5 mm. Therefore, it is beneficial to ensure fluidity of the material on the outer peripheral side plate 5031, to ensure that the outer peripheral side plate 5031 is filled with the material. Thus, it is possible to at least reduce the flow liners on the outer peripheral side plate 5031 to some extent, thereby improving the product yield. Moreover, it is possible to ensure structural strength of the worktop 50, and avoid heavy product and material wasting due to too large wall thickness of the outer peripheral side plate 5031.

For example, the maximum wall thickness of the outer peripheral side plate 5031 is 2.6 mm, 2.7 mm, 2.8 mm, 2.9 mm, 3.0 mm, 3.1 mm, 3.2 mm, 3.3 mm, 3.4 mm, or 3.5 mm.

In some embodiments of the present disclosure, a minimum wall thickness of the outer peripheral side plate 5031 ranges from 1.5 mm to 2.5 mm, i.e., a minimum thickness of the outer peripheral side plate 5031 ranges from 1.5 mm to 2.5 mm. Therefore, it is beneficial to ensure the fluidity of the material on the outer peripheral side plate 5031, to ensure that the outer peripheral side plate 5031 is filled with the material. Thus, it is possible to at least reduce the flow liners on the outer peripheral side plate 5031 to some extent, thereby improving the product yield. Moreover, it is possible to ensure the structural strength of the worktop 50.

For example, the minimum wall thickness of the outer peripheral side plate 5031 is 1.6 mm, 1.7 mm, 1.8 mm, 1.9 mm, 2.0 mm, 2.1 mm, 2.2 mm, 2.3 mm, or 2.4 mm.

In some examples, the wall thickness of the outer peripheral side plate 5031 gradually decreases from 2.8mm to 1.6mm in the direction from one end of the outer peripheral side plate 5031 connected to the top plate 5033 to the other end of the outer peripheral side plate 5031.

In some embodiments of the present disclosure, the wall thickness of the outer peripheral side plate 5031 is same as the wall thickness of the worktop variable wall thickness region 5023, and the wall thickness variation relationship of the outer peripheral side plate 5031 is also same as that of the worktop variable wall thickness region 5023. Correspondingly, in the worktop mold 5, the outer peripheral side plate mold cavity 5131 and the worktop variable wall thickness region 5123 have the same thickness and same wall thickness variation relationship.

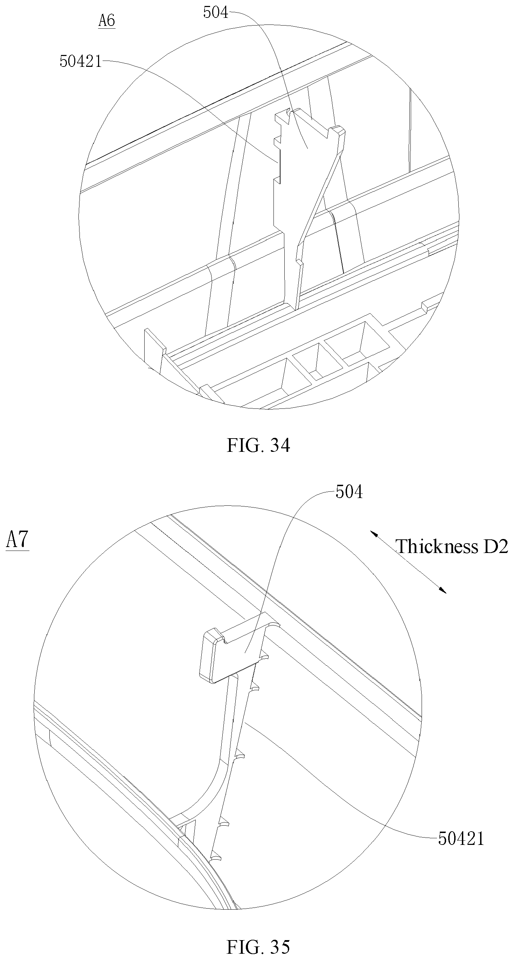

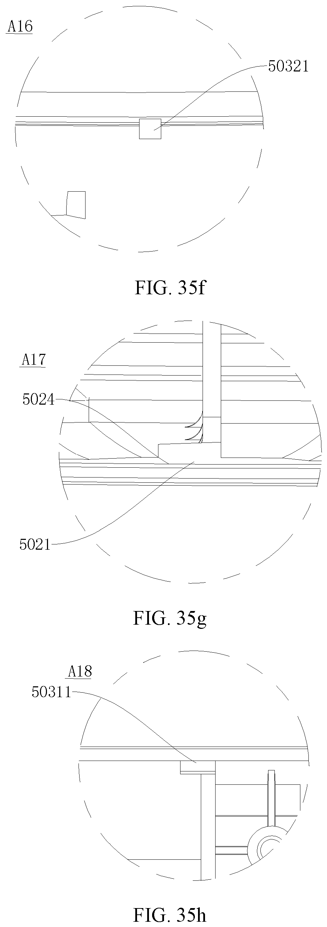

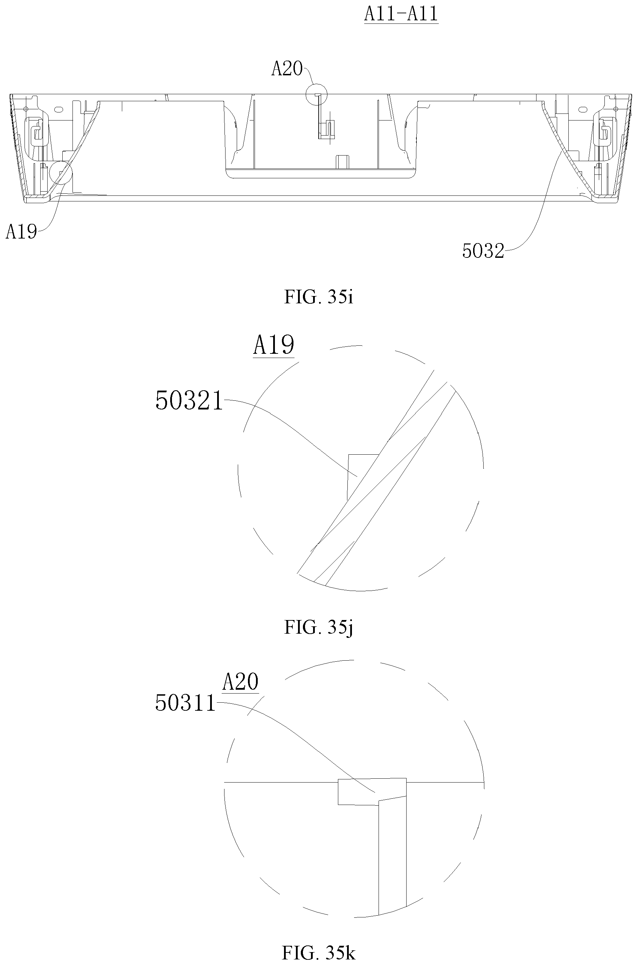

In some embodiments of the present disclosure, as illustrated in FIG. 35k and FIG. 35h, an outer peripheral side plate gate forming region 50311 is formed at an end of the outer peripheral side plate 5031 away from the top plate 5033. Correspondingly, in the worktop mold 5, the worktop mold core has an outer peripheral side plate gate located at an end of the outer peripheral side plate mold cavity 5131 away from the top plate mold cavity 5133. Therefore, the forming of the outer peripheral side plate 5031 is facilitated, and the flow liners at the outer peripheral side plate 5031 can be reduced.

In some embodiments of the present disclosure, a wall thickness of the top plate 5033 ranges from 2.3 mm to 3.3 mm. Correspondingly, in the worktop mold 5, a thickness of the top plate mold cavity 5133 ranges from 2.3 mm to 3.3 mm. For example, the wall thickness of the top plate 5033 is 2.4 mm, 2.5 mm, 2.6 mm, 2.7 mm, 2.8 mm, 2.9 mm, 3.0 mm, 3.1 mm, or 3.2 mm. Therefore, structural strength of the top plate 5033 can be ensured, and forming of the top plate 5033 is facilitated.

In some embodiments of the present disclosure, the top plate 5033 is designed to have a constant wall thickness. Thus, the structure of the mold can be simplified.

Optionally, the wall thickness of the top plate 5033 is not smaller than the maximum wall thickness of the outer peripheral side plate 5031 and is not smaller than a wall thickness of the enclosing plate 5032. Therefore, the forming of the top plate 5033 is more convenient.

In some embodiments of the present disclosure, the enclosing plate 5032 is an enclosing plate 5032 of a constant wall thickness. That is, the enclosing plate mold cavity 5132 is designed to have a constant thickness. Thus, the structure of the mold can be simplified.

Optionally, the wall thickness of the enclosing plate 5032 ranges from 1.6 mm to 2.8 mm. Therefore, structural strength of the enclosing plate 5032 can be ensured, and rapid filling of the fluid can also be ensured.

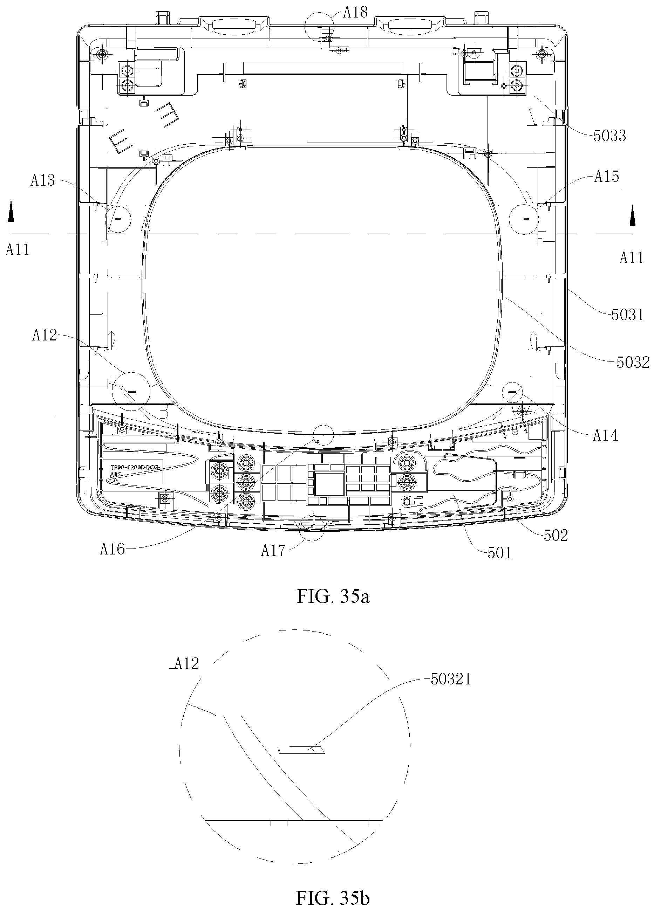

In other embodiments of the present disclosure, as illustrated in FIG. 35b to FIG. 35f, the enclosing plate 5032 is an enclosing plate 5032 of a variable wall thickness. An enclosing plate gate forming region 50321 is formed on a non-appearance surface of the enclosing plate 5032. The enclosing plate gate forming region 50321 is adapted to correspond to an enclosing plate gate of the worktop mold 5. At least one enclosing plate gate forming region 50321 is formed at an end of the enclosing plate 5032 away from the top plate 5033. The enclosing plate 5032 has an enclosing plate constant wall thickness region. The enclosing plate constant wall thickness region extends across the enclosing plate 5032 in an axial direction of the enclosing plate 5032. That is, the enclosing plate constant wall thickness region extends to two axial ends of the enclosing plate in an axial direction of the enclosing plate 5032, and a wall thickness of the enclosing plate constant wall thickness region at any position thereon is constant.

The enclosing plate gate forming region 50321 is formed at the enclosing plate constant wall thickness region. Other region of the enclosing plate 5032 rather than the enclosing plate constant wall thickness region is the enclosing plate variable wall thickness region. A wall thickness of the enclosing plate constant wall thickness region is not smaller than (i.e., equal to or greater than) a maximum wall thickness of the enclosing plate variable wall thickness region. An end of the enclosing plate variable wall thickness region away from the top plate 5033 has a minimum wall thickness. In this way, it is possible to at least reduce the flow liners at the enclosing plate 5032 to some extent, to at least prevent the flow liners from being generated on an appearance surface of the enclosing plate 5032 to some extent. Thus, it is possible to at least improve the qualified rate of the enclosing plate 5032 to some extent, thereby lowering the cost and satisfying the user’s usage demands. The principle of the reduction of the flow liners at the enclosing plate 5032 is same as that of the worktop side plate 502, and details thereof will be omitted here.

In some embodiments of the present disclosure, in a direction from the end of the enclosing plate 5032 adjacent to the top plate 5033 to the end of the enclosing plate 5032 away from the top plate 5033, the wall thickness of the enclosing plate variable wall thickness region gradually decreases. In this way, it is possible to further reduce the flow liners at the enclosing plate 5032, to further prevent the flow liners from being generated on the appearance surface of the enclosing plate 5032. Therefore, the qualified rate of the product can be further improved to some extent, thereby lowering the cost and satisfying the user’s usage demands.

In some embodiments of the present disclosure, in the direction from the end of the enclosing plate 5032 adjacent to the top plate 5033 to the end of the enclosing plate 5032 away from the top plate 5033, the wall thickness of the enclosing plate variable wall thickness region first remains constant and then gradually decreases. In this way, it is possible to further reduce the flow liners at the enclosing plate 5032, to further prevent the flow liners from being generated on the appearance surface of the enclosing plate 5032. Therefore, the qualified rate of the product can be further improved to some extent, thereby lowering the cost and satisfying the user’s usage demands.

In some embodiments of the present disclosure, in the direction from the end of the enclosing plate 5032 adjacent to the top plate 5033 to the end of the enclosing plate 5032 away from the top plate 5033, the wall thickness of the enclosing plate variable wall thickness region first gradually increases and then gradually decreases. In this way, it is possible to further reduce the flow liners at the enclosing plate 5032, to further prevent the flow liners from being generated on the appearance surface of the enclosing plate 5032. Therefore, the qualified rate of the product can be further improved to some extent, thereby reducing the cost and satisfying the user’s usage demands.

In some embodiments of the present disclosure, in the direction from the end of the enclosing plate 5032 adjacent to the top plate 5033 to the end of the enclosing plate 5032 away from the top plate 5033, the wall thickness of the enclosing plate variable wall thickness region first gradually increases, then remains constant, and then gradually decreases. In this way, it is possible to further reduce the flow liners at the enclosing plate 5032, to further prevent the flow liners from being generated on the appearance surface of the enclosing plate 5032. Therefore, the qualified rate of the product can be further improved to some extent, thereby reducing the cost and satisfying the user's usage demands.

In some embodiments of the present application, a size of the enclosing plate constant wall thickness region ranges from 10 mm to 50 mm in a peripheral direction of the enclosing plate 5032. For example, a length of the enclosing plate constant wall thickness region is 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, or 49 mm.

In some embodiments of the present application, in the peripheral direction of the enclosing plate 5032, the enclosing plate gate forming region 50321 is located at a center of an end of the enclosing plate 5032 constant wall thickness region away from the top plate. Correspondingly, in the worktop mold 5, in a peripheral direction of the enclosing plate mold cavity 5132, the enclosing plate gate is located at a center of the enclosing plate constant thickness region. Thus, it is easier for the material to preferentially fill the whole enclosing plate constant thickness region.

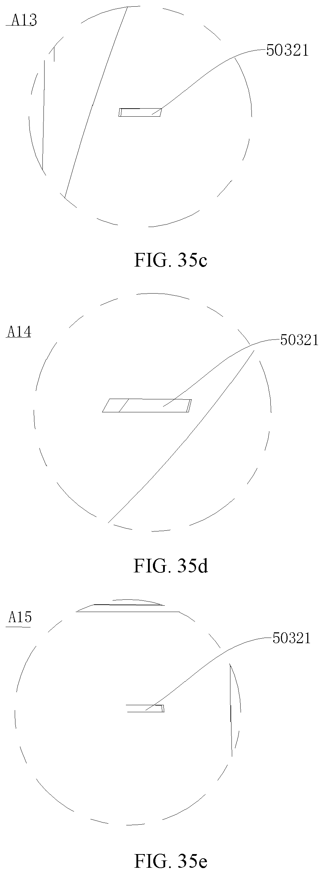

In some embodiments of the present disclosure, as illustrated in FIG. 34 and FIG. 35, a reinforcing rib is provided on at least one of the inner peripheral wall of the outer peripheral side plate 5031, the inner peripheral wall of the worktop side plate 502, and the outer peripheral wall of the enclosing plate 5032. Each of the inner peripheral wall of the outer peripheral side plate 5031, a surface of the worktop side plate 502 facing towards the feeding table 503, and the outer peripheral wall of the enclosing plate 5032 is a non-appearance surface. That is, the reinforcing rib may be provided only on the inner peripheral wall of the outer peripheral side plate 5031, only on the surface of the worktop side plate 502 facing towards the feeding table 503, or only on the outer peripheral wall of the enclosing plate 5032. Alternatively, the reinforcing ribs may be provided respectively on both the inner peripheral wall of the outer peripheral side plate 5031 and the surface of the worktop side plate 502 facing towards the feeding table 503, or respectively on both the inner peripheral wall of the outer peripheral side plate 5031 and the outer peripheral wall of the enclosing plate 5032, or respectively on both the surface of the worktop side plate 502 facing towards the feeding table 503 and the outer peripheral wall of the enclosing plate 5032. Optionally, the reinforcing ribs may be provided on the inner peripheral wall of the outer peripheral side plate 5031, the surface of the worktop side plate 502 facing towards the feeding table 503, and the outer peripheral wall of the enclosing plate 5032, respectively. By providing the reinforcing rib, the structural strength of the worktop 50 can be enhanced.

Correspondingly, in the worktop mold 5, the worktop mold cavity includes a reinforcing rib mold cavity. The reinforcing rib mold cavity is in communication with at least one of an inner periphery of the peripheral side plate mold cavity 5131, an inner periphery of the worktop side plate mold cavity 512, and an outer periphery of the enclosing plate mold cavity 5132.

In some embodiments of the present disclosure, a component provided with the reinforcing rib is referred to as a carrier member. At least one reinforcing rib provided on the carrier member is referred to as a worktop connection rib 504. The worktop connection rib 504 includes a worktop connection rib body and a worktop connection portion. The worktop connection portion is connected between the worktop connection rib body and the carrier member. Correspondingly, in the worktop mold 5, a structure in communication with the reinforcing rib mold cavity is referred to as a carrier member mold cavity. At least one reinforcing rib mold cavity in communication with the carrier member mold cavity is referred to as a worktop connection rib mold cavity. A side wall surface of the carrier member mold cavity (for example, the worktop side plate mold cavity 512) in a thickness direction thereof is configured to shape an appearance surface of the carrier member. The worktop connection rib mold cavity is located on the other side wall surface of the carrier member mold cavity in the thickness direction of the carrier member mold cavity, and is in communication with the carrier member mold cavity. The worktop connection rib mold cavity includes a worktop connection rib body mold cavity and a worktop connection portion mold cavity that are in communication with each other. The worktop connection portion mold cavity is communicated between the worktop connection rib body mold cavity and the carrier member mold cavity.

Optionally, a thickness of the worktop connection portion is smaller than a thickness of an end of the worktop connection rib body connected to the worktop connection portion. In the worktop mold 5, a thickness of the worktop connection portion mold cavity is smaller than a thickness of an end, in communication with the worktop connection portion mold cavity, of the worktop connection rib body mold cavity. In some embodiments, during the injection molding, since no gate is formed at a wall surface of the worktop connection rib 504 mold cavity, when the material flows in the worktop 50 mold cavity, the material first flows through the carrier member mold cavity, and then flows to the worktop connection rib mold cavity through the carrier member mold cavity. Moreover, the thickness of the worktop connection portion mold cavity is smaller than a thickness of the worktop connection rib body mold cavity. As a result, it is possible to at least prevent the unstable flow field from being formed at a position where the worktop connection rib mold cavity is in communication with the carrier member mold cavity to some extent. Thus, it is possible to at least avoid the material converging due to a backflow of a material in the worktop connection rib body mold cavity to the carrier member mold cavity through the worktop connection portion mold cavity to some extent, thereby preventing the flow liners from being generated at a connection of the carrier member mold cavity to the worktop connection rib 504.

Optionally, the thickness of the worktop connection portion is smaller than the thickness of the worktop connection rib body. Therefore, it is possible to at least prevent the unstable flow field from being formed at the position where the worktop connection rib 504 mold cavity is in communication with the carrier member mold cavity to some extent. Thus, it is possible to at least avoid the material converging due to the backflow of the material in the worktop connection rib body mold cavity to the carrier member mold cavity through the worktop connection portion mold cavity to some extent, thereby preventing the flow liners from being generated at the connection of the carrier member mold cavity to the worktop connection rib 504.

Optionally, a part of the worktop connection portion facing towards the carrier member is recessed away from the carrier member to form a worktop through hole 50421. The worktop through hole 50421 penetrates the worktop connection portion in a thickness direction of the worktop connection portion. Correspondingly, in the worktop mold 5, the worktop connection portion mold cavity has a worktop post structure for forming the worktop through hole 50421. The worktop post structure extends across the worktop connection portion mold cavity in the thickness direction of the worktop connection portion mold cavity. In this way, since no gated is formed at the worktop connection rib mold cavity, when flowing in the worktop mold cavity, the material first flows through the carrier member mold cavity, and then flows to the worktop connection rib mold cavity through the carrier member mold cavity. Moreover, by providing the worktop post structure, the worktop post structure can reduce a flow area of the material flowing across the position where the worktop connection rib mold cavity is in communication with the carrier member mold cavity. As a result, it is possible to at least prevent the unstable flow field from being formed at the position where the worktop connection rib mold cavity is in communication with the carrier member mold cavity to some extent. Therefore, it is possible to at least avoid the material converging due to the backflow of the material in the worktop connection rib body mold cavity to the carrier member mold cavity through the worktop connection portion mold cavity to some extent, thereby preventing the flow liners from being generated at the connection of the carrier member to the worktop connection rib 504.

In some embodiments of the present disclosure, the thickness of the worktop connection portion is smaller than a thickness of the carrier member. Correspondingly, in the worktop mold 5, the thickness of the worktop connection portion mold cavity is smaller than a thickness of the carrier member mold cavity. Therefore, it is more beneficial to the material to preferentially form the carrier member.

In some embodiments of the present disclosure, the wall thickness of the worktop constant wall thickness region 5024 ranges from 2.3 to 3.2 mm, thereby facilitating rapid filling of the material.

In some embodiments of the present disclosure, in the peripheral direction of the worktop connection plate 501, a size of the worktop constant wall thickness region 5024 ranges from 10 mm to 50 mm. For example, a length of the worktop constant wall thickness region 5024 is 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, or 49 mm.

In some embodiments of the present disclosure, in the peripheral direction of the worktop connection plate 501, the worktop gate forming region 5021 is located at the center of the end of the worktop constant wall thickness region 5024 away from the worktop connection plate 501. Correspondingly, in the worktop mold 5, in the peripheral direction of the worktop connection plate mold cavity 51, the worktop gate is located at the center of the worktop 50 constant thickness region. Thus, the worktop 50 constant thickness region is more conveniently and preferentially filled with the material.

A laundry treating device according to embodiments of the present disclosure includes the worktop 50 as described above.

With the laundry treating device according to the embodiments of the present disclosure, by providing the worktop 50, the worktop gate forming region 5021 is formed at the worktop constant wall thickness region 5024, and the wall thickness of the worktop constant wall thickness region 5024 is not smaller than the maximum wall thickness of the worktop variable wall thickness region 5023. As a result, it is possible to facilitate reducing the flow liners at the worktop side plate 502 to some extent. Thus, the product yield can be at least improved to some extent, thereby satisfying the user's usage demands.

A description will be provided below taking a top cover frame 70 of a laundry treating device as the appearance part as an example.

In general, the top cover frame 70 used in the laundry treating device such as a front-load washing machine has dual requirements of function and appearance.

A manufacturing process for the top cover frame 70 is mostly implemented through an injection molding and spraying process, and the sprayed top cover frame 70 has a gorgeous metal appearance effect. However, the spraying process has the defects such as serious pollution, high cost, low qualified rate, unrecyclable unqualified product, and the like, which seriously affects health of environment and production personnel, and does not conform to the green manufacturing concept. In order to overcome the defects in the spraying process, a spraying-free thermoplastic engineering material emerges, and the metal appearance effect of a product can be given by spraying-free injection molding.

As a result, the spraying process can be replaced, thereby lowering production cost. Meanwhile, it is possible to avoid emission of pollutants during the spraying.

No matter whether the top cover frame 70 is manufactured by using a spraying-free material or through the injection molding and spraying process, for a material with poor fluidity, especially for a spraying-free material including metal particles, since there are the metal particles and other substances in the spraying-free material, uneven arrangement of the metal particles may be generated due to an obstruction to the material when flowing during the injection molding. As a result, the injection-molded product may occur light scattering under an irradiation of light, and flow liners thus are visually generated on the product, which results in a flow liner defect on the product. When the flow liners are generated on an appearance surface of the product, the flow liners not only lead to low qualified rate, but also cannot satisfy user's usage demands. A description will be provided below taking the spraying-free material including metal particles as an example. That is, the top cover frame 70 may be a spray-free piece including a resin matrix and metal particles distributed in the resin matrix. Optionally, the metal particles are aluminum, silver, or copper.

According to the embodiments of the present disclosure, a top cover frame 70, a laundry treating device, and a top cover frame mold 7 will be described below. Optionally, the laundry treating device may be a washing machine, clothes dryer, or a washing and drying integrated machine. The top cover frame 70 is an integral injection-molding piece. That is, the top cover frame mold 7 is configured to shape the top cover frame 70. As a result, a structure of the integral piece not only can ensure structural and performance stability of the top cover frame 70, but also leads to convenient forming and simple manufacturing. Moreover, redundant assembly parts and connection steps can be removed, and connection reliability of the top cover frame 70 can be ensured. Furthermore, the integrally formed structure is high in overall strength and stability, is more convenient to be assembled, and is longer in service life.

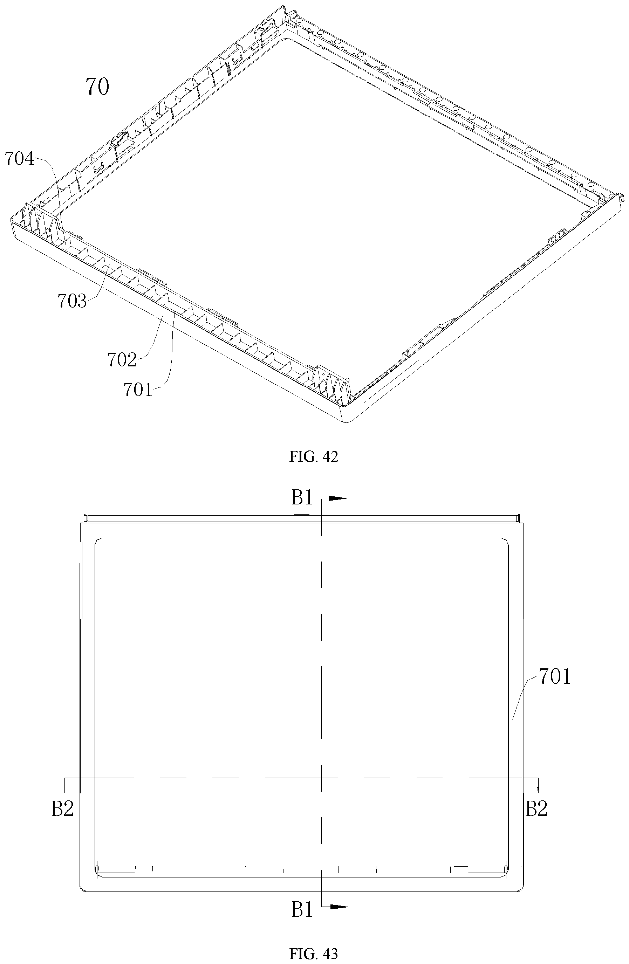

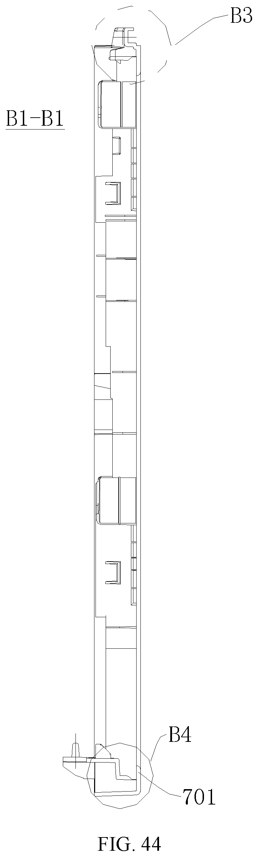

As illustrated in FIG. 41 to FIG. 44, and FIG. 47, according to the embodiments of the present disclosure, the top cover frame 70 includes an annular top cover frame connection plate 701 and a top cover frame side plate 702.

The top cover frame side plate 702 extends in a peripheral direction of the top cover frame connection plate 701 to form an annular shape. That is, the top cover frame side plate 702 is annular. The top cover frame side plate 702 surrounds the top cover frame connection plate 701. An axial end of the top cover frame side plate 702 is connected to an outer peripheral wall of the top cover frame connection plate 701. The annular shape may be an open annular shape or a closed annular shape.

Each of an outer peripheral wall of the top cover frame side plate 702 and a top wall of the top cover frame connection plate 701 is an appearance surface. An inner peripheral wall of the top cover frame side plate 702, a bottom wall of the top cover frame connection plate 701, and an end surface of another axial end of the top cover frame side plate 702 (i.e., an end away from the top cover frame connection plate 701) are non-appearance surfaces. The appearance surface refers to that the surface is exposed when the top cover frame 70 is applied in the laundry treating device. The non-appearance surface refers to that the surface is not exposed when the top cover frame 70 is applied in the laundry treating device.

In order to facilitate explaining the reason why flow liners on the appearance surface of the top cover frame side plate 702 are reduced, the reason why the flow liners on the appearance surface of the top cover frame 70 are reduced is illustrated in principle and in combination with a structure of the top cover frame mold 7.

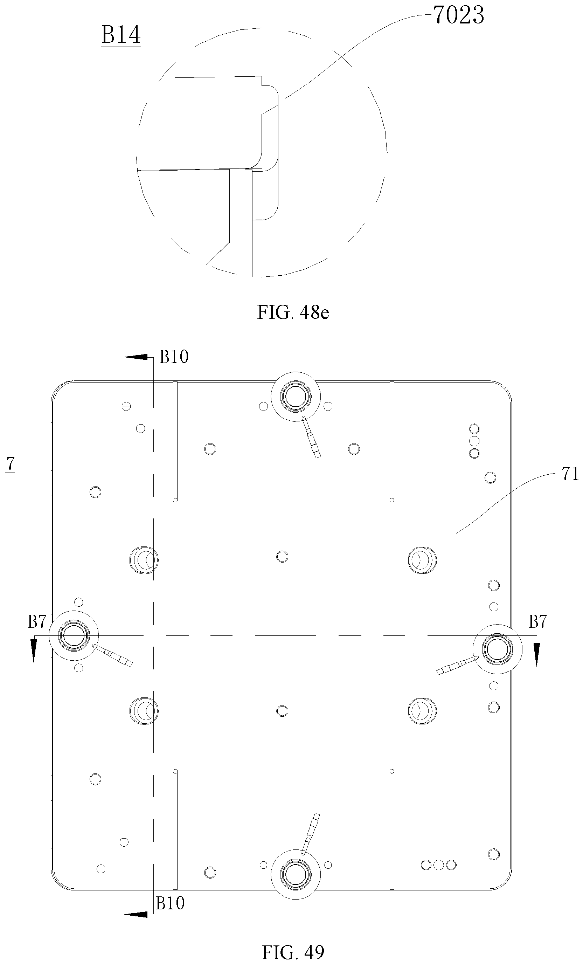

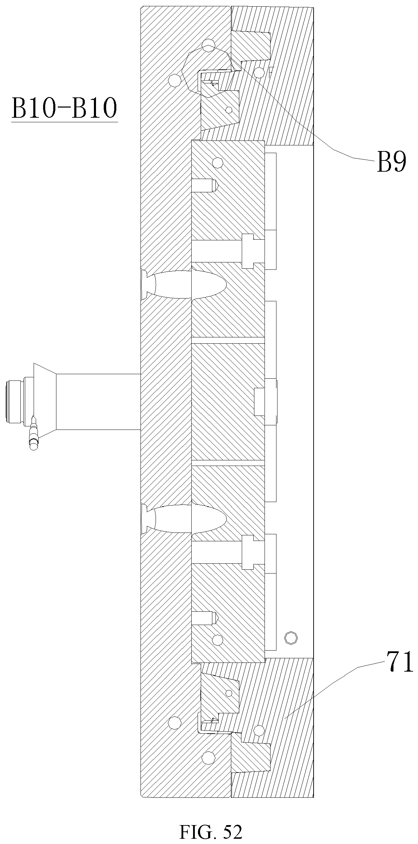

As illustrated in FIG. 49, FIG. 50, and FIG. 52, according to the embodiments of the present disclosure, the top cover frame mold 7 includes a top cover frame mold core 71. The top cover frame mold core 71 has a top cover frame mold cavity.

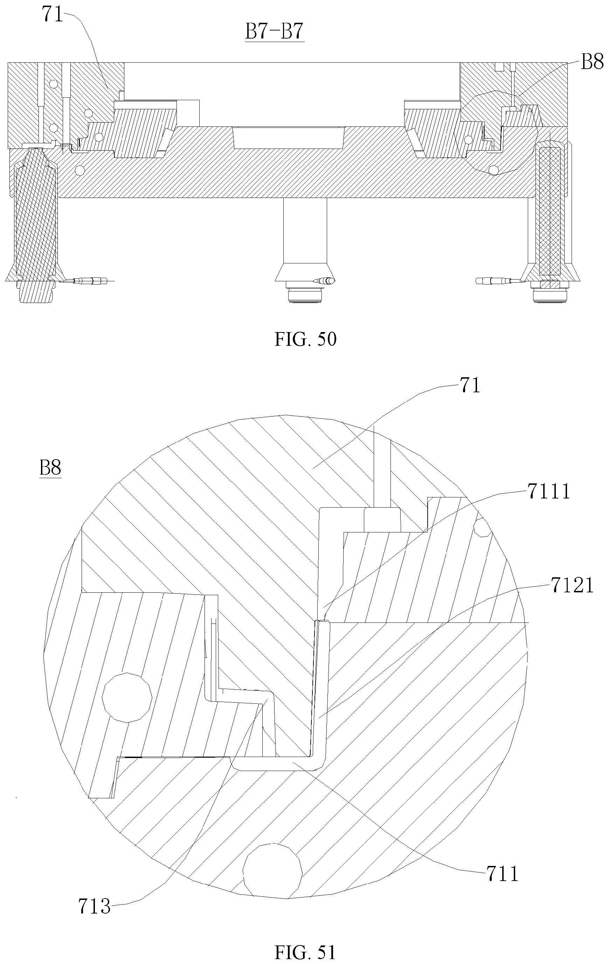

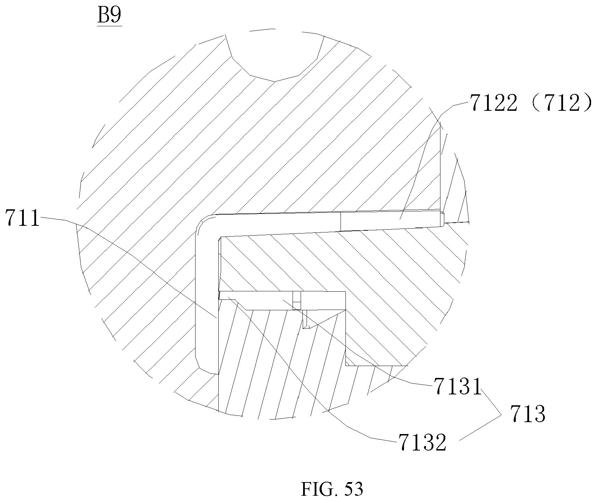

As illustrated in FIG. 51 and FIG. 53, the top cover frame mold cavity includes an annular top cover frame side plate mold cavity 712 and an annular top cover frame connection plate mold cavity 711. The top cover frame side plate mold cavity 712 extends in a peripheral direction of the top cover frame connection plate mold cavity 711 to form an annular shape. An axial end of the top cover frame side plate mold cavity 712 is in communication with an outer periphery of the top cover frame connection plate mold cavity 711 in an entire peripheral direction of the top cover frame connection plate mold cavity 711.

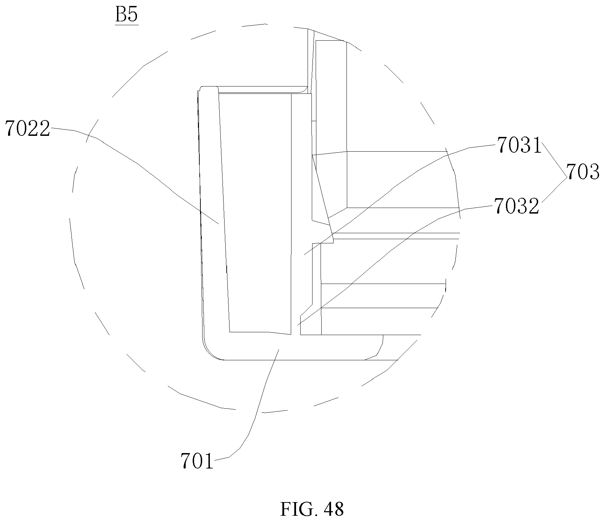

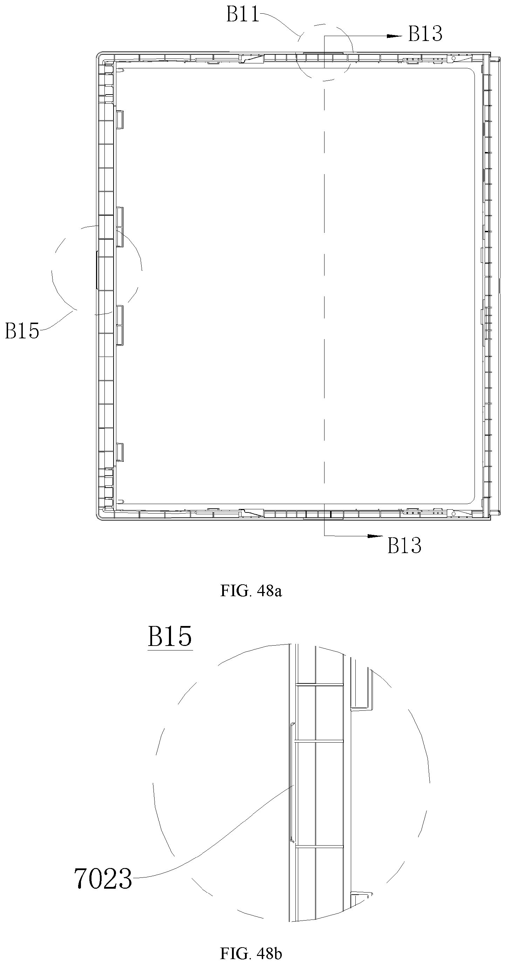

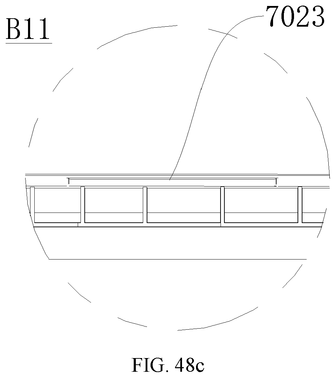

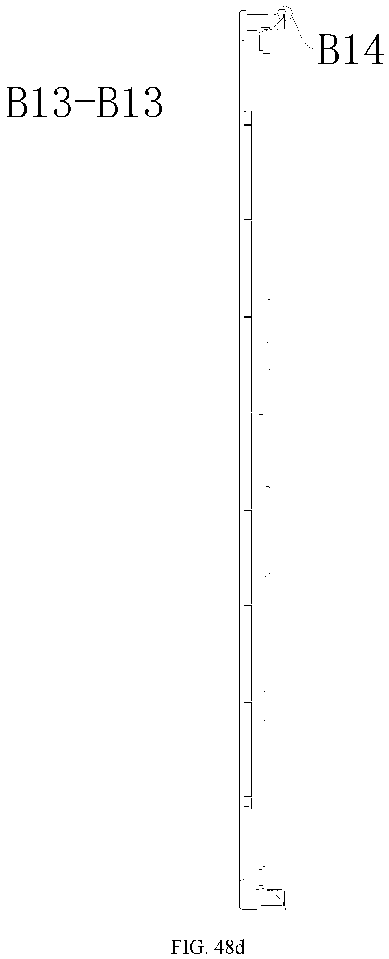

In some examples, as illustrated in FIG. 48a to FIG. 48e, an end surface of the other axial end of the top cover frame side plate 702 has at least one top cover frame gate forming region 7023 configured to correspond to a top cover frame gate 7111 of the top cover frame mold 7. In some embodiments, after a top cover frame blank is formed through injection molding by the top cover frame mold 7 and is de-molded from the top cover frame mold 7, a part of a material at the top cover frame gate 7111 of the top cover frame mold 7 is left on the top cover frame blank and is formed into a top cover frame gate forming portion. The top cover frame gate forming region 7023 is a region where the top cover frame gate forming portion is located. It can be understood that the top cover frame blank may be further processed to cut away or partially cut away the top cover frame gate forming portion. In an example, the top cover frame gate forming portion of the top cover frame blank may not be processed. That is, the top cover frame gate forming portion is remained on the top cover frame. The embodiment of the present disclosure is not limited in this regard, and the top cover frame gate forming portion may be provide as desired.

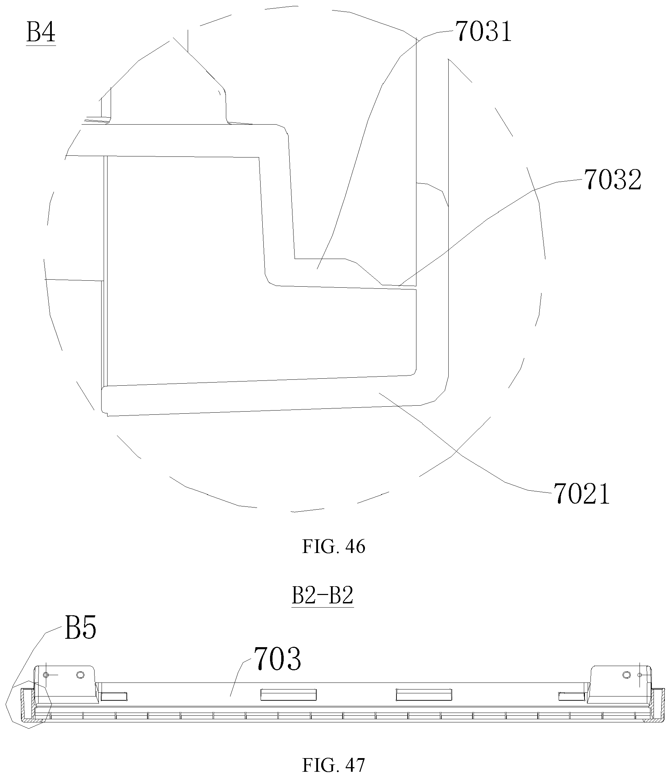

As illustrated in FIG. 46, the top cover frame side plate 702 has a top cover frame constant wall thickness region 7021. The top cover frame constant wall thickness region 7021 extends across the top cover frame side plate 702 in an axial direction of the top cover frame side plate 702. That is, the top cover frame constant wall thickness region 7021 extends to both ends of the top cover frame side plate 702 in the axial direction of the top cover frame side plate 702, and the top cover frame side plate 702 has a constant wall thicknesses at any position on the top cover frame side plate 702. The top cover frame gate forming region 7023 is located at the top cover frame constant wall thickness region 7021, and other region of the top cover frame side plate 702 other than the top cover frame constant wall thickness region 7021 is a top cover frame variable wall thickness region 7022. A wall thickness of the top cover frame side plate 702 in the top cover frame constant wall thickness region 7021 is not smaller than (i.e., equal to or greater than) a maximum wall thickness of the top cover frame side plate 702 in the top cover frame variable wall thickness region 7022, and an end of the top cover frame variable wall thickness region 7022 away from the top cover frame connection plate 701 has a minimum wall thickness. In this way, flow liners at the top cover frame side plate 702 can be at least reduced to some extent.

As illustrated in FIG. 51, in the top cover frame mold 7, The top cover frame mold core 71 has at least one top cover frame gate 7111 located on a wall surface of the other axial end of the top cover frame side plate mold cavity 712. The top cover frame side plate mold cavity 712 has a top cover frame constant thickness region 7121. The top cover frame gate 7111 is located in the top cover frame constant thickness region 7121. The top cover frame constant thickness region 7121 extends across the top cover frame side plate mold cavity 712 in an axial direction of the top cover frame side plate mold cavity 712. Other region of the top cover frame side plate mold cavity 712 other than the top cover frame constant thickness region 7121 is a top cover frame variable thickness region 7122. A thickness of the top cover frame side plate mold cavity 712 in the top cover frame constant thickness region 7121 is not smaller than a wall thickness of the top cover frame side plate mold cavity 712 in the top cover frame variable thickness region 7122, and an end of the top cover frame variable thickness region 7122 away from the top cover frame connection plate mold cavity 711 has a minimum thickness.

In some embodiments, during the injection molding, when the material flows, after a hot melt material flows into the top cover frame mold cavity through the top cover frame gate 7111, the hot melt material is brought into contact with a cold inner wall of the top cover frame mold cavity during its flowing. As a result, the material is quickly solidified on the inner wall of the top cover frame mold cavity to form a thin solidification layer. A quality of an appearance of a spray-free product depends on an arrangement of metal particles in the solidification layer, and the stable flow can allow for a uniform metal particle orientation to obtain a better appearance. According to the present disclosure, the top cover frame gate forming region 7023 is located at the top cover frame constant wall thickness region 7021, and the thickness of the top cover frame constant wall thickness region 7021 is not smaller than the maximum thickness of the top cover frame variable wall thickness region 7022. In this way, when the material flows out of the top cover frame gate 7111 of the top cover frame mold 7, a part of the material can directly flow to the top cover frame constant thickness region 7121, and the top cover frame constant thickness region 7121 is filled with the material. Then, a part of the material flows towards the top cover frame variable thickness region 7122 from two sides of the top cover frame constant thickness region 7121 in the peripheral direction of the top cover frame side plate mold cavity 712, respectively, and a part of the material flows to the top cover frame connection plate mold cavity 711. Moreover, since the end of the top cover frame variable thickness region 7122 away from the top cover frame connection plate mold cavity 711 has the minimum thickness, i.e., in a width direction of the top cover frame side plate mold cavity 712, a thickness of a part (referred to as a large thickness portion) of the top cover frame variable thickness region 7122 adjacent to the top cover frame connection plate mold cavity 711 and in direct communication with the minimum thickness part of the top cover frame variable thickness region 7122 is necessarily greater than the thickness of the end of the top cover frame variable thickness region 7122 away from the top cover frame connection plate mold cavity 711. In this way, when the material flows in the peripheral direction of the top cover frame connection plate mold cavity 711, it is easier for the material to flow at the large thickness portion at a higher flow velocity. As a result, the material has a forward protruding form and an obvious front edge flow at the large thickness portion. Moreover, an actual flow direction of the material at each point on its front edge surface is an outward direction perpendicular to a tangent line of the front edge surface. Therefore, the flow direction at each point of the front edge surface is divergent, and does not intersect with each other. As a result, curling and rotation can be avoided, which can easily prevent the material at the large thickness portion and the material at the small thickness portion from being curled and rotated at the front edge to some extent, to further ensure flow stability of the material. Further, it is possible for the material to flow to the top cover frame connection plate mold cavity 711, thereby reducing the flow liners at the top cover frame 70. In addition, it is possible to at least improve the product yield of the top cover frame 70 to some extent and satisfy the user’s usage demands.

There are several variation relationships for the top cover frame variable wall thickness region 7022 of the top cover frame side plate 702, and these variation relationships will be described below.

For a first variation relationship, a wall thickness of the top cover frame variable wall thickness region 7022 gradually decreases in a direction away from the top cover frame connection plate 701. Correspondingly, in the top cover frame mold 7, a thickness of the top cover frame variable thickness region 7122 gradually decreases in a direction away from the top cover frame connection plate mold cavity 711. In this way, in the peripheral direction of the top cover frame connection plate mold cavity 711, when the material flows, depending on the thickness variation of the top cover frame variable thickness region 7122, it is easier for the material to flow at a position where the top cover frame variable thickness region 7122 has the large thickness with small flow resistance. As a result, a front edge surface of the material flow may be an inclined surface as illustrated in FIG. 12. Moreover, the actual flow direction of the material at each point on its front edge surface is the outward direction perpendicular to the tangent line of the front edge surface. Therefore, the flow direction at each point on the front edge surface is divergent, and does not intersect with each other, thereby avoiding occurrence of the curling and rotation. As a result, the curling and rotation of the material at its front edge can be avoided, and the material has more stable flow. In this manner, it is possible to further reduce the flow liners on the top cover frame side plate 702, to further prevent the flow liners from being generated on the appearance surface of the top cover frame side plate 702. Therefore, the qualified rate of the top cover frame 70 can be further improved, thereby lowering the cost and satisfying the user’s usage demands.

For a second variation relationship, the wall thickness of the top cover frame variable wall thickness region 7022 is first constant and then gradually decreases in the direction away from the top cover frame connection plate 701. Correspondingly, in the top cover frame mold 7, the thickness of the top cover frame variable thickness region 7122 is first constant and then gradually decreases in the direction away from the top cover frame connection plate mold cavity 711. In this way, in the peripheral direction of the top cover frame connection plate mold cavity 711, when the material flows in the top cover frame side plate mold cavity 712, depending on the thickness variation of the top cover frame variable thickness region 7122, it is easier for the material to flow at the position where the top cover frame variable thickness region 7122 has the large thickness with small flow resistance. As a result, as illustrated in FIG. 14, the front edge surface of the material flow may include a surface substantially parallel to the width direction of the top cover frame side plate mold cavity 712 at a same thickness and an inclined surface towards an upstream of the material flow at a gradually decreasing thickness. Moreover, the actual flow direction of the material at each point on its front edge surface is the outward direction perpendicular to the tangent line of the front edge surface. Therefore, the flow direction at each point on the front edge surface is divergent, and does not intersect with each other, thereby avoiding occurrence of the curling and rotation. As a result, the curling and rotation of the material at the front edge can be avoided, and the material has more stable flow. In this manner, it is possible to further reduce the flow liners on top cover frame side plate 702, to further prevent the flow liners from being generated on the appearance surface of the flow liners on top cover frame side plate 702. Therefore, the qualified rate of the flow liners on top cover frame 70 can be further improved, thereby lowering the cost and satisfying the user’s usage demands.

For a third variation relationship, the wall thickness of the top cover frame variable wall thickness region 7022 gradually increases and then gradually decreases in the direction away from the top cover frame connection plate 701. Correspondingly, in the top cover frame mold 7, the thickness of the top cover frame variable thickness region 7122 gradually increases and then gradually decreases in the direction away from the top cover frame connection plate mold cavity 711. In this way, in the peripheral direction of the top cover frame connection plate mold cavity 711, when the material flows, depending on the thickness variation of the top cover frame variable thickness region 7122, it is easier for the material to flow at a position where the top cover frame variable thickness region 7122 has the large thickness with small flow resistance. As a result, the front edge surface of the material flow may have a forwarding protruding form as illustrated in FIG. 13. Moreover, the actual flow direction of the material at each point on its front edge surface is the outward direction perpendicular to the tangent line of the front edge surface. Therefore, the flow direction at each point on the front edge surface is divergent, and does not intersect with each other, thereby avoiding occurrence of the curling and rotation. As a result, the curling and rotation of the material at the front edge can be avoided, and the material has more stable flow. In this manner, it is possible to further reduce the flow liners on the top cover frame side plate 702, to further prevent the flow liners from being generated on the appearance surface of the top cover frame side plate 702. Therefore, the qualified rate of the top cover frame 70 can be further improved, thereby lowering the cost and satisfying the user’s usage demands.

For a fourth variation relationship, in the direction away from the top cover frame connection plate 701, the wall thickness of the top cover frame variable wall thickness region 7022 gradually increases, then remains constant, and gradually decreases. Correspondingly, in the top cover frame mold 7, in the direction away from the top cover frame connection plate mold cavity 711, the thickness of the top cover frame variable thickness region 7122 gradually increases, then remains constant, and gradually decreases. In this way, in the peripheral direction of the top cover frame connection plate mold cavity 711, when the material flows, depending on the top cover frame variable thickness region 7122, it is easier for the material to flow at a position where the thickness variation of the top cover frame variable thickness region 7122 has the large thickness with small flow resistance. As a result, the front edge surface of the material flow may have a forward protruding form as illustrated in FIG. 15. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at its front edge can be avoided, and the material has more stable flow. In this manner, it is possible to further reduce the flow liners on the top cover frame side plate 702, to further prevent the flow liners from being generated on the appearance surface of the top cover frame side plate 702. Therefore, the qualified rate of the top cover frame 70 can be further improved, thereby lowering the cost and satisfying the user's usage demands.

In some other examples, the gate forming region is located on a bottom wall of the top cover frame connection plate 701, rather than being formed at the top cover frame side plate 702.

In some embodiments, the bottom wall of the top cover frame connection plate 701 has at least one top cover frame gate forming region 7023 configured to correspond to the top cover frame gate of the mold. The other axial end of the top cover frame side plate 702 has a minimum wall thickness. The at least one top cover frame gate forming region 7023 is located adjacent to the top cover frame side plate 702. In this way, it is possible to at least reduce the flow liners at the top cover frame side plate 702 to some extent, to at least prevent the flow liners from being generated on the appearance surface of the top cover frame side plate 702 to some extent. Therefore, it is possible to at least improve the qualified rate of the top cover frame to some extent, thereby lowering the cost and satisfying the user's usage demands.

In the top cover frame mold 7, the top cover frame mold core 71 has the at least one top cover frame gate located on one side wall surface of the top cover frame connection plate mold cavity 711 in a thickness direction of the top cover frame connection plate mold cavity 711. A thickness of the other axial end of the top cover frame side plate mold cavity 712 is minimum. One side wall surface of the top cover frame side plate mold cavity 712 in a thickness direction of the top cover frame side plate mold cavity 712 is configured to shape the appearance surface of the top cover frame side plate 702. The at least one top cover frame gate is formed adjacent to the top cover frame side plate mold cavity 712. In some embodiments, during the injection molding, since at least one top cover frame gate of the mold is located adjacent to the top cover frame side plate mold cavity 712, when the material flows out of the top cover frame gate of the mold, a part of the material can directly flow to the top cover frame connection plate mold cavity 711, and the remaining part of materials can flow to the top cover frame side plate mold cavity 712, which can shorten a path of the material flowing to the top cover frame side plate mold cavity 712 from the top cover frame gate. As a result, it is possible to easily ensure that the material stably flows to the top cover frame side plate mold cavity 712 from the top cover frame connection plate mold cavity 711, thereby reducing the flow liners at the top cover frame side plate 702. Therefore, product yield of the top cover frame can be improved to some extent, and the user's usage demands can be satisfied.

Moreover, since the other axial end of the top cover frame side plate mold cavity 712 has the minimum wall thickness, i.e., in the axial direction of the top cover frame side plate mold cavity 712, a thickness of a part (referred to as a large thickness portion) of the top cover frame side plate mold cavity 712 adjacent to the top cover frame connection plate mold cavity 711 and in direct communication with the other axial end of the top cover frame side plate mold cavity 712 is necessarily greater than the thickness of the other end (referred to as a small thickness portion) of the top cover frame side plate mold cavity 712 in the width direction of the top cover frame side plate mold cavity 712. In this way, in the peripheral direction of the top cover frame connection plate mold cavity 711, when the material flows in a length direction of the top cover frame connection plate mold cavity 711, since the thickness of the large thickness portion is greater than the thickness of the small thickness portion, it is easier for the material to flow at the large thickness portion with a higher flow velocity. As a result, the material has a forward protruding form and an obvious front edge flow at the large thickness portion. Moreover, an actual flow direction of the material at each point on its front edge surface is an outward direction perpendicular to a tangent line of the front edge surface. Therefore, the flow direction at each point of the front edge surface is divergent, and does not intersect with each other, thereby avoiding occurrence of curling and rotation. As a result, it is possible to easily prevent the material at the large thickness portion and the material at the small thickness portion from being curled and rotated at the front edge to some extent, to further ensure flow stability of the material. As a result, the flow liners at a position on the top cover frame 70 corresponding to the large thickness portion and the small thickness portion. Therefore, it is possible to at least improve the product yield of the top cover frame to some extent and satisfy the user's usage demands.

There are several wall thickness variation relationships for the top cover frame side plate 702, and these wall thickness variation relationships will be described below.

For a first wall thickness variation relationship, a wall thickness of the top cover frame side plat 702 gradually decreases in a direction away from the top cover frame connection plate 701. Correspondingly, in the top cover frame mold 7, a thickness of the top cover frame side plat mold cavity 712 gradually decreases in a direction away from the top cover frame connection plate mold cavity 711. In this way, in the peripheral direction of the top cover frame connection plate mold cavity 711, when the material flows in the top cover frame side plate mold cavity 712, depending on the thickness variation of the top cover frame side plate mold cavity 712, it is easier for the material to flow at a position where the top cover frame side plate mold cavity 712 has the large thickness with small flow resistance. As a result, a front edge surface of the material flow may be an inclined surface as illustrated in FIG. 12. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at its front edge can be avoided, and the material has more stable flow. In this manner, it is possible to further reduce the flow liners on the top cover frame side plate 702, to further prevent the flow liners from being generated on the appearance surface of the top cover frame side plate 702. Therefore, the qualified rate of the top cover frame can be further improved, thereby lowering the cost and satisfying the user's usage demands.

For a second wall thickness variation relationship, the wall thickness of the top cover frame side plate 702 is first constant and then gradually decreases in the direction away from the top cover frame connection plate 701. Correspondingly, in the top cover frame mold 7, the thickness of the top cover frame side plate mold cavity 712 is first constant and then gradually decreases in the direction away from the top cover frame connection plate mold cavity 711. In this way, in the peripheral direction of the top cover frame connection plate mold cavity 711, when the material flows in a length direction of the top cover frame side plate mold cavity 712, depending on the thickness variation of the top cover frame side plate mold cavity 712, it is easier for the material to flow at the position where top cover frame side plate mold cavity 712 has the large thickness with small flow resistance. As a result, as illustrated in FIG. 14, the front edge surface of the material flow may include a surface substantially parallel to the width direction of the top cover frame side plate mold cavity 712 at a same thickness and an inclined surface towards an upstream of the material flow at a gradually decreasing thickness. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at the front edge can be avoided, and the material has more stable flow. In this manner, it is possible to further reduce the flow liners on top cover frame side plate 702, to further prevent the flow liners from being generated on the appearance surface of the flow liners on top cover frame side plate 702. Therefore, the qualified rate of the flow liners on top cover frame can be further improved, thereby lowering the cost and satisfying the user's usage demands.

For a third wall thickness variation relationship, the wall thickness of the top cover frame side plate 702 gradually increases and then gradually decreases in the direction away from the top cover frame connection plate 701. Correspondingly, in the top cover frame mold 7, the thickness of the top cover frame side plate mold cavity 712 gradually increases and then gradually decreases in the direction away from the top cover frame connection plate mold cavity 711. In this way, in the peripheral direction of the top cover frame connection plate mold cavity 711, when the material flows in the length direction of the top cover frame side plate mold cavity 712, depending on the thickness variation of the top cover frame side plate mold cavity 712, it is easier for the material to flow at a position where the top cover frame side plate mold cavity 712 has the large thickness with small flow resistance. As a result, the front edge surface of the material flow may have a forwarding protruding form as illustrated in FIG. 13. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at the front edge can be avoided, and the material has more stable flow. In this manner, it is possible to further reduce the flow liners on the top cover frame side plate 702, to further prevent the flow liners from being generated on the appearance surface of the top cover frame side plate 702. Therefore, the qualified rate of the top cover frame can be further improved, thereby lowering the cost and satisfying the user's usage demands.

For a fourth wall thickness variation relationship, in the direction away from the top cover frame connection plate 701, the wall thickness of the top cover frame side plate 702 gradually increases, then remains constant, and gradually decreases. Correspondingly, in the top cover frame mold 711, in the direction away from the top cover frame connection plate mold cavity 711, the thickness of the top cover frame variable thickness region 7122 gradually increases, then remains constant, and gradually decreases. In this way, in the peripheral direction of the top cover frame connection plate mold cavity 711, when the material flows in the length direction of the top cover frame side plate mold cavity 712, depending on the thickness variation of the top cover frame side plate mold cavity 712, it is easier for the material to flow at a position where the top cover frame side plate mold cavity 712 has the large thickness with small flow resistance. As a result, the front edge surface of the material flow may have a forward protruding form as illustrated in FIG. 15. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at its front edge can be avoided, and the material has more stable flow. In this manner, it is possible to further reduce the flow liners on the top cover frame side plate 702, to further prevent the flow liners from being generated on the appearance surface of the top cover frame side plate 702. Therefore, the qualified rate of the top cover frame can be further improved, thereby lowering the cost and satisfying the user's usage demands.

Therefore, compared with a recessed front edge surface illustrated in FIG. 16 in the related art, according to the above embodiments of the present disclosure, it is more conducive to the reduction of the flow liners on the top cover frame side plate 702.

For explanation, provided below is that the larger the wall thickness is, the faster a flow velocity of the material is.

When the material is injected into the mold under a predetermined condition, a temperature of the material is sharply decreased due to contact with a cold wall surface of the mold cavity, and generates the solidification layer. In addition, a flow area of the mold cavity is reduced as a thickness of the solidification layer increases. As a result, the thickness of the solidification layer has an important influence on the flow resistance. A relationship between the fluidity s and the thickness h of the mold cavity satisfies formula I.

$$s = \int_0^k \frac{z^2}{\eta} z = \frac{h^3}{3\eta_{rep}}$$

（Formula I）

where $\eta_{rep}$ represents viscosity of the material.

According to the fluidity formula, the fluidity s is proportional to a cube of the thickness h. For example, when the thickness is reduced by fifty percent, the fluidity will be reduced to one eighth, which means that the flow resistance is increased to eight times. As a result, the thicker the mold cavity, the lower the flow resistance, the better the fluidity, and the faster the flow velocity.

With the top cover frame mold 7 for forming the top cover frame 70 of the laundry treating device according to the embodiments of the present disclosure, it is possible to facilitate ensuring the stability of the flow of material to some extent, thereby reducing the flow liners at the top cover frame 70. Therefore, it is possible to at least improve the product yield of the top cover frame 70 to some extent, thereby satisfying the user's usage demands.

With the top cover frame 70 of the laundry treating device according to the embodiments of the present disclosure, it is possible to at least reduce the flow liners at the top cover frame 70 to some extent, thereby at least preventing the flow liners from being generated on the appearance surface of the top cover frame 70 to some extent. Therefore, it is possible to at least improve the qualified rate of the top cover to some extent, thereby lowering the cost and satisfying the user's usage demands.

According to the embodiments of the present disclosure, in a peripheral direction of top cover frame side plate 702, a size of the top cover frame constant wall thickness region 7021 ranges from 10 mm to 50 mm. For example, a length of the top cover frame constant wall thickness region 7021 is 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, or 49 mm.

According to the embodiments of the present disclosure, in the peripheral direction of top cover frame side plate 702, the top cover frame gate forming region 7023 is located at the center of the top cover frame constant wall thickness region 7021. Therefore, correspondingly, in the top cover frame mold 7, the top cover frame gate 7111 is located at the center of the top cover frame constant thickness region 7121 in a peripheral direction of the top cover frame side plate mold cavity 712. In this way, it is easier for the material to preferentially fill the top cover frame constant thickness region 7121.

According to the embodiments of the present disclosure, the wall thickness of an end of the top cover frame variable wall thickness region 702 adjacent to the top cover frame connection plate 701 ranges from 2.2 mm to 3.2 mm. Correspondingly, in the top cover frame mold 7, a wall thickness of an end of the top cover frame variable thickness region 7122 adjacent to the top cover frame connection plate mold cavity 711 ranges from 2.2 mm to 3.2 mm. As a result, the flow velocity of the material can be ensure to ensure that the top cover frame side plate mold cavity 712 is full of the material, thereby ensuring structural strength of the top cover frame 70. For example, the wall thickness of the end of the top cover frame variable wall thickness region 702 adjacent to the top cover frame connection plate 701 is 2.3 mm, 2.4 mm, 2.5 mm, 2.6 mm, 2.7 mm, 2.8 mm, 2.9 mm, 3.0 mm, or 3.1 mm.

According to the embodiments of the present disclosure, a wall thickness of an end of the top cover frame variable wall thickness region 7022 away from the top cover frame connection plate 701 ranges from 1.5 mm to 2.5 mm. Correspondingly, in the top cover frame mold 7, a wall thickness of an end of the top cover frame variable thickness region 7122 away from the top cover frame connection plate mold cavity 711 ranges from 1.5 mm to 2.5 mm. As a result, the flow velocity of the material can be ensured to ensure that the top cover frame side plate mold cavity 712 is full of the material, thereby ensuring structural strength of the top cover frame 70. For example, the wall thickness of the end of the top cover frame variable wall thickness region 7022 away from the top cover frame connection plate 701 is 1.6 mm, 1.7 mm, 1.8 mm, 1.9 mm, 2.0 mm, 2.1 mm, 2.2 mm, 2.3 mm, or 2.4 mm.

In some examples, the top cover frame connection plate 701 is a constant wall thickness connection plate. Therefore, the structure of the top cover frame mold 73 can be simplified.

In some examples, a wall thickness of the top cover frame connection plate 701 ranges from 2 mm to 3.5 mm.

Correspondingly, in the top cover frame mold 7, a wall thickness of the top cover frame connection plate mold cavity 711 ranges from 2 mm to 3.5 mm. Thus, when the material flows out of the top cover frame gate 7111 of the top cover frame mold 7, it is easier for the material to flow to the top cover frame connection plate mold cavity 711, further ensuring the stable flow of material and reducing the obstruction to the material flow. Therefore, the flow liners at the top cover frame connection plate 701 can be reduced.

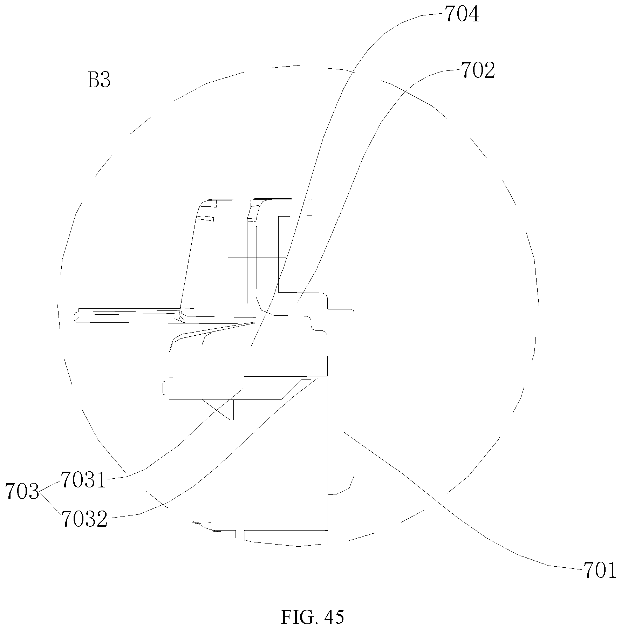

In some embodiments of the present disclosure, as illustrated in FIG. 45, FIG. 46, and FIG. 48, the top cover frame 70 includes a top cover frame connection rib 703. The top cover frame connection rib 703 is disposed on a bottom wall of the top cover frame connection plate 701 and is located on a radial inner side of the top cover frame side plate 702. The top cover frame connection rib 703 extends in the peripheral direction of the top cover frame connection plate 701 to form an annular shape. Therefore, by providing the top cover frame connection rib 703, the structural strength of the top cover frame 70 can be enhanced.

In some embodiments, as illustrated in FIG. 45, FIG. 46, and FIG. 48, the top cover frame connection rib 703 includes a top cover frame connection rib body 7031 and a top cover frame connection portion 7032. Each of the top cover frame connection rib body 7031 and the top cover frame connection portion 7032 extend in the peripheral direction of the top cover frame connection plate 701 to form an annular shape. The top cover frame connection portion 7032 is connected between the top cover frame connection rib body 7031 and the top cover frame connection plate 701.

In some embodiments, as illustrated in FIG. 53, in the top cover frame mold 7, the top cover frame mold cavity includes an annular top cover frame connection rib mold cavity 713. The top cover frame connection rib mold cavity 713 is located on a side wall surface of the top cover frame connection plate mold cavity 711 in the thickness direction of the top cover frame connection plate mold cavity 711, and is in communication with the top cover frame connection plate mold cavity 711. The top cover frame connection rib mold cavity 713 extends in the peripheral direction of the top cover frame connection plate mold cavity 711 to form an annular shape. The top cover frame connection rib mold cavity 713 includes a top cover frame connection rib body mold cavity 7131 and a top cover frame connection portion mold cavity 7132 that are in communication with each other. Each of the top cover frame connection rib body mold cavity 7131 and the top cover frame connection portion mold cavity 7132 extend in the peripheral direction of the top cover frame connection plate mold cavity 711 to form an annular shape. The top cover frame connection portion mold cavity 7132 is communicated between the top cover frame connection rib body mold cavity 7131 and the top cover frame connection plate mold cavity 711.

Optionally, a thickness of the top cover frame connection portion 7032 is smaller than a thickness of an end of the top cover frame connection rib body 7031 connected to the top cover frame connection portion 7032. In the top cover frame mold 7, a thickness of the top cover frame connection portion mold cavity 7132 is smaller than a thickness of an end, in communication with the top cover frame connection portion mold cavity 7132, of the top cover frame connection rib body mold cavity 7131.

Alternatively, a part of a surface of the top cover frame connection portion 7032 facing towards the top cover frame connection plate 701 is recessed away from the top cover frame connection plate 701 to form a top cover frame through hole. The top cover frame through hole penetrates the top cover frame connection portion 7032 in a thickness direction of the top cover frame connection portion 7032. Correspondingly, in the top cover frame mold 7, a top cover frame post structure is disposed at the top cover frame connection portion mold cavity 7132. The top cover frame post structure is configured to shape the top cover frame through hole, and extends across the top cover frame connection portion mold cavity 7132 in the thickness direction of the top cover frame connection portion mold cavity 7132.

In some embodiments, during the injection molding, since a wall surface of the top cover frame connection rib mold cavity 713 has no gate, when the material flows in the top cover frame mold cavity, the material first flows through the top cover frame connection plate mold cavity 711, and then flows to the top cover frame connection rib mold cavity 713 through the top cover frame connection plate mold cavity 711. Moreover, the material in the top cover frame connection plate mold cavity 711 flows in the peripheral direction of the top cover frame connection plate mold cavity 711, and the top cover frame connection rib mold cavity 713 extends in the peripheral direction of the top cover frame connection plate mold cavity 711 to form an annular shape. As a result, the flow direction of the material is substantially same as the peripheral direction of the top cover frame connection plate mold cavity 711. Therefore, in a case where the material enters the top cover frame connection rib mold cavity 713 without filling the top cover frame connection rib mold cavity 713, the material flows back to the top cover frame connection plate mold cavity 711 from the top cover frame connection rib mold cavity 713, and the material in other positions on the top cover frame connection plate mold cavity 711 may enter the top cover frame connection rib mold cavity 713 again, and then flow back. In other words, when the material flows in a peripheral direction of the top cover frame connection rib mold cavity 713, the material may flow back to the top cover frame connection plate mold cavity 711 from the top cover frame connection rib mold cavity 713 several times, which may cause the solidification layer at the position where the top cover frame connection rib mold cavity 713 is in communication with the top cover frame connection plate mold cavity 711 to be seriously damaged, which in turn results in serious flow liners at the connection between the top cover frame connection plate 701 and the top cover frame connection rib 703. In the present disclosure, the thickness of the top cover frame connection portion mold cavity 7132 is smaller than the thickness of the top cover frame connection rib body mold cavity 7131, or the surface of the top cover frame connection portion 7032 facing towards the top cover frame connection plate 701 is partially recessed away from the top cover frame connection plate 701 to form the through hole of the top cover frame 70, and the through hole of the top cover frame 70 penetrates the top cover frame connection portion 7032 in the thickness direction of the top cover frame connection portion 7032. In this way, it is possible to at least prevent unstable flow field from being formed at the position where the top cover frame connection rib mold cavity 713 is in communication with the top plate mold cavity of the top cover frame 70 to some extent, to at least avoid the material converging due to the backflow of the material in the top cover frame connection rib body mold cavity 7131 to the top cover frame 70 top plate mold cavity through top cover frame connection portion mold cavity 71322 to some extent, thereby preventing the flow liners from being generated at the connection between the top cover frame connection plate 701 and the top cover frame connection rib 703.

In some examples, a wall thickness of the top cover frame connection portion 7032 ranges from 0.3 to 0.5 mm. A height of the top cover frame connection rib 703 ranges from 3.5 to 5 mm. In this way, the structural strength is ensured.

In some embodiments of the present disclosure, the top cover frame 70 includes a plurality of top cover frame reinforcing ribs 704. The plurality of top cover frame reinforcing ribs 704 is arranged at intervals in the peripheral direction of the top cover frame connection plate 701. Each of the plurality of top cover frame reinforcing ribs 704 is connected to the bottom wall of the top cover frame connection plate 701, and is connected between the inner peripheral wall of the top cover frame side plate 702 and the outer peripheral wall of the top cover frame connecting rib 703. Therefore, the structural strength of the top cover frame 70 can be enhanced.

In some embodiments of the present disclosure, the top cover frame reinforcing rib 704 has a wall thickness of 0.7 mm, which can ensure the structural strength.

A laundry treating device according to some embodiments of the present disclosure includes the top cover frame 70 as described above.

With the laundry treating device according to some embodiments of the present disclosure, by providing the top cover frame 70, it is possible to at least reduce the flow liners at the top cover frame 70 to some extent, to at least prevent the flow liners from being generated on the appearance surface of the top cover frame 70 to some extent. Therefore, it is possible to at least improve the qualified rate of the top cover to some extent, thereby lowering the cost and satisfying the user's usage demands.

In the description of this specification, descriptions with reference to the terms "an embodiment", "some embodiments", "schematic embodiments", "examples", "specific examples", or "some examples", etc. mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although the embodiments of the present disclosure are illustrated and described above, it can be understood by those of ordinary skill in the art that various changes, modifications, substitutions, and alterations may be made to these embodiments without departing from the principles and spirit of the present disclosure. The scope of the present disclosure is defined by the claims and their equivalents.

## Claims

1. An appearance part, wherein the appearance part is an integral injection-molding piece, the appearance part comprising: an appearance plate, a part of a surface of the appearance plate being an appearance surface, and the remaining part of the surface of the appearance plate being a non-appearance surface; and a connection rib disposed on the non-appearance surface of the appearance plate, the connection rib comprising a connection rib body and a connection portion, the connection portion being connected between the connection rib body and the non-appearance surface, wherein: a thickness of the connection portion is smaller than a thickness of an end of the connection rib body connected to the connection portion; and/or a part of the connection portion facing towards the non-appearance surface is recessed away from the non-appearance surface to form a through hole, the through hole penetrating the connection portion in a thickness direction of the connection portion.

2. The appearance part according to claim 1, wherein the thickness of the connection portion is smaller than a minimum thickness of the connection rib body.

3. The appearance part according to claim 1 or 2, wherein the thickness of the connection portion ranges from 0.3 mm to 0.5 mm.

**4.** The appearance part according to any one of claims 1 to 3, wherein a thickness of the appearance plate ranges from 1.5 mm to 3.5 mm.

**5.** The appearance part according to any one of claims 1 to 4, wherein a plurality of connection ribs is provided, the plurality of connection ribs being arranged at intervals.

**6.** The appearance part according to any one of claims 1 to 5, wherein the appearance plate has a gate forming region adapted to correspond to a gate of a mold.

**7.** The appearance part according to any one of claims 1 to 6, wherein the appearance part is a spray-free piece comprising a resin matrix and metal particles distributed in the resin matrix.

**8.** The appearance part according to claim 7, wherein the metal particles are aluminum, silver, or copper.

**9.** A household appliance, comprising the appearance part according to any one of claims 1 to 7.

**10.** A mold, comprising a mold core having a mold cavity, the mold cavity comprising: an appearance plate mold cavity one of wall surfaces of the appearance plate mold cavity being configured to shape an appearance surface of an appearance plate, and the remaining wall surfaces of the appearance plate mold cavity being configured to shape a non-appearance surface of the appearance plate; and a connection rib mold cavity located at the remaining wall surfaces of the appearance plate mold cavity and being in communication with the appearance plate mold cavity, the connection rib mold cavity comprising a connection rib body mold cavity and a connection portion mold cavity that are in communication with each other, the connection portion mold cavity being connected between the connection rib body mold cavity and the remaining wall surfaces of the appearance plate mold cavity, wherein: a thickness of the connection portion mold cavity is smaller than a thickness of an end, in communication with the connection portion mold cavity, of the connection rib body mold cavity in communication with the connection portion mold cavity; and/or a post structure is provided at the connection portion mold cavity, the post structure being configured to shape a through hole and extending across the connection portion mold cavity in a thickness direction of the connection portion mold cavity.

**11.** The mold according to claim 10, wherein the thickness of the connection portion mold cavity is smaller than a minimum thickness of the connection rib body mold cavity.

**12.** The mold according to claim 10 or 11, wherein the thickness of the connection portion mold cavity ranges from 0.3 mm to 0.5 mm.

**13.** The mold according to any one of claims 10 to 12, wherein a thickness of the appearance plate mold cavity ranges from 1.5 mm to 3.5 mm.

**14.** The mold according to any one of claims 10 to 13, wherein a plurality of connection rib mold cavities is provided, the plurality of connection rib mold cavities being arranged at intervals.

**15.** The mold according to any one of claims 10 to 14, wherein the mold core has a gate located at the appearance plate mold cavity.

1012
10
3B
A
A
1012
1012
101
103
1B
2B
B
1021
102
1022

FIG. 1

1B
1011

FIG. 1a

2B
1011

FIG. 1b

3B
1011

FIG. 1c

A-A
104
103
1042
1041
Thickness A1
101
102
Width A1
Thickness A2

FIG. 2

B
1012a
1011a

FIG. 3

10
C
C

FIG. 4

C-C
E
101
103
1042
1041
102

FIG. 5

E
102

FIG. 6

F
F
1
11
G
G
CO-SD-1

FIG. 7

F-F
112
111
H
113
114
11

FIG. 8

H

1111
111
1121(112)
Width A2

FIG. 9

G-G
111
112
114
113
M

FIG. 10

M
1141
1142

FIG. 11

FIG. 12

FIG. 13

FIG. 14

FIG. 15

FIG. 16

β
L2
20
L1
203
204
204
2031
E
D
204

FIG. 17

204
D
I
I

FIG. 18

I-I
2041
2042
Thickness B2
Thickness B1

FIG. 19

2
21
J
K
J
K

FIG. 20

214
K-K
21
2142
2141
213

FIG. 21

J-J

214
213

FIG. 22

2031
204
203
2031
204
204

FIG. 23

203
204
204

FIG. 24

505
50
5032
5033
5031
503
5011
501
502

FIG. 25

50
5033
505
5032
A1
A1
501
A3
502

FIG. 26

A1-A1
A2
5033
5032
5031

FIG. 27

A2
5033
5031
5032

FIG. 28

A3
5011
502
501
5011
5011

FIG. 29

50
5033
5032
501
5011
A4
A4

FIG. 30

A4 A4
5033
5031
5032
Thickness D1
A5
Width D1

FIG. 31

A5
5023

FIG. 32

502
501
A6
504
502
A7
504
5031
5032

FIG. 33

A6
504
50421

FIG. 34

504
A7
Thickness D2
50421

FIG. 35

A18
5033
A13
A15
A11
A11
5031
A12
5032
A14
TB90-6200DQCG-ABS
A16
A17
501
502

FIG. 35a

A12
50321

FIG. 35b

A13
50321

FIG. 35c

A14
50321

FIG. 35d

A15
50321

FIG. 35e

A16
50321

FIG. 35f

A17
5024
5021

FIG. 35g

A18
50311

FIG. 35h

A11-A11
A20
A19
5032

FIG. 35i

A19
50321

FIG. 35j

A20
50311

FIG. 35k

5
A10
A8
A8
A9
A9
A10

FIG. 36

A8-A8
512
511
51

FIG. 37

A9-A9
513
5132
5133
5131
514

FIG. 38

A10-A10
512
A11
511
5132
5133
5131

FIG. 39

5121
A11

FIG. 40

70
703
701
702

FIG. 41

70
704
703
702
701

FIG. 42

B1
701
B2
B2
B1

FIG. 43

B3
B1-B1
B4
701

FIG. 44

704
702
B3
703
7031
7032
701

FIG. 45

B4
7031
7032
7021

FIG. 46

B2-B2

B5
703

FIG. 47

B5
7022
7031
703
7032
701

FIG. 48

B11
B13
B15
B13

FIG. 48a

B15
7023

FIG. 48b

B11
7023

FIG. 48c

B13-B13

B14

FIG. 48d

B14
7023

FIG. 48e

B10
7
71
B7
B7
B10

FIG. 49

71
B7-B7
B8

FIG. 50

71
B8
7111
7121
711
713

FIG. 51

B10-B10
B9
71

FIG. 52

B9
7122（712）
711
7131
713
7132

FIG. 53

## INTERNATIONAL SEARCH REPORT

International application No. **PCT/CN2021/070152**

**A. CLASSIFICATION OF SUBJECT MATTER**

D06F 34/28(2020.01)i

According to International Patent Classification (IPC) or to both national classification and IPC

**B. FIELDS SEARCHED**

Minimum documentation searched (classification system followed by classification symbols)

D06F;B29C;H05K;G09F

Documentation searched other than minimum documentation to the extent that such documents are included in the fields searched

Electronic data base consulted during the international search (name of data base and, where practicable, search terms used)

CNPAT, WPI, EPODOC, CNKI: 外观板, 外观面, 连接筋, 连接肋, 肋板, 筋板, 厚度, 壁厚, 注塑, 一体, 模具, 模仁, 型腔, plate, surface, rib, connect+, thick+, wall, inject+, mold+, chamber

**C. DOCUMENTS CONSIDERED TO BE RELEVANT**

| Category* | Citation of document, with indication, where appropriate, of the relevant passages | Relevant to claim No. |
|---|---|---|
| E | CN 112430978 A (WUXI LITTLE SWAN ELECTRICAL APPLIANCE CO., LTD.) 02 March 2021 (2021-03-02)<br>description 67, paragraphs 126 to 135, figures 1-16 | 1, 2, 4-11, 13-15 |
| E | CN 112522913 A (WUXI LITTLE SWAN ELECTRICAL APPLIANCE CO., LTD.) 19 March 2021 (2021-03-19)<br>description paragraph 57, paragraphs 164-173, figures 1-16 | 1, 2, 4-11, 13-15 |
| E | CN 112522921 A (WUXI LITTLE SWAN ELECTRICAL APPLIANCE CO., LTD.) 19 March 2021 (2021-03-19)<br>description, paragraphs 267 to 405, figures 26-46 | 1-15 |
| E | CN 112553834 A (WUXI LITTLE SWAN ELECTRICAL APPLIANCE CO., LTD.) 26 March 2021 (2021-03-26)<br>description, paragraphs 44-80, figures 1-8 | 1-15 |
| E | CN 112626798 A (WUXI LITTLE SWAN ELECTRICAL APPLIANCE CO., LTD.) 09 April 2021 (2021-04-09)<br>description, paragraphs 99-364, figures 1-42 | 1, 2, 4-11, 13-15 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **05 August 2021** | **26 August 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT

International application No.
PCT/CN2021/070152

C. DOCUMENTS CONSIDERED TO BE RELEVANT

| Category* | Citation of document, with indication, where appropriate, of the relevant passages | Relevant to claim No. |
|---|---|---|
| X | CN 205623012 U (HEFEI HUIKE JINYANG TECHNOLOGY CO., LTD.) 05 October 2016 (2016-10-05) description paragraphs 21 to 34, figure 1 | 1-9 |
| Y | CN 205623012 U (HEFEI HUIKE JINYANG TECHNOLOGY CO., LTD.) 05 October 2016 (2016-10-05) description paragraphs 21 to 34, figure 1 | 10-15 |
| Y | CN 202572837 U (SHENGMEI PRECISION INDUSTRIAL (KUNSHAN) CO,. LTD.) 05 December 2012 (2012-12-05) description paragraphs 5 to 12, figure 1 | 10-15 |
| A | CN 204931385 U (SHANGHAI CHUNMI ELECTRONIC TECHNOLOGY CO., LTD. et al.) 06 January 2016 (2016-01-06) entire document | 1-15 |
| A | CN 107355731 A (NINGBO XINTAI MACHINERY CO., LTD.) 17 November 2017 (2017-11-17) entire document | 1-15 |
| A | US 2005077427 A1 (FRAUNHOFER GES. FORSCHUNG) 14 April 2005 (2005-04-14) entire document | 1-15 |

Form PCT/ISA/210 (second sheet) (January 2015)

**INTERNATIONAL SEARCH REPORT**
**Information on patent family members**

International application No.
**PCT/CN2021/070152**

| Patent document cited in search report | | | Publication date (day/month/year) | Patent family member(s) | | | Publication date (day/month/year) |
|---|---|---|---|---|---|---|---|
| CN | 112430978 | A | 02 March 2021 | None | | | |
| CN | 112522913 | A | 19 March 2021 | None | | | |
| CN | 112522921 | A | 19 March 2021 | None | | | |
| CN | 112553834 | A | 26 March 2021 | None | | | |
| CN | 112626798 | A | 09 April 2021 | None | | | |
| CN | 205623012 | U | 05 October 2016 | None | | | |
| CN | 202572837 | U | 05 December 2012 | None | | | |
| CN | 204931385 | U | 06 January 2016 | None | | | |
| CN | 107355731 | A | 17 November 2017 | None | | | |
| US | 2005077427 | A1 | 14 April 2005 | EP | 1439121 | B1 | 25 October 2006 |
| | | | | DE | 10301445 | A1 | 05 August 2004 |
| | | | | ES | 2274326 | T3 | 16 May 2007 |
| | | | | DE | 10301445 | B4 | 17 November 2005 |
| | | | | AT | 343515 | T | 15 November 2006 |
| | | | | CA | 2455791 | A1 | 16 July 2004 |
| | | | | CA | 2455791 | C | 24 April 2012 |
| | | | | EP | 1439121 | A1 | 21 July 2004 |
| | | | | US | 7494092 | B2 | 24 February 2009 |
| | | | | US | 2008296433 | A1 | 04 December 2008 |
| | | | | JP | 2004217208 | A | 05 August 2004 |
| | | | | DE | 502004001829 | D1 | 07 December 2006 |
| | | | | JP | 4978821 | B2 | 18 July 2012 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202022843448
- CN 202011381067